(19) Europäisches Patentamt
European Patent Office
Office européen des brevets

(11) EP 0 450 237 B1

(12) EUROPEAN PATENT SPECIFICATION

(45) Date of publication and mention of the grant of the patent:
**05.03.1997 Bulletin 1997/10**

(51) Int Cl.[6]: **G11B 11/10**

(21) Application number: **90314469.9**

(22) Date of filing: **31.12.1990**

# (54) Overwrite capable magneto-optic recording medium with small exchange coupling force

Überschreibbares magnetooptisches Aufzeichnungsmedium mit kleiner Kopplungskraft

Support d'enregistrement magnétooptique surinscriptible à faible force de couplage d'échange

(84) Designated Contracting States:
**DE FR GB IT**

(30) Priority: **10.01.1990 JP 3221/90**

(43) Date of publication of application:
**09.10.1991 Bulletin 1991/41**

(73) Proprietor: **NIKON CORPORATION**
**Tokyo (JP)**

(72) Inventor: **Sato, Masatoshi**
**Machida-shi, Tokyo (JP)**

(74) Representative: **Burke, Steven David et al**
**R.G.C. Jenkins & Co.**
**26 Caxton Street**
**London SW1H 0RJ (GB)**

(56) References cited:
**EP-A- 0 282 356**
**EP-A- 0 333 467**
**DE-A- 3 619 618**

- **F. A. Cotton and G. Wilkinson: "ADVANCED INORGANIC CHEMISTRY", Interscience Publishers, 1972, p.1065.**
- **CRC Handbook of Chemistry and Physics, 73rd edition, CRC Press, 1992, p.4-118.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 450 237 B1

Printed by Jouve, 75001 PARIS (FR)

## Description

BACKGROUND OF THE INVENTION:

### Field of the Invention

The present invention relates to an over-write capable magnetooptical recording medium having small $\sigma_w$ (exchange coupling force).

### Related Background Art

In recent years, many efforts have been made to develop an optical recording/reproduction method which can satisfy various requirements including high density, large capacity, high access speed, and high recording/reproduction speed, and a recording apparatus, a reproduction apparatus, and a recording medium used therefor.

Of various optical recording/reproduction methods, the magnetooptical recording/reproduction method is most attractive due to its unique advantages in that information can be erased after it is recorded, and new information can be repetitively recorded.

A recording medium used in the magnetooptical recording/reproduction method has a perpendicular magnetic layer or layers as a recording layer. The magnetic layer comprises, for example, amorphous GdFe GdCo, GdFeCo, TbFe, TbCo, TbFeCo, and the like. Concentrical or spiral tracks are normally formed on the recording layer, and data is recorded on the tracks. In this specification, one of the "upward" and "downward" directions of the magnetization with respect to a film surface is defined as an "A direction", and the other one is defined as a "non-A direction". Data to be recorded is binarized in advance, and is recorded by two signals, i.e., a bit ($B_1$) having an "A-directed" magnetization, and a bit ($B_0$) having a "non-A-directed" magnetization. These bits $B_1$ and $B_0$ correspond to "1" and "0" levels of a digital signal. However, in general, the direction of magnetization of the recording tracks can be aligned in the "non-A direction" by applying a strong bias field. This processing is called "initialization". Thereafter, a bit ($B_1$) having an "A-directed" magnetization is formed on the tracks. Data is recorded in accordance with the presence/absence and/or a bit length of the bit ($B_1$). Note that a bit is called a "mark" recently.

### Principle of Bit Formation:

In the bit formation, a characteristic feature of laser, i.e., excellent coherence in space and time, is effectively used to focus a beam into a spot as small as the diffraction limit determined by the wavelength of the laser light. The focused light is radiated onto the track surface to write data by producing bits less than 1 µm in diameter on the recording layer. In the optical recording, a recording density up to $10^8$ bit/cm$^2$ can be theoretically attained, since a laser beam can be concentrated into a spot with a size as small as its wavelength.

As shown in Fig. 1, in the magnetooptical recording, a laser beam (L) is focused onto a recording layer (1) to heat it, while a bias field (Hb) is externally applied to the heated portion in the direction opposite to the initialized direction. A coercivity Hc of the locally heated portion is decreased below the bias field (Hb). As a result, the direction of magnetization of that portion is aligned in the direction of the bias field (Hb). In this way, reversely magnetized bits are formed.

Ferromagnetic and ferrimagnetic materials differ in the temperature dependencies of the magnetization and Hc. Ferromagnetic materials have Hc which decreases around the Curie temperature and allow data recording based on this phenomenon. Thus, data recording in ferromagnetic materials is referred to as Tc recording (Curie temperature recording).

On the other hand, ferrimagnetic materials have a compensation temperature, below the Curie temperature, at which magnetization (M) becomes zero. The Hc abruptly increases around this temperature and hence abruptly decreases outside this temperature. The decreased Hc is canceled by a relatively weak bias field (Hb). Namely, recording is enabled. This process is called $T_{comp.}$ recording (compensation point recording).

In this case, however, there is no need to adhere to the Curie point or temperatures therearound, and the compensation temperature. In other words, if a bias field (Hb) capable of canceling a decreased Hc is applied to a magnetic material having the decreased Hc at a predetermined temperature higher than a room temperature, recording is enabled.

### Principle of Reproduction:

Fig. 2 illustrates the principle of data reproduction based on the magnetooptical effect. Light is an electromagnetic wave with an electromagnetic-field vector normally emanating in all directions in a plane perpendicular to the light path. When light is converted to linearly polarized beams ($L_p$) and radiated onto a recording layer (1), it is reflected by its surface or passes through the recording layer (1). At this time, the plane of polarization rotates according to the direction of magnetization (M). This phenomenon is called the magnetic Kerr effect or magnetic Faraday effect.

For example, if the plane of polarization of the reflected light rotates through $\theta_k$ degrees for the "A-directed" magnetization, it rotates through $-\theta_k$ degrees for the "non-A-directed" magnetization. Therefore, when the axis of an optical analyzer (polarizer) is set perpendicular to the plane inclined at $-\theta_k$, the light reflected by "non-A-direction" magnetized bit ($B_0$) cannot pass through the analyzer. On the contrary, a product of $(\sin 2\theta_k)^2$ and the light reflected by a bit ($B_1$) magnetized along the "A direction" passes through the analyzer and becomes incident on a detector (photoelectric conversion means). As a result, the bit ($B_1$) magnetized along the "A direction" looks brighter than the bit ($B_0$) magnetized along the "non-A direction", and the detector produces a stronger electrical signal for the bit ($B_1$). The electrical signal from the detector is modulated in accordance with the recorded data, thus reproducing the data.

It is conventionally difficult to find out one magnetic material which has a low Curie temperature, allows easy recording, has a high coercivity and high preservation stability, has large $\theta_k$, and a high C/N ratio during reproduction (reading). For this reason, a multilayered magnetooptical recording medium in which necessary functions are separated, and two different magnetic material layers are stacked is proposed (Japanese Laid-Open Patent Application No. 57-78652). This recording medium comprises a two-layered film including a high-coercivity perpendicular magnetic layer having a low Curie temperature, and a low-coercivity perpendicular magnetic layer having a high Curie temperature. The high- and low-coercivity layers are exchange-coupled to each other. For this reason, the high-coercivity layer performs data recording and preservation, and recorded data is transferred to the low-coercivity layer. Thus, the low-coercivity layer having the high Curie temperature and large $\theta_K$ performs data reading.

Japanese Laid-Open Patent Application No. 57-78652 discloses a two-layered recording medium which employs a Tb-Fe amorphous alloy as the high-coercivity layer, and a Gd-Fe amorphous alloy as the low-coercivity layer as only one embodiment.

Reference is also made to EP-A-0333467, which describes an optical recording medium which comprises a first magnetic layer vertically magnetisable comprising a rare earth-iron group amorphous alloy, and a second magnetic layer having lower coercive force than the first magnetic-layer comprising a rare earth-iron group amorphous alloy containing light rare earth, the second magnetic layer being exchange bonded to the first magnetic layer.

A multilayered magnetooptical recording medium which comprises a first layer serving as a recording layer and a second layer serving as a reference layer, and can perform an over-write operation by only optical modulation utilizing exchange coupling between the two layers and differences between their Curie temperatures and coercivities was invented, and filed as a patent application (Japanese Laid-Open Patent Application No. 62-175948). Reference is also made to DE-A-3619618. This invention will be quoted as a "basic Invention" hereinafter.

In any case, the multilayered magnetooptical recording medium requires an exchange coupling force $\sigma_w$ (called an interface wall energy in the basic invention) between magnetic layers.

[Description of Basic Invention]

One of characteristic features of the basic invention is to use a magnetooptical recording medium comprising a multilayered perpendicular magnetic film having at least a two-layered structure including a recording layer (first layer) and a reference layer (second layer). Data is recorded in the first layer (in some cases, also in the second layer) by a bit having an "A-directed" magnetization, and a bit having a "non-A-directed" magnetization.

An over-write method according to the basic invention comprises:

(a) moving a recording medium;
(b) applying an initial field Hini. to align a direction of magnetization of only the second layer in the "A direction" while the direction of magnetization of the first layer is left unchanged before recording;
(c) radiating a laser beam on the medium;
(d) pulse-modulating the beam intensity in accordance with two-valued data to be recorded;
(e) applying a bias field to the radiated portion when the beam is radiated; and
(f) forming one of a bit having the ""A-directed" magnetization and a bit having the "non-A-directed" magnetization when the intensity of the pulse-modulated beam is at high level, and forming the other bit when the beam intensity is at low level.

When recording is performed, the basic invention employs, for example, an over-write capable magnetooptical recording apparatus comprising:

(a) means for moving a magnetooptical recording medium;
(b) initial field Hini. apply means;
(c) a laser beam source;

(d) means for pulse-modulating a beam intensity in accordance with two-valued data to be recorded to obtain

(1) high level that provides, to the medium, a temperature suitable for forming one of a bit having an "A-directed" magnetization and a bit having a "non-A-directed" magnetization,
and to obtain
(2) low level that provides, to the medium, a temperature suitable for forming the other bit; and

(e) bias field apply means which can be commonly used as the initial field apply means.

In the basic invention, a laser beam is pulse-modulated according to data to be recorded. However, this procedure itself has been performed in the conventional magnetooptical recording method, and a means for pulse-modulating the beam intensity on the basis of two-valued data to be recorded is a known means. For example, see "THE BELL SYSTEM TECHNICAL JOURNAL, Vol. 62 (1983), pp. 1923 - 1936 for further details. Therefore, the modulating means is available by partially modifying the conventional beam modulating means if required high and low levels of the beam intensity are given. Such a modification would be easy for those who are skilled in the art if high and low levels of the beam intensity are given.

Another characteristic feature of the basic invention lies in high and low levels of the beam intensity. More specifically, when the beam intensity is at high level, "A-directed" magnetization of a reference layer (second layer) is reversed to the "non-A direction" by means of a bias field (Hb), and a bit having the "non-A-directed" [or "A-directed"] magnetization is thus formed in a recording layer (first layer) by means of the "non-A-directed" magnetization of the second layer. When the beam intensity is at low level, a bit having the "A-directed" [or "non-A-directed"] magnetization is formed in the first layer by means of the "A-directed" magnetization of the second layer.

In this specification, if expressions <u>ooo [or ΔΔΔ]</u> appear, ooo outside the parentheses in the first expression corresponds to ooo in the subsequent expressions <u>ooo [or ΔΔΔ]</u>, and vice versa.

As is well known, even if recording is not performed, a laser beam is often turned on at very low level* in order to, for example, access a predetermined recording position on the medium. When the laser beam is also used for reproduction, the laser beam is often turned on at an intensity of the very low level*. In this invention, the intensity of the laser beam may be set at this very low level*. However, low level for forming a bit is higher than the very low level*. Therefore, the output waveform of the laser beam of the basic invention is as shown in Fig. 3A.

Although not described in the specification of the basic invention, a recording beam need not always be a single beam but may be two proximity beams in the basic invention. More specifically, a first beam may be used as a low-level laser beam (erasing beam) which is not modulated in principle, and a second beam may be used as a high-level laser beam (writing beam) which is modulated in accordance with data. In this case, the second beam is pulse-modulated between high level and base level (equal to or lower than low level, and its output may be zero). In this case, an output waveform is as shown in Fig. 3B.

A medium used in the basic invention is roughly classified into a first or second category. In either category, a recording medium has a multilayered structure including a recording layer (first layer) and a reference layer (second layer), as shown in Fig. 4A.

The first layer is the recording layer, which exhibits a high coercivity at a room temperature, and has a low magnetization reversing temperature. The second layer is the reference layer, which exhibits a relatively lower coercivity at a room temperature and has a higher magnetization reversing temperature than those of the first layer. Note that each of the first and second layers may comprise a multilayered structure. If necessary, a third layer may be interposed between the first and second layers. In addition, a clear boundary between the first and second layers need not be formed, and one layer can be gradually converted into the other layer.

In the first category, when the coercivity of the recording layer (first layer) is represented by $H_{C1}$; that of the reference layer (second layer), $H_{C2}$; a Curie temperature of the first layer, $T_{C1}$; that of the second layer, $T_{C2}$; a room temperature, $T_R$; a temperature of the recording medium obtained when a low-level laser beam is radiated, $T_L$; that obtained when a high-level laser beam is radiated, $T_H$; a coupling field applied to the first layer, $H_{D1}$; and a coupling field applied to the second layer, $H_{D2}$, the recording medium satisfies Formula 1 below, and satisfies Formulas 2 to 5 at the room temperature:

$$T_R < T_{C1} \approx T_L < T_{C2} \approx T_H \qquad \text{Formula 1}$$

$$H_{C1} > H_{C2} + |H_{D1} \mp H_{D2}| \qquad \text{Formula 2}$$

$$H_{C1} > H_{D1} \quad \text{Formula 3}$$

$$H_{C2} > H_{D2} \quad \text{Formula 4}$$

$$H_{C2} + H_{D2} < |Hini.| < H_{C1} \pm H_{D1} \quad \text{Formula 5}$$

In the above formulas, symbol "≈" means "equal to" or "substantially equal to (±20°C)". In addition, of double signs ± and ∓, the upper sign corresponds to an A (antiparallel) type medium, and the lower sign corresponds to a P (parallel) type medium (these media will be described later). Note that a ferromagnetic medium belongs to a P type.

The relationship between a coercivity and a temperature is as shown in the graph of Fig. 5. A thin curve represents the characteristics of the first layer, and a bold curve represents those of the second layer.

Therefore, when an initial field (Hini.) is applied to this recording medium at the room temperature, the direction of magnetization of only the reference layer (second layer) is reversed without reversing that of the recording layer (first layer) according to Formula 5. When the initial field (Hini.) is applied to the medium before recording, only the second layer can be magnetized in the "A direction" (in the drawings, the "A direction" is indicated by an upward arrow ⇑, and the "non-A direction" is indicated by a downward arrow ⇓ for the sake of simplicity). If the initial field Hini. becomes zero, the direction of magnetization ⇑ of the second layer can be left unchanged without being re-reversed according to Formula 4.

Fig. 4B schematically shows a state wherein only the second layer is magnetized in the "A direction" ⇑ immediately before recording.

The direction of magnetization * in the first layer represents previously recorded data. In the following description, since the direction of magnetization of the first layer can be disregarded, it is indicated by X (CONDITION 1 in Fig. 6).

A change in direction of magnetization of the medium when a high-level laser beam is radiated on the medium in this state will be described below with reference to Fig. 6. When a high-level laser beam is radiated to increase a medium temperature to $T_H$, since $T_H$ is higher than the Curie temperature $T_{C1}$, the magnetization of the recording layer (first layer) disappears. In addition, since $T_H$ is near the Curie temperature $T_{C2}$, the magnetization of the reference layer (second layer) also disappears completely or almost completely. The bias field (Hb) in the "A direction" or "non-A direction" is applied to the medium in accordance with a type of medium. The bias field (Hb) can be a stray field from the medium itself. For the sake of simplicity, assume that the bias field (Hb) in the "non-A direction" is applied to the medium. Since the medium is moving, a given irradiated portion is immediately separated apart from the laser beam, and is cooled. When the medium temperature is decreased under the presence of Hb, the direction of magnetization of the second layer is reversed to the "non-A direction" based on Hb (CONDITION $2_H$).

When the medium is further cooled and the medium temperature is decreased slightly below $T_{C1}$, magnetization of the first layer appears again. In this case, the direction of magnetization of the first layer is influenced by that of the second layer due to a magnetic coupling (exchange coupling) force. As a result, magnetization ⇓ (the P type medium) or ⇑ (the A type medium) is formed according to the type of medium (CONDITION $3_H$).

A change in condition caused by the high-level laser beam is called a high-temperature cycle herein.

A change in direction of magnetization of the medium when a low-level laser beam is radiated on the medium in CONDITION 1 described above will be described below with reference to Fig. 7.

A low-level laser beam is radiated to increase the medium temperature to $T_L$. Since $T_L$ is near the Curie temperature $T_{C1}$, the magnetization of the first layer disappears completely or almost completely. However, since $T_L$ is lower than the Curie temperature $T_{C2}$, the magnetization of the second layer does not disappear (CONDITION $2_L$). In CONDITION $2_L$, although the bias field (Hb) is unnecessary, it cannot be turned on or off at high speed (within a short period of time). Therefore, the bias field (Hb) in the high-temperature cycle is left applied inevitably.

However, since the $H_{C2}$ is kept high, the magnetization of the second layer will not be reversed by Hb. Since the medium is moving, a given irradiated portion is immediately separated apart from the laser beam, and is cooled. As cooling progresses, the magnetization of the first layer appears again. The direction of magnetization appearing in this case is influenced by that of the second layer due to the magnetic coupling force. As a result, ⇑ (P type) or ⇓ (A type) magnetization appears according to the type of medium (CONDITION $3_L$).

A change in condition caused by the low-level laser beam is called a low-temperature cycle herein.

As described above, bits having either magnetization ⇑ or ⇓, which are opposite to each other, are formed in the high- and low-temperature cycles regardless of the direction of magnetization of the first layer. More specifically, an over-write operation is enabled by pulse-modulating the laser beam between high level (high-temperature cycle) and low level (low-temperature cycle) in accordance with data to be recorded.

Figs. 8 and 9 show changes in direction of magnetization of P and A type media in the low- and high-temperature cycles, respectively. In Figs. 8 and 9, last states in the respective cycles represent those at the room temperature.

In the above description, both the first and second layers have no compensation temperature $T_{comp.}$ between the room temperature and the Curie temperature. However, when the compensation temperature $T_{comp.}$ is present, if the medium temperature exceeds it, (1) the direction of magnetization is reversed, and (2) A and P types are reversed. For these reasons, a description must be complicated accordingly. In this case, the direction of the bias field is opposite to the direction ↓ in the above description at the room temperature.

A recording medium normally has a disk shape, and is rotated during recording. For this reason, a recorded portion (bit) is influenced again by the initial field Hini. during one revolution. As a result, the direction of magnetization of the reference layer (second layer) is aligned in the original "A direction" ⇑. However, at the room temperature, the magnetization of the second layer can no longer influence that of the recording layer (first layer), and the recorded data can be held.

If linearly polarized light is radiated on the first layer, since light reflected thereby includes data, the data can be reproduced as in the conventional magnetooptical recording medium. Note that a method of transferring data in the first layer to the second layer aligned in the original "A direction" ⇑ by applying a reproduction field $H_R$ before reproduction or a method of naturally transferring data in the first layer to the second layer as soon as the influence of Hini. disappears without applying the reproduction field $H_R$ is also available depending on composition designs of the first and second layers. In this case, data may be reproduced from the second layer.

A perpendicular magnetic film constituting each of the recording layer (first layer) and the reference layer (second layer) is selected from the group consisting of (1) ferromagnetic and ferrimagnetic materials having no compensation temperature and having a Curie temperature, and (2) an amorphous or crystalline ferrimagnetic material having both the compensation temperature and the Curie temperature.

The first category which utilizes the Curie temperature as the magnetization reversing temperature has been described. In contrast to this, the second category utilizes decreased $H_C$ at a predetermined temperature higher than the room temperature. In a medium of the second category, substantially the same description as the first category can be applied except that a temperature $T_{S1}$ at which the recording layer (first layer) is magnetically coupled to the reference layer (second layer) is used in place of $T_{C1}$ in the first category, and a temperature $T_{S2}$ at which the direction of magnetization of the second layer is reversed by Hb is used in place of $T_{C2}$.

In the second category, when the coercivity of the first layer is represented by $H_{C1}$; that of the second layer, $H_{C2}$; a temperature at which the first layer is magnetically coupled to the second layer, $T_{S1}$; a temperature at which the magnetization of the second layer is reversed by Hb, $T_{S2}$; a room temperature, $T_R$; a medium temperature obtained when a low-level laser beam is radiated, $T_L$; that obtained when a high-level laser beam is radiated, $T_H$; a coupling field applied to the first layer, $H_{D1}$; and a coupling field applied to the second layer, $H_{D2}$, the recording medium satisfies Formula 6 below, and satisfies Formulas 7 to 10 at the room temperature:

$$T_R < T_{S1} \approx T_L < T_{S2} \approx T_H \qquad \text{Formula 6}$$

$$H_{C1} > H_{C2} + |H_{D1} \mp H_{D2}| \qquad \text{Formula 7}$$

$$H_{C1} > H_{D1} \qquad \text{Formula 8}$$

$$H_{C2} > H_{D2} \qquad \text{Formula 9}$$

$$H_{C2} + H_{D2} < |Hini.| < H_{C1} \pm H_{D1} \qquad \text{Formula 10}$$

In the above formulas, of double signs ± and ∓, the upper sign corresponds to an A (antiparallel) type medium, and the lower sign corresponds to a P (parallel) type medium (these media will be described later).

A high-temperature cycle started from an initialized state (CONDITION 1) will be described below with reference to Fig. 10.

In the second category, when the medium is at the high temperature $T_H$, the magnetization of the second layer does not disappear, but is sufficiently weak. The magnetization of the first layer disappears, or is sufficiently weak. Even if sufficiently weak magnetization is left in both the first and second layers, the bias field Hb ↓ is sufficiently large, and the Hb ↓ forces the direction of magnetization of the second layer and that of the first layer in some cases to follow that of the Hb ↓ (CONDITION $2_H$).

Thereafter, the second layer influences the first layer via $\sigma_w$ (1) immediately, or (2) when cooling progresses after radiation of the laser beam is stopped and the medium temperature is decreased below $T_H$, or (3) when the irradiated portion is away from Hb, thereby aligning the direction of magnetization of the first layer in a stable direction. As a result, CONDITION $3_H$ is established. When the magnetization of the first layer originally has a stable direction, its direction is left unchanged.

A low-temperature cycle will be described below with reference to Fig. 11.

When the medium is at the low temperature $T_L$, both the first and second layers do not lose their magnetization. However, the magnetization of the first layer is sufficiently weak (CONDITION $2_L$).

Therefore, the direction of magnetization of the first layer is influenced, via $\sigma_w$, by the magnetization of the second layer which is more largely influenced by Hb. In this case, since the second layer has sufficient magnetization, its magnetization will not be reversed by Hb. As a result, CONDITION $3_L$ is established regardless of Hb ↓.

In the above description, both the first and second layers have no compensation temperature $T_{comp.}$ between the room temperature and the Curie temperature. However, when the compensation temperature $T_{comp.}$ is present, if the medium temperature exceeds it, (1) the direction of magnetization is reversed, and (2) A and P types are reversed. For these reasons, a description must be complicated accordingly. In this case, the direction of the bias field is opposite to the direction ↓ in the above description at the room temperature.

In both the first and second categories, the recording medium is preferably constituted by the recording layer (first layer) and the reference layer (second layer) each of which comprises an amorphous ferrimagnetic material selected from transition metal (e.g., Fe, Co) - heavy rare earth metal (e.g., Gd, Tb, Dy, and the like) alloy compositions.

When the materials of both the first and second layers are selected from the transition metal-heavy rare earth metal alloy compositions, the direction and level of magnetization appearing outside the alloys are determined by the relationship between the direction and level of spin of transition metal (to be abbreviated to as TM hereinafter) atoms, and those of heavy rare earth metal (to be abbreviated to as RE hereinafter) atoms inside the alloys. For example, the direction and level of TM spin are represented by a dotted vector ⇡, those of RE spin are represented by a solid vector ↑, and the direction and level of magnetization of the entire alloy are represented by a double-solid vector ⇑. In this case, the vector ⇑ is expressed as a sum of the vectors ⇡ and ↑. However, in the alloy, the vectors ⇡ and ↑ are directed in the opposite directions due to the mutual effect of the TM spin and the RE spin. Therefore, when strengths of these vectors are equal to each other, the sum of ⇣ and ↑ or the sum of ↓ and ⇡ is zero (i.e., the level of magnetization appearing outside the alloy becomes zero). The alloy composition making the sum of vectors zero is called a compensation composition. When the alloy has another composition, it has a strength equal to a difference between the strengths of the two spins, and has a vector (⇑ or ⬇) having a direction equal to that of the larger vector. Magnetization of this vector appears outside the alloy. For example, ↑⇣ appears as ⇑, and ↑⇣ appears as ⬇.

When one of the strengths of the vectors of the RE and TM spins is larger than the other, the alloy composition is referred to as "oo rich" named after the larger spin name (e.g., RE rich).

Both the first and second layers can be classified into TM rich and RE rich compositions. Therefore, as shown in Fig. 12, when the composition of the first layer is plotted along the ordinate and that of the second layer is plotted along the abscissa, the types of medium as a whole of the basic invention can be classified into four quadrants. The P type medium described above belongs to Quadrants I and III, and the A type medium belongs to Quadrants II and IV.

In Fig. 12, the intersection of the abscissa and the ordinate represents the compensation composition of the two layers.

In view of a change in coercivity against a change in temperature, a given alloy composition has characteristics wherein the coercivity temporarily increases infinitely and then abruptly decreases before a temperature reaches the Curie temperature (at which the coercivity is zero). The temperature corresponding to the infinite coercivity is called a compensation temperature ($T_{comp.}$). No compensation temperature is present between the room temperature and the Curie temperature in the TM rich alloy composition. The compensation temperature below the room temperature is nonsense in the magnetooptical recording, and hence, it is assumed in this specification that the compensation temperature is present between the room temperature and the Curie temperature.

If the first and second layers are classified in view of the presence/absence of the compensation temperature, the recording medium can be classified into four types. A medium in Quadrant I includes all the four types of media. Figs. 13A to 13D show "graphs of the relationship between the coercivity and temperature" for the four types of media. Note that thin curves represent characteristics of the first layer, and bold curves represent those of the second layer.

When the recording layer (first layer) and the reference layer (second layer) are classified in view of their RE or TM rich characteristics and in view of the presence/absence of the compensation temperature, recording media can be classified into the following nine classes.

Table 1

| Class | Quadrant I (P type) | | Type |
|---|---|---|---|
| | First Layer: RE Rich | Second Layer: TM Rich | |
| 1 | $T_{comp.}$ | $T_{comp.}$ | 1 |
| 2 | No $T_{comp.}$ | $T_{comp.}$ | 2 |
| 3 | $T_{comp.}$ | No $T_{comp.}$ | 3 |
| 4 | No $T_{comp.}$ | No $T_{comp.}$ | 4 |
| Class | Quadrant II (A type) | | Type |
| | First Layer: RE Rich | Second Layer: TM Rich | |
| 5 | $T_{comp.}$ | No. $T_{comp.}$ | 3 |
| 6 | No $T_{comp.}$ | No $T_{comp.}$ | 4 |
| Class | Quadrant III (P type) | | Type |
| | First Layer: TM Rich | Second Layer: TM Rich | |
| 7 | No $T_{comp.}$ | No $T_{comp.}$ | 4 |
| Class | Quadrant IV (A type) | | Type |
| | First Layer: TM Rich | Second Layer: RE Rich | |
| 8 | No $T_{comp.}$ | $T_{comp.}$ | 2 |
| 9 | No $T_{comp.}$ | No $T_{comp.}$ | 4 |

It was found that the recording medium disclosed in detail in the specification of the basic invention whose principle has been described suffers from the following problems. That is, an exchange coupling force $\sigma_w$ acting between the first and second layers is too large, and a film thickness must be increased accordingly. As a result, recording sensitivity is decreased, and a recording speed is decreased.

Reference is also made to EP-A-0282356 which describes a magneto-optical recording medium having a first magnetic layer and a second magnetic layer having a higher curie point and a lower coercive force than those of the first magnetic layer, which magneto-optical recording medium satisfying a condition of

$$H_H > H_L > \frac{\sigma_w}{2M_s h}$$

where $H_H$ is a coercive force of the first magnetic layer, $H_L$ is a coercive force of the second magnetic layer, $M_s$ is a saturation magnetization of the second magnetic layer, h is a film thickness of the second magnetic layer, and $\sigma_w$ is a magnetic wall energy between the first and second magnetic layers. The second magnetic layer contains an element which is not ferromagnetic at a room temperatures (cf. in EP-A-0 282356 e.g. p. 3 lines 61-64).

## SUMMARY OF THE INVENTION:

It would be desirable to provide an over-write capable magnetooptical recording medium having small $\sigma_W$, and to solve the above-mentioned problems.

The present inventors have made extensive studies, and found that $\sigma_W$ can be decreased by forming at least one of first and second layers by a heavy rare earth-light rare earth-transition metal alloy amorphous film, thus enabling the above problems of the prior art to be overcome.

An over-write capable magnetooptical recording medium, comprising at least a first layer for serving as a recording layer, and a second layer for serving as a reference layer, wherein the direction of magnetization of the second layer can be aligned in a predetermined upward or downward direction by an external magnetic field or an exchange magnetic field before the recording of over-write information and without changing the direction of magnetization of the first layer, and the medium being capable of having over-write information recorded thereon by irradiating the medium under the presence of a predetermined bias field with a light beam modulated in accordance with the data, the medium wherein one of said first and second layers comprises a heavy rare earth-light rare earth-transition metal alloy amorphouse film, and the other layer comprises a heavy rare earth-light rare earth-transition metal alloy amorphous film or a heavy rare earth-transition metal alloy amorphous film, such that the medium has a small $\sigma_W$, wherein the or each light rare earth element is selected from the group consisting of Nd, Sm, Pr, Eu, Pm, Ce, and La.

When $\sigma_W$ is small, a total film thickness of the first and second layers can be small. Therefore, recording sensitivity can be increased, and recording speed can be increased.

In a related aspect, the invention also provides a method of producing a disc prepared for over-write operation, comprising the steps of:

providing a magnetooptical recording medium as aforesaid;
aligning the direction of magnetization of the second layer in a predetermined direction by the use of an external magnetic field or an exchange magnetic field, without changing the direction of magnetization of the first layer.

In a further related aspect, the invention also provides a method comprising the steps of: producing a disc according to the method above; and recording over-write information on the medium by irradiating the medium, under the presence of a predetermined bias field, with a light beam modulated in accordance with the information.

The over-write principle of the recording medium of Classes 1 to 9 of the present invention will be described in detail below. Since a light rare earth atom has the same direction of spin as that of a transition metal atom, the "transition metal represents a transition metal and a light rare earth metal. "Transition metal rich" in the claims also means the relationship between the transition metal and the heavy rare earth metal including the light rare earth metal.

The basic invention describes only an initial field Hini. as a means for initializing the second layer (reference layer). The present invention also includes a structure wherein third and fourth layers are added, and initialize the second layer via an exchange coupling force $\sigma_W$. In this case, since the medium itself has an initialization means, an initialization means, e.g., an Hini. magnet need not be arranged in a recording apparatus.

The principle of an over-write operation will be described in detail below using a medium No. 1 belonging to Class 1 (P type, Quadrant I, Type 1) shown in Table 1.

The medium No. 1 satisfies Formula 11:

$$T_R < T_{comp.1} < T_{C1} \approx T_L \approx T_{comp.2} < T_{C2} \approx T_H \qquad \text{Formula 11}$$

Fig. 14 shows the above-mentioned relationship as a graph. Note that thin curves represent characteristics of the first layer, and bold curves represent those of the second layer.

A condition that reverses the direction of magnetization of the second layer by the initial field Hini. at the room temperature $T_R$ without reversing that of the first layer is represented by Formula 12. This medium No. 1 satisfies Formula 12:

$$H_{C1} > H_{C2} + \frac{\sigma_w}{2M_{S1}t_1} + \frac{\sigma_w}{2M_{S2}t_2} \qquad \text{Formula 12}$$

where

| | |
|---|---|
| $H_{C1}$: | coercivity of first layer |
| $H_{C2}$: | coercivity of second layer |
| $M_{S1}$: | saturation magnetization of first layer |
| $M_{S2}$: | saturation magnetization of second layer |
| $t_1$ : | film thickness of first layer |
| $t_2$ : | film thickness of second layer |
| $\sigma_w$ : | interface wall energy |

At this time, a condition for the field Hini. is represented by Formula 15. If the field Hini. disappears, the reversed direction of magnetization of the second layer is influenced by the magnetization of the first layer due to an exchange coupling force. The conditions that can hold the direction of magnetization of the second layer without re-reversing it are represented by Formulas 13 and 14. The medium No. 1 satisfies Formulas 13 and 14:

$$H_{C1} > \frac{\sigma_w}{2M_{S1}t_1} \qquad \text{Formula 13}$$

$$H_{C2} > \frac{\sigma_w}{2M_{S2}t_2} \qquad \text{Formula 14}$$

$$H_{C2} + \frac{\sigma_w}{2M_{S2}t_2} < |Hini.| < H_{C1} - \frac{\sigma_w}{2M_{S1}t_1} \qquad \text{Formula 15}$$

The magnetization of the second layer of the recording medium which satisfies conditions given by Formulas 12 to 14 at the room temperature is aligned in, e.g., the "A direction" ⇑ ( ↑↓ ) by Hini. which satisfies Formula 15 immediately before recording. At this time, the first layer is left in the recorded state (CONDITION 1 in Fig. 15 or 16; in Fig. 15 or 16, a bold line around the first layer indicates a magnetic wall).

CONDITION 1 is held immediately before recording. Note that the bias field (Hb) is applied in a direction ↑.

A low-temperature cycle of this medium will be described below with reference to Fig. 15.

—— Low-temperature Cycle ——

A low-level laser beam is radiated on the medium in CONDITION 1 to increase the medium temperature to $T_L$. Since $T_L$ is almost equal to the Curie temperature $T_{C1}$ of the first layer, its magnetization disappears (CONDITION $2_L$).

In CONDITION $2_L$, when the irradiated portion falls outside the spot region of the laser beam, the medium temperature begins to be decreased. When the medium temperature is decreased slightly below $T_{C1}$, RE and TM spins ( ↑↓ ) of the second layer influence those of the first layer due to the exchange coupling force. That is, a force acts to respectively align RE spins (↑) and TM spins ( ↓ ). As a result, magnetization ↑↓, i.e., ⬇ overcomes the bias field ↑ Hb, and appears in the first layer (CONDITION $3_L$). Since the temperature of this condition is equal to or higher than $T_{comp.1}$, the TM spin is larger than the RE spin.

When the medium temperature is cooled below $T_{comp.1}$, the relationship between the RE spin and the TM spin of the first layer is reversed (↑↓ → ↑↓ ). As a result, the direction of magnetization of the first layer is reversed to ⇑ (CONDITION $4_L$).

CONDITION $4_L$ is maintained even when the medium temperature is decreased to the room temperature. As a result, the magnetization of the first layer is aligned in the "A direction" ⇑ regardless of a previously recorded bit, and a bit having this direction is formed.

A high-temperature cycle of this medium will be described below with reference to Fig. 16.

—— High-temperature Cycle ——

When a high-level laser beam is radiated on the medium in CONDITION 1 to increase the medium temperature to $T_L$, since $T_L$ is almost equal to the Curie temperature $T_{C1}$ of the first layer, its magnetization disappears (CONDITION $2_H$).

When beam radiation is further continued, the medium temperature is further increased. When the medium temperature slightly exceeds $T_{comp.2}$ of the second layer, the relationship between the strengths of RE and TM spins is reversed ( ↑↓ → ↑↓ ) although their directions are left unchanged. For this reason, the magnetization of the second layer is reversed to the "non-A direction" ⬇ (CONDITION $3_H$).

However, since $H_{C2}$ is still large at this temperature, the magnetization of the second layer will not be reversed by ↑ Hb. When the temperature is further increased and reaches $T_H$, the temperature of the second layer becomes almost equal to the Curie temperature $T_{C2}$, and magnetization of the second layer also disappears (CONDITION $4_H$).

When the irradiated portion falls outside the spot region of the laser beam in CONDITION $4_H$, the medium temperature begins to fall. When the medium temperature is decreased slightly below $T_{C2}$, magnetization appears in the second layer. In this case, magnetization ⇑ (↓↑) appears due to ↑ Hb (CONDITION $5_H$). However, since the temperature is still higher than $T_{C1}$, no magnetization appears in the first layer.

When the medium temperature is further decreased below $T_{comp.2}$, the relationship between the strengths of RE and TM spins is reversed (↓↑ → ↓↑ ) although their directions are left unchanged. As a result, the magnetization of the entire alloy of the second layer is reversed from ⇑ to the "non-A direction" ⬇ (CONDITION $6_H$).

In CONDITION $6_H$, since the medium temperature is still higher than $T_{C1}$, the magnetization of the first layer is kept disappearing. In addition, since $H_{C2}$ at this temperature is large, the magnetization ⬇ of the second layer will not be reversed by ↑ Hb.

When the temperature is further decreased slightly below $T_{C1}$, magnetization appears in the first layer. In this case, the exchange coupling force from the second layer acts to respectively align the RE spins (↓) and TM spins (⇡). Since the temperature of the first layer is equal to or higher than $T_{comp.1}$, magnetization ↓⇡, i.e., ⇑ appears in the first layer. This condition corresponds to CONDITION $7_H$.

When the medium temperature is decreased from the temperature in CONDITION $7_H$ below $T_{comp.1}$, the relationship between the strengths of the RE spin and the TM spin of the first layer is reversed (↓⇡ → ↓↑). As a result, magnetization ⇓ appears (CONDITION $8_H$).

The medium temperature is then decreased from the temperature in CONDITION $8_H$ to the room temperature. Since $H_{C1}$, at the room temperature is sufficiently large, the magnetization of the first layer will not be reversed by ↑ Hb, and CONDITION $8_H$ can be maintained. Thus, a bit in the "non-A direction" is formed.

The principle of the over-write operation will be described in detail below using a specific medium No. 2 belonging to a recording medium of Class 2 (P type, Quadrant I, Type 2) shown in Table 1.

This medium No. 2 has a relation given by Formula 16:

$$T_R < T_{C1} \approx T_L \approx T_{comp.2} < T_{C2} \approx T_H \quad \text{Formula 16}$$

Fig. 17 shows this relation as a graph.

A condition for reversing only the magnetization of the second layer by the initial field Hini. without reversing that of the first layer at the room temperature $T_R$ is given by Formula 17. This medium No. 2 satisfies Formula 17:

$$H_{C1} > H_{C2} + \frac{\sigma_w}{2M_{S1}t_1} + \frac{\sigma_w}{2M_{S2}t_2} \quad \text{Formula 17}$$

In this case, a condition for Hini. is represented by Formula 20. When Hini. disappears, the reversed magnetization of the second layer is influenced by that of the first layer due to the exchange coupling force. Conditions for maintaining the magnetization of the second layer without re-reversing it are given by Formulas 18 and 19. This medium No. 2 satisfies Formulas 18 and 19:

$$H_{C1} > \frac{\sigma_w}{2M_{S1}t_1} \quad \text{Formula 18}$$

$$H_{C2} > \frac{\sigma_w}{2M_{S2}t_2} \quad \text{Formula 19}$$

$$H_{C2} + \frac{\sigma_w}{2M_{S2}t_2} < |Hini.| < H_{C1} - \frac{\sigma_w}{2M_{S1}t_1} \quad \text{Formula 20}$$

Magnetization of the second layer of the recording medium which satisfies the conditions given by Formulas 17 to 19 at the room temperature is aligned in, e.g., the "A direction" ⇑ (↑↓) by Hini. satisfying a condition given by Formula 20 immediately before recording. In this case, the first layer is left in the recorded state (CONDITION 1 in Fig. 18 or 19).

This CONDITION 1 is held immediately before recording. In this case, the bias field (Hb) is applied in a direction ↑.

A low-temperature cycle of this medium will be described below with reference to Fig. 18.

—— Low-temperature Cycle ——

A low-level laser beam is radiated on the medium in CONDITION 1 to increase the medium temperature to $T_L$. Since $T_L$ is almost equal to the Curie temperature $T_{C1}$ of the first layer, its magnetization disappears (CONDITION $2_L$).

When the irradiated portion falls outside the spot region of the laser beam in CONDITION $2_L$, the medium temperature begins to fall. When the medium temperature is decreased slightly below $T_{C1}$, the RE and TM spins (↑↓) of the second layer influence those of the first layer due to the exchange coupling force. More specifically, a force acts to respectively align RE spins (↑) and TM spins (⇣). As a result, magnetization ↑↓, i.e., ⇑ appears in the first layer (CONDITION $3_L$).

CONDITION $3_L$ is left unchanged even when the medium temperature is further decreased. As a result, the magnetization of the first layer is aligned in the "A direction" ⇑ regardless of the previously recorded bit, and a bit in the "A direction" ⇑ is formed.

A high-temperature cycle of this medium will be described below with reference to Fig. 19.

—— High-temperature Cycle ——

A high-level laser beam is radiated on the medium in CONDITION 1. As a result, when the medium temperature is increased to $T_L$, since $T_L$ is almost equal to the Curie temperature $T_{C1}$, of the first layer, magnetization of the first layer disappears. This condition corresponds to CONDITION $2_H$.

When beam radiation is further continued, the medium temperature is further increased. When the medium temperature slightly exceeds $T_{comp.2}$ of the second layer, the relationship between the strengths of RE and TM spins is reversed ( ↑↓ → ↑⇣ ) although their directions are left unchanged. For this reason, the magnetization of the entire alloy of the second layer is reversed to the "non-A direction" ⬇ (CONDITION $3_H$).

However, since $H_{C2}$ is still large at this temperature, the magnetization of the second layer will not be reversed by ↑ Hb. When the temperature is further increased and reaches $T_H$, the temperature of the second layer becomes almost equal to the Curie temperature $T_{C2}$, and its magnetization disappears (CONDITION $4_H$).

When the irradiated portion falls outside the spot region of the laser beam in CONDITION $4_H$, the medium temperature begins to fall. When the medium temperature is decreased slightly below $T_{C2}$, magnetization appears in the second layer. In this case, magnetization ⇑ (↓⇡) appears due to ↑ Hb. However, since the temperature is still higher than $T_{C1}$, no magnetization appears in the first layer. This condition corresponds to CONDITION $5_H$.

When the medium temperature is further decreased below $T_{comp.2}$, the relationship between the strengths of RE and TM spins is reversed (↓⇡ → ↓↑) although their directions are left unchanged. As a result, the magnetization of the entire alloy of the second layer is reversed from ⇑ to the "non-A direction" ⬇ (CONDITION $6_H$).

In CONDITION $6_H$, since the medium temperature is still higher than $T_{C1}$, the magnetization of the first layer is kept disappearing. In addition, since $H_{C2}$ at this temperature is large, the magnetization of the second layer will not be reversed by ↑ Hb.

When the temperature is further decreased slightly below $T_{C1}$, magnetization appears in the first layer. In this case, the exchange coupling force from the second layer acts to respectively align the RE spins (↓) and TM spins (⇡). Thus, magnetization ⇣↑, i.e., ⇑ appears in the first layer. This condition corresponds to CONDITION $7_H$.

The medium temperature is then decreased from the temperature in CONDITION $7_H$ to the room temperature. Since $H_{C1}$ at the room temperature is sufficiently large, the magnetization of the first layer will not be reversed by ↑ Hb, and CONDITION $7_H$ can be maintained. Thus, a bit in the "non-A direction" ⬇ is formed.

The principle of the over-write operation will be described in detail below using a specific medium No. 3 belonging to a recording medium of Class 3 (P type, Quadrant I, Type 3) shown in Table 1.

This medium No. 3 has a relation given by Formula 21:

$$T_R < T_{comp.1} < T_{C1} \approx T_L < T_{C2} \approx T_H \qquad \text{Formula 21}$$

Fig. 20 shows this relation as a graph.

A condition for reversing only the magnetization of the second layer by the initial field Hini. without reversing that of the first layer at the room temperature $T_R$ is given by Formula 22. This medium No. 3 satisfies Formula 22:

$$H_{C1} > H_{C2} + \frac{\sigma_w}{2M_{S1}t_1} + \frac{\sigma_w}{2M_{S2}t_2} \qquad \text{Formula 22}$$

In this case, a condition for Hini. is represented by Formula 25. When Hini. disappears, the reversed magnetization of the second layer is influenced by that of the first layer due to the exchange coupling force. Conditions for maintaining the magnetization of the second layer without re-reversing it are given by Formulas 23 and 24. This medium No. 3 satisfies Formulas 23 and 24:

$$H_{C1} > \frac{\sigma_w}{2M_{S1}t_1} \qquad \text{Formula 23}$$

$$H_{C2} > \frac{\sigma_w}{2M_{S2}t_2} \qquad \text{Formula 24}$$

$$H_{C2} + \frac{\sigma_w}{2M_{S2}t_2} < |Hini.| < H_{C1} - \frac{\sigma_w}{2M_{S1}t_1} \qquad \text{Formula 25}$$

Magnetization of the second layer of the recording medium which satisfies the conditions given by Formulas 22 to 24 at the room temperature is aligned in, e.g., the "A direction" ⇑ (↑↓) by Hini. satisfying a condition given by Formula 25 immediately before recording. In this case, the first layer is left in the recorded state (CONDITION 1 in Fig. 21 or 22).

This CONDITION 1 in Fig. 21 is held immediately before recording. In this case, the bias field (Hb) is applied in a direction ↑.

This CONDITION 1 in Fig. 22 is held immediately before recording. In this case, the bias field (Hb) is applied in a direction ↓.

A low-temperature cycle of this medium will be described below with reference to Fig. 21.

—— Low-temperature Cycle ——

A low-level laser beam is radiated on the medium in CONDITION 1 to increase the medium temperature to $T_L$. Since $T_L$ is almost equal to the Curie temperature $T_{C1}$ of the first layer, its magnetization disappears. However, since $H_{C2}$ of the second layer is still large at this temperature, the magnetization of the second layer will not be reversed by ↓ Hb (CONDITION $2_L$).

When the irradiated portion falls outside the spot region of the laser beam in CONDITION $2_L$, the medium temperature begins to fall. When the medium temperature is decreased slightly below $T_{C1}$, the RE and TM spins (↑↓) of the second layer influence those of the first layer due to the exchange coupling force. More specifically, a force acts to respectively align RE spins (↑) and TM spins (↓). As a result, magnetization ↑↓, i.e., ⬇ appears in the first layer. In this case, since the temperature is equal to or higher than $T_{comp.1}$, the TM spin is larger than the RE spin (CONDITION $3_L$).

When the medium temperature is decreased below $T_{comp.1}$, the relationship between the RE spin and TM spin of the first layer is reversed (↑↓ → ↑↓). As a result, the magnetization of the first layer overcomes ↓ Hb, and is aligned in ⇑ (CONDITION $4_L$).

CONDITION $4_L$ is maintained even when the medium temperature is decreased to the room temperature. As a result, the magnetization of the first layer is aligned in the "A direction" ⇑ regardless of the previously recorded bit, and a bit in the "A direction" ⇑ is formed.

A high-temperature cycle of this medium will be described below with reference to Fig. 22.

—— High-temperature Cycle ——

A high-level beam is radiated on the medium in CONDITION 1. As a result, when the medium temperature is increased to $T_L$, since $T_L$ is almost equal to the Curie temperature $T_{C1}$ of the first layer, the magnetization of the first layer disappears. This condition corresponds to CONDITION $2_H$.

When the beam radiation further continues and the medium temperature reaches $T_H$, since $T_H$ is almost equal to $T_{C2}$ of the second layer, its magnetization also disappears (CONDITION $3_H$).

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization ⬇ (↓↑) appears due to ↓ Hb. However, since the temperature is still higher than $T_{C1}$, no magnetization appears in the first layer. This condition corresponds to CONDITION $4_H$.

When the medium temperature is further decreased slightly below $T_{C1}$, magnetization also appears in the first layer. In this case, the magnetization of the second layer influences that of the first layer due to the exchange coupling force. As a result, a force acts to respectively align RE spins (↓) and TM spins (↑). In this case, since the medium temperature is equal to or higher than $T_{comp.1}$, the TM spins are larger than RE spins (↓↑). As a result, magnetization ⇑ appears in the second layer (CONDITION $5_H$).

When the medium temperature is further decreased from the temperature in CONDITION $5_H$ below $T_{comp.1}$, the relationship between the strengths of the TM and RE spins of the first layer is reversed (↓↑ → ↓↑). For this reason, the direction of magnetization of the first layer is reversed to the "non-A direction" ⬇ (CONDITION $6_H$).

The medium temperature is then decreased from the temperature in CONDITION $6_H$ to the room temperature. Since $H_{C1}$, at the room temperature is sufficiently large, the magnetization of the first layer is stably held. Thus, a bit in the "non-A direction" ⬇ is formed.

In the description of Classes 1 to 3, the low-temperature cycle includes a process for causing the coercivity of the first layer to almost disappear. However, the low-temperature cycle aims at forming a bit in CONDITION 1 free from a magnetic wall. Therefore, a bit free from a magnetic wall is left unchanged, and only a bit with a magnetic wall can be converted to a bit free from a magnetic wall. A bit with a magnetic wall is in a quasi-stable state, and is unstable as compared to a bit free from a magnetic wall, since magnetization of the second layer acts to align the direction of magnetization of the first layer in a stable state (no-magnetic wall state as a whole) via $\sigma_w$. For this reason, the coercivity of the first layer need not almost disappear, but need only be weakened. If the coercivity of the first layer need only be weakened, the medium temperature need not be increased to near $T_{C1}$.

The same applies to the following description of Classes 4 to 9.

The principle of the over-write operation will be described in detail below using a specific medium No. 4 belonging to a recording medium of Class 4 (P type, Quadrant I, Type 4) shown in Table 1.

This medium No. 4 has a relation given by Formula 26:

$$T_R < T_{C1} \approx T_L < T_{C2} \approx T_H \qquad \text{Formula 26}$$

Fig. 23 shows this relation as a graph.

A condition for reversing only the magnetization of the second layer by the initial field Hini. without reversing that of the first layer at the room temperature $T_R$ is given by Formula 27. This medium No. 4 satisfies Formula 27:

$$H_{C1} > H_{C2} + \frac{\sigma_w}{2M_{S1}t_1} + \frac{\sigma_w}{2M_{S2}t_2} \qquad \text{Formula 27}$$

In this case, a condition for Hini. is represented by Formula 30. When Hini. disappears, the reversed magnetization of the second layer is influenced by that of the first layer due to the exchange coupling force. Conditions for maintaining the magnetization of the second layer without re-reversing it are given by Formulas 28 and 29. This medium No. 4 satisfies Formulas 28 and 29:

$$H_{C1} > \frac{\sigma_w}{2M_{S1}t_1} \qquad \text{Formula 28}$$

$$H_{C2} > \frac{\sigma_w}{2M_{S2}t_2} \qquad \text{Formula 29}$$

$$H_{C2} + \frac{\sigma_w}{2M_{S2}t_2} < |Hini.| < H_{C1} - \frac{\sigma_w}{2M_{S1}t_1} \qquad \text{Formula 30}$$

Magnetization of the second layer of the recording medium which satisfies the conditions given by Formulas 27 to 29 at the room temperature is aligned in, e.g., the "A direction" ⇑ (↿⇂) by Hini. satisfying a condition given by Formula 30 immediately before recording. In this case, the first layer is left in the recorded state (CONDITION 1 in Fig. 24 or 25).

This CONDITION 1 is held immediately before recording. In this case, the bias field (Hb) is applied in a direction ↓.

A low-temperature cycle of this medium will be described below with reference to Fig. 24.

—— Low-temperature Cycle ——

A low-level laser beam is radiated on the medium in CONDITION 1 to increase the medium temperature to $T_L$. Since $T_L$ exceeds the Curie temperature $T_{C1}$ of the first layer, magnetization of the first layer disappears. In this state, since $H_{C2}$ is still large at this temperature, the magnetization ⇑ of the second layer will not be reversed by ↓ Hb. This condition corresponds to CONDITION $2_L$.

When the irradiated portion falls outside the spot region of the laser beam in CONDITION $2_L$, the medium temperature begins to fall. When the medium temperature is decreased slightly below $T_{C1}$, the RE and TM spins (↿⇂) of the second layer influence those of the first layer due to the exchange coupling force. More specifically, a force acts to respectively align RE spins (↑) and TM spins (⇂). As a result, magnetization ↿⇂, i.e.,⇑ overcomes ↓ Hb, and appears in the first layer. This condition corresponds to CONDITION $3_L$.

CONDITION $3_L$ is maintained even when the medium temperature is decreased to the room temperature. As a result, the magnetization of the first layer is aligned in the "A direction" ⇑ regardless of the previously recorded bit, and a bit in the "A direction" ⇑ is formed.

A high-temperature cycle of this medium will be described below with reference to Fig. 25.

—— High-temperature Cycle ——

A high-level beam is radiated on the medium in CONDITION 1. As a result, when the medium temperature is increased to $T_L$, since $T_L$ is almost equal to the Curie temperature $T_{C1}$ of the first layer, the magnetization of the first layer disappears. This condition corresponds to CONDITION $2_H$.

When the beam radiation further continues and the medium temperature reaches $T_H$, since the temperature $T_H$ of the second layer is almost equal to the Curie temperature $T_{C2}$, its magnetization also disappears. This condition corresponds to CONDITION $3_H$.

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization ⇓ (↓↑) appears due to ↓ Hb. However, since the temperature is still higher than $T_{C1}$, no magnetization appears in the first layer. This condition corresponds to CONDITION $4_H$.

When the medium temperature is further decreased slightly below $T_{C1}$, magnetization also appears in the first layer. In this case, the exchange coupling force from the second layer acts to respectively align RE spins (↓) and TM spins (↑). For this reason, magnetization ↓↑, i.e., ⇓ appears in the first layer. This condition corresponds to CONDITION $5_H$.

The medium temperature is then decreased from the temperature in CONDITION $5_H$ to the room temperature. Since $H_{C1}$ at the room temperature is sufficiently large, the magnetization of the first layer is stably held. Thus, a bit in the "non-A direction" ⇓ is formed.

The principle of the over-write operation will be described in detail below using a specific medium No. 5 belonging to a recording medium of Class 5 (A type, Quadrant II, Type 3) shown in Table 1.

This medium No. 5 has a relation given by Formula 31:

$$T_R < T_{comp.\ 1} < T_{C1} \approx T_L < T_{C2} \approx T_H \qquad \text{Formula 31}$$

Fig. 26 shows this relation as a graph.

A condition for reversing only the magnetization of the second layer by the initial field Hini. without reversing that of the first layer at the room temperature $T_R$ is given by Formula 32. This medium No. 5 satisfies Formula 32:

$$H_{C1} > H_{C2} + \left| \frac{\sigma_w}{2M_{S1}t_1} + \frac{\sigma_w}{2M_{S2}t_2} \right| \qquad \text{Formula 32}$$

In this case, a condition for Hini. is represented by Formula 35. When Hini. disappears, the reversed magnetization of the second layer is influenced by that of the first layer due to the exchange coupling force. Conditions for maintaining the magnetization of the second layer without re-reversing it are given by Formulas 33 and 34. This medium No. 5 satisfies Formulas 33 and 34:

$$H_{C1} > \frac{\sigma_w}{2M_{S1}t_1} \qquad \text{Formula 33}$$

$$H_{C2} > \frac{\sigma_w}{2M_{S2}t_2} \qquad \text{Formula 34}$$

$$H_{C2} + \frac{\sigma_w}{2M_{S2}t_2} < |Hini.| < H_{C1} - \frac{\sigma_w}{2M_{S1}t_1} \qquad \text{Formula 35}$$

Magnetization of the second layer of the recording medium which satisfies the conditions given by Formulas 32 to 34 at the room temperature is aligned in, e.g., the "A direction" ⇑ (↓↑) by Hini. satisfying a condition given by Formula 35 immediately before recording. In this case, the first layer is left in the recorded state (CONDITION 1 in Fig. 27 or 28).

This CONDITION 1 is held immediately before recording. In this case, the bias field (Hb) is applied in a direction ↓.

A low-temperature cycle of this medium will be described below with reference to Fig. 27.

—— Low-temperature Cycle ——

A low-level laser beam is radiated on the medium in CONDITION 1 to increase the medium temperature to $T_L$. Since $T_L$ is almost equal to the Curie temperature $T_{C1}$ of the first layer, magnetization of the first layer disappears. However, since $H_{C2}$ of the second layer is still large at this temperature, the magnetization of the second layer will not be reversed by ↓ Hb (CONDITION $2_L$).

When the beam radiation is ended in CONDITION $2_L$, the medium temperature begins to fall. When the medium temperature is decreased slightly below $T_{C1}$, the RE and TM spins (↓↑) of the second layer influence those of the first layer due to the exchange coupling force. More specifically, a force acts to respectively align RE spins (↓) and TM spins (↑). As a result, magnetization ↓↑, i.e., ⇑ overcomes ↓ Hb, and appears in the first layer. In this case, since the temperature is equal to or higher than $T_{comp.1}$, the TM spin is larger than the RE spin (CONDITION $3_L$).

When the medium temperature is further decreased below $T_{comp.1}$, the relationship between the RE spin and TM spin of the first layer is reversed (↓↑ → ↓↑). As a result, the magnetization of the first layer is aligned in ⇓ (CONDITION $4_L$).

CONDITION $4_L$ is maintained even when the medium temperature is decreased to the room temperature. As a result, the magnetization of the first layer is aligned in the "non-A direction" ⇓ regardless of the previously recorded bit, and a bit in the "non-A direction" ⇓ is formed.

A high-temperature cycle of this medium will be described below with reference to Fig. 28.

—— High-temperature Cycle ——

A high-level beam is radiated on the medium in CONDITION 1. As a result, when the medium temperature is increased to $T_L$, since $T_L$ is almost equal to the Curie temperature $T_{C1}$ of the first layer, the magnetization of the first layer disappears. This condition corresponds to CONDITION $2_H$.

When the beam radiation further continues and the medium temperature reaches $T_H$, since $T_H$ is almost equal to $T_{C2}$, the magnetization of the second layer also disappears (CONDITION $3_H$).

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization ⇓ (↑↓) appears due to ↓ Hb. However, since the temperature is still higher than $T_{C1}$, no magnetization appears in the first layer. This condition corresponds to CONDITION $4_H$.

When the medium temperature is further decreased slightly below $T_{C1}$, magnetization also appears in the first layer. In this case, the magnetization of the second layer influences that of the first layer due to the exchange coupling force. As a result, a force acts to respectively align RE spins (↑) and TM spins (↓). In this case, since the medium temperature is equal to or higher than $T_{comp.1}$, the TM spins are larger than RE spins (↑↓). As a result, magnetization ⇓ appears in the first layer (CONDITION $5_H$).

When the medium temperature is further decreased from the temperature in CONDITION $5_H$ below $T_{comp.1}$, the relationship between the strengths of the TM and RE spins of the first layer is reversed (↑↓ → ↑↓). For this reason, the direction of magnetization of the first layer is reversed to the "A direction" ⇑ (CONDITION $6_H$).

The medium temperature is then decreased from the temperature in CONDITION $6_H$ to the room temperature. Since $H_{C1}$ at the room temperature is sufficiently large, the magnetization of the first layer is stably held. Thus, a bit in the "A direction" ⇑ is formed.

The principle of the over-write operation will be described in detail below using a specific medium No. 6 belonging to a recording medium of Class 6 (A type, Quadrant II, Type 4) shown in Table 1.

This medium No. 6 has a relation given by Formula 36:

$$T_R < T_{C1} \approx T_L < T_{C2} \approx T_H \qquad \text{Formula 36}$$

Fig. 29 shows this relation as a graph.

A condition for reversing only the magnetization of the second layer by the initial field Hini. without reversing that of the first layer at the room temperature $T_R$ is given by Formula 37. This medium No. 6 satisfies Formula 37:

$$H_{C1} > H_{C2} + \left| \frac{\sigma_w}{2M_{S1}t_1} - \frac{\sigma_w}{2M_{S2}t_2} \right| \quad \text{Formula 37}$$

In this case, a condition for Hini. is represented by Formula 40. When Hini. disappears, the reversed magnetization of the second layer is influenced by that of the first layer due to the exchange coupling force. Conditions for maintaining the magnetization of the second layer without re-reversing it are given by Formulas 38 and 39. This medium No. 6 satisfies Formulas 38 and 39:

$$H_{C1} > \frac{\sigma_w}{2M_{S1}t_1} \quad \text{Formula 38}$$

$$H_{C2} > \frac{\sigma_w}{2M_{S2}t_2} \quad \text{Formula 39}$$

$$H_{C2} + \frac{\sigma_w}{2M_{S2}t_2} < |Hini.| < H_{C1} + \frac{\sigma_w}{2M_{S1}t_1} \quad \text{Formula 40}$$

Magnetization of the second layer of the recording medium which satisfies the conditions given by Formulas 37 to 39 at the room temperature is aligned in, e.g., the "A direction" ⇑ (↓⇡) by Hini. satisfying a condition given by Formula 40 immediately before recording. In this case, the first layer is left in the recorded state (CONDITION 1 in Fig. 30 or 31).

This CONDITION 1 is held immediately before recording. In this case, the bias field (Hb) is applied in a direction ↓.

A low-temperature cycle of this medium will be described below with reference to Fig. 30.

—— Low-temperature Cycle ——

A low-level laser beam is radiated on the medium in CONDITION 1 to increase the medium temperature to $T_L$. Since $T_L$ is almost equal to the Curie temperature $T_{C1}$ of the first layer, magnetization of the first layer disappears. In this state, since $H_{C2}$ of the second layer is still large at this temperature, the magnetization of the second layer will not be reversed by ↓ Hb. This condition corresponds to CONDITION $2_L$.

When the irradiated portion falls outside the spot region of the laser beam in CONDITION $2_L$, the medium temperature begins to fall. When the medium temperature is decreased slightly below $T_{C1}$, the RE and TM spins (↓⇡) of the second layer influence those of the first layer due to the exchange coupling force. More specifically, a force acts to respectively align RE spins (↓) and TM spins (⇡). As a result, magnetization ↓⇡, i.e., ⇓ appears in the first layer. This condition corresponds to CONDITION $3_L$.

CONDITION $3_L$ is maintained even when the medium temperature is decreased to the room temperature. As a result, the magnetization of the first layer is aligned in the "non-A direction" ⇓ regardless of the previously recorded bit, and a bit in the "non-A direction" ⇓ is formed.

A high-temperature cycle of this medium will be described below with reference to Fig. 31.

—— High-temperature Cycle ——

A high-level beam is radiated on the medium. As a result, when the medium temperature is increased to $T_L$, since $T_L$ is almost equal to the Curie temperature $T_{C1}$ of the first layer, the magnetization of the first layer disappears. This condition corresponds to CONDITION $2_H$.

When the beam radiation further continues and the medium temperature reaches $T_H$, since the temperature $T_H$ of the second layer is almost equal to $T_{C2}$, the magnetization of the second layer also disappears. This condition corresponds to CONDITION $3_H$.

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization ⇓ (⇡↓) appears due to ↓ Hb. However, since the temperature is still higher than $T_{C1}$, no magnetization appears in the first layer. This condition corresponds to CONDITION $4_H$.

When the medium temperature is further decreased slightly below $T_{C1}$, magnetization also appears in the first layer. In this case, the exchange coupling force from the second layer acts to respectively align RE spins (↑) and TM spins (⇣). For this reason, magnetization ↑⇣, i.e., ⇑ overcomes ↓ Hb, and appears in the first layer. This condition corresponds to CONDITION $5_H$.

The medium temperature is then decreased from the temperature in CONDITION $5_H$ to the room temperature. Since $H_{C1}$ at the room temperature is sufficiently large, the magnetization of the first layer is stably held. Thus, a bit in the "A direction" ⇑ is formed.

The principle of the over-write operation will be described in detail below using a specific medium No. 7 belonging to a recording medium of Class 7 (P type, Quadrant III, Type 4) shown in Table 1.

This medium No. 7 has a relation given by Formula 41:

$$T_R < T_{C1} \approx T_L < T_{C2} \approx T_H \quad \text{Formula 41}$$

Fig. 32 shows this relation as a graph.

A condition for reversing only the magnetization of the second layer by the initial field Hini. without reversing that of the first layer at the room temperature $T_R$ is given by Formula 42. This medium No. 7 satisfies Formula 42:

$$H_{C1} > H_{C2} + \frac{\sigma_w}{2M_{S1}t_1} + \frac{\sigma_w}{2M_{S2}t_2} \quad \text{Formula 42}$$

In this case, a condition for Hini. is represented by Formula 45. When Hini. disappears, the reversed magnetization of the second layer is influenced by that of the first layer due to the exchange coupling force. Conditions for maintaining the magnetization of the second layer without re-reversing it are given by Formulas 43 and 44. This medium No. 7 satisfies Formulas 43 and 44:

$$H_{C1} > \frac{\sigma_w}{2M_{S1}t_1} \quad \text{Formula 43}$$

$$H_{C2} > \frac{\sigma_w}{2M_{S2}t_2} \quad \text{Formula 44}$$

$$H_{C2} + \frac{\sigma_w}{2M_{S2}t_2} < |Hini.| < H_{C1} - \frac{\sigma_w}{2M_{S1}t_1} \quad \text{Formula 45}$$

Magnetization of the second layer of the recording medium which satisfies the conditions given by Formulas 42 to 44 at the room temperature is aligned in, e.g., the "A direction" ⇑ (↓⇡) by Hini. satisfying a condition given by Formula 45 immediately before recording. In this case, the first layer is left in the recorded state (CONDITION 1 in Fig. 33 or 34).

This CONDITION 1 is held immediately before recording. In this case, the bias field (Hb) is applied in a direction ↓.

A low-temperature cycle of this medium will be described below with reference to Fig. 33.

—— Low-temperature Cycle ——

A low-level laser beam is radiated on the medium in CONDITION 1 to increase the medium temperature to $T_L$. Since $T_L$ is almost equal to the Curie temperature $T_{C1}$ of the first layer, magnetization of the first layer disappears. In this state, since $H_{C2}$ is still large at this temperature, the magnetization of the second layer will not be reversed by ↓ Hb. This condition corresponds to CONDITION $2_L$.

When the irradiated portion falls outside the spot region of the laser beam in CONDITION $2_L$, the medium temperature begins to fall. When the medium temperature is decreased slightly below $T_{C1}$, the RE and TM spins (↓⇡) of the second layer influence those of the first layer due to the exchange coupling force. More specifically, a force acts to respectively align RE spins (↓) and TM spins (⇡). As a result, magnetization ↓⇡, i.e., ⇑ overcomes ↓ Hb, and appears in the first layer. This condition corresponds to CONDITION $3_L$.

CONDITION $3_L$ is maintained even when the medium temperature is decreased to the room temperature. As a result, the magnetization of the first layer is aligned in the "A direction" ⇑ regardless of the previously recorded bit, and a bit in the "A direction" ⇑ is formed.

A high-temperature cycle of this medium will be described below with reference to Fig. 34.

—— High-temperature Cycle ——

A high-level beam is radiated on the medium in CONDITION 1. As a result, when the medium temperature is increased to $T_L$, since $T_L$ is almost equal to the Curie temperature $T_{C1}$ of the first layer, the magnetization of the first layer disappears (CONDITION $2_H$).

When the beam radiation further continues and the medium temperature reaches $T_H$, since the temperature $T_H$ of the second layer is almost equal to the Curie temperature $T_{C2}$, the magnetization of the second layer also disappears. This condition corresponds to CONDITION $3_H$.

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization ⇓ (⇅) appears due to ↓ Hb. However, since the temperature is still higher than $T_{C1}$, no magnetization appears in the first layer. This condition corresponds to CONDITION $4_H$.

When the medium temperature is further decreased slightly below $T_{C1}$, magnetization also appears in the first layer. In this case, the exchange coupling force from the second layer (⇅) acts to respectively align RE spins (↑) and TM spins (↓). For this reason, magnetization ⇅, i.e., ⇓ appears in the first layer. This condition corresponds to CONDITION $5_H$.

The medium temperature is then decreased from the temperature in CONDITION $5_H$ to the room temperature. Since $H_{C1}$ at the room temperature is sufficiently large, the magnetization of the first layer is stably held. Thus, a bit in the "non-A direction" ⇓ is formed.

The principle of the over-write operation will be described in detail below using a specific medium No. 8 belonging to a recording medium of Class 8 (P type, Quadrant IV, Type 2) shown in Table 1.

This medium No. 8 has a relation given by Formula 46:

$$T_R < T_{C1} \approx T_L \approx T_{comp.2} < T_{C2} \approx T_H \qquad \text{Formula 46}$$

Fig. 35 shows this relation as a graph.

A condition for reversing only the magnetization of the second layer by the initial field Hini. without reversing that of the first layer at the room temperature $T_R$ is given by Formula 47. This medium No. 8 satisfies Formula 47:

$$H_{C1} > H_{C2} + \left| \frac{\sigma_w}{2M_{S1}t_1} - \frac{\sigma_w}{2M_{S2}t_2} \right| \qquad \text{Formula 47}$$

In this case, a condition for Hini. is represented by Formula 50. When Hini. disappears, the reversed magnetization of the second layer is influenced by that of the first layer due to the exchange coupling force. Conditions for maintaining the magnetization of the second layer without re-reversing it are given by Formulas 48 and 49. This medium No. 8 satisfies Formulas 48 and 49:

$$H_{C1} > \frac{\sigma_w}{2M_{S1}t_1} \qquad \text{Formula 48}$$

$$H_{C2} > \frac{\sigma_w}{2M_{S2}t_2} \qquad \text{Formula 49}$$

$$H_{C2} + \frac{\sigma_w}{2M_{S2}t_2} < |Hini.| < H_{C1} + \frac{\sigma_w}{2M_{S1}t_1} \qquad \text{Formula 50}$$

Magnetization of the second layer of the recording medium which satisfies the conditions given by Formulas 47 to 49 at the room temperature is aligned in, e.g., the "A direction" ⇑ (⇅) by Hini. satisfying a condition given by Formula 50 immediately before recording. In this case, the first layer is left in the recorded state (CONDITION 1 in Fig. 36 or 37).

This CONDITION 1 is held immediately before recording. In this case, the bias field (Hb) is applied in a direction ↑.

A low-temperature cycle of this medium will be described below with reference to Fig. 36.

—— Low-temperature Cycle ——

A low-level laser beam is radiated on the medium in CONDITION 1 to increase the medium temperature to $T_L$. Since $T_L$ is almost equal to the Curie temperature $T_{C1}$ of the first layer, magnetization of the first layer disappears. However, since $H_{C2}$ of the second layer is still large at this temperature, the magnetization of the second layer will not be reversed by ↑ Hb (CONDITION $2_L$).

When the irradiated portion falls outside the spot region of the laser beam in CONDITION $2_L$, the medium temperature begins to fall. When the medium temperature is decreased slightly below $T_{C1}$, the RE and TM spins (↑↓) of the second layer influence those of the first layer due to the exchange coupling force. More specifically, a force acts to respectively align RE spins (↑) and TM spins (↓). As a result, magnetization ↑↓, i.e., ⇓ overcomes ↑ Hb, and appears in the first layer. This condition corresponds to CONDITION $3_L$.

CONDITION $3_L$ is maintained even when the medium temperature is decreased to the room temperature. As a result, the magnetization of the first layer is aligned in the "non-A direction" ⇓ regardless of the previously recorded bit, and a bit in the "non-A direction" ⇓ is formed in the first layer.

A high-temperature cycle of this medium will be described below with reference to Fig. 37.

—— High-temperature Cycle ——

A high-level laser beam is radiated on the medium in CONDITION 1. As a result, when the medium temperature is increased to $T_L$, since $T_L$ is almost equal to the Curie temperature $T_{C1}$ of the first layer, magnetization of the first layer disappears (CONDITION $2_H$).

When beam radiation is further continued, and the medium temperature slightly exceeds $T_{comp.2}$, the relationship between the strengths of RE and TM spins is reversed (↑↓ → ↑↓) although the directions of the RE spin (↑) and the TM spin (↓) are left unchanged. As a result, the magnetization of the second layer is reversed to the "non-A direction" ⇓. This condition corresponds to CONDITION $3_H$.

However, since $H_{C2}$ is still large at this temperature, the magnetization ⇓ of the second layer will not be reversed by ↑ Hb. Assume that the beam radiation further continues, and the temperature is further increased and reaches $T_H$. Since $T_H$ is almost equal to $T_{C2}$, the magnetization of the second layer also disappears (CONDITION $4_H$).

When the irradiated portion falls outside the spot region of the laser beam in CONDITION $4_H$, the medium temperature begins to fall. When the medium temperature is decreased slightly below $T_{C2}$, magnetization appears in the second layer. In this case, magnetization ⇑ (↓↑) appears due to ↑ Hb. However, since the temperature is still higher than $T_{C1}$, no magnetization appears in the first layer. This condition corresponds to CONDITION $5_H$.

When the medium temperature is further decreased slightly below $T_{comp.2}$, the relationship between the strengths of RE and TM spins is reversed (↓↑ → ↓↑) although the directions of the RE spin (↓) and the TM spin (↑) are left unchanged. As a result, the magnetization of the second layer is reversed to the "non-A direction" ⇓. In this condition, since $H_{C2}$ has already been considerably large, the magnetization ⇓ of the second layer will not be reversed by ↑ Hb. Since the temperature is still higher than $T_{C1}$, no magnetization appears in the first layer yet. This condition corresponds to CONDITION $6_H$.

When the temperature is further decreased slightly below $T_{C1}$, magnetization also appears in the first layer. In this case, the magnetization (↓↑) of the second layer influences the first layer due to the exchange coupling force. More specifically, a force acts to respectively align the RE spins (↓) and TM spins (↑). As a result, magnetization ↓↑ (⇑) appears in the first layer (CONDITION $7_H$).

The medium temperature is then decreased from the temperature in CONDITION $7_H$ to the room temperature. Since $H_{C1}$ at the room temperature is sufficiently large, the magnetization of the first layer is stably held. Thus, a bit in the "A direction" ⇑ is formed.

The principle of the over-write operation will be described in detail below using a specific medium No. 9 belonging to a recording medium of Class 9 (A type, Quadrant IV, Type 4) shown in Table 1.

This medium No. 9 has a relation given by Formula 51:

$$T_R < T_{C1} \approx T_L < T_{C2} \approx T_H \qquad \text{Formula 51}$$

Fig. 38 shows this relation as a graph.

A condition for reversing only the magnetization of the second layer by the initial field Hini. without reversing that of the first layer at the room temperature $T_R$ is given by Formula 52. This medium No. 9 satisfies Formula 52:

$$H_{C1} > H_{C2} + \left| \frac{\sigma_w}{2M_{S1}t_1} - \frac{\sigma_w}{2M_{S2}t_2} \right| \qquad \text{Formula 52}$$

In this case, a condition for Hini. is represented by Formula 55. When Hini. disappears, the reversed magnetization of the second layer is influenced by that of the first layer due to the exchange coupling force. Conditions for maintaining the magnetization of the second layer without re-reversing it are given by Formulas 53 and 54. This medium No. 9 satisfies Formulas 53 and 54:

$$H_{C1} > \frac{\sigma_w}{2M_{S1}t_1} \qquad \text{Formula 53}$$

$$H_{C2} > \frac{\sigma_w}{2M_{S2}t_2} \qquad \text{Formula 54}$$

$$H_{C2} + \frac{\sigma_w}{2M_{S2}t_2} < |Hini.| < H_{C1} + \frac{\sigma_w}{2M_{S1}t_1} \qquad \text{Formula 55}$$

Magnetization of the second layer of the recording medium which satisfies the conditions given by Formulas 52 to 54 at the room temperature is aligned in, e.g., the "A direction" ⇑ (⇅) by Hini. satisfying a condition given by Formula 55 immediately before recording. In this case, the first layer is left in the recorded state (CONDITION 1 in Fig. 39 or 40).

This CONDITION 1 is held immediately before recording. In this case, the bias field (Hb) is applied in a direction ↓.

A low-temperature cycle of this medium will be described below with reference to Fig. 39.

—— Low-temperature Cycle ——

A low-level laser beam is radiated on the medium in CONDITION 1 to increase the medium temperature to $T_L$. Since $T_L$ is almost equal to the Curie temperature $T_{C1}$ of the first layer, magnetization of the first layer disappears. In this state, since $H_{C2}$ is still large at this temperature, the magnetization ⇑ of the second layer will not be reversed by ↓ Hb. This condition corresponds to CONDITION $2_L$.

When the irradiated portion falls outside the spot region of the laser beam in CONDITION $2_L$, the medium temperature begins to fall. When the medium temperature is slightly decreased below $T_{C1}$, the RE and TM spins (⇅) of the second layer influence those of the first layer due to the exchange coupling force. More specifically, the exchange coupling acts to respectively align RE spins (↑) and TM spins (↓). As a result, magnetization ⇅, i.e., ⇓ appears in the first layer. This condition corresponds to CONDITION $3_L$.

CONDITION $3_L$ is maintained even when the medium temperature is decreased to the room temperature. As a result, the magnetization of the first layer is aligned in the "non-A direction" ⇓ regardless of the previously recorded bit, and a bit in the "non-A direction" ⇓ is formed in the first layer.

A high-temperature cycle of this medium will be described below with reference to Fig. 40.

—— High-temperature Cycle ——

A high-level beam is radiated on the medium in CONDITION 1. As a result, when the medium temperature is increased to $T_L$, since $T_L$ is almost equal to the Curie temperature $T_{C1}$ of the first layer, the magnetization of the first layer disappears (CONDITION $2_H$).

When the beam radiation further continues and the medium temperature reaches $T_H$, since the temperature $T_H$ of the medium, in particular, of the second layer, is almost equal to $T_{C2}$, the magnetization of the second layer also disappears. This condition corresponds to CONDITION $3_H$.

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization ⇓ (⇅) appears due to ↓ Hb. However, since this temperature is still higher than $T_{C1}$, no magnetization appears in the first layer. This condition corresponds to CONDITION $4_H$.

When the medium temperature is further decreased slightly below $T_{C1}$, magnetization appears in the first layer. In this case, the exchange coupling force from the second layer (⇅) acts to respectively align RE spins (↓) and TM spins (↑). For this reason, magnetization ⇅, i.e., ⇑ overcomes ↓ Hb, and appears in the first layer. This condition corresponds to CONDITION $5_H$.

The medium temperature is then decreased from the temperature in CONDITION $5_H$ to the room temperature. Since $H_{C1}$ at the room temperature is sufficiently large, the magnetization of the first layer is stably held. Thus, a bit in the "A direction" ⇑ is formed.

The principle of an over-write operation will be described in detail below using a medium No. 1-2 belonging to a recording medium of Class 1 (P type, Quadrant I, Type 1) shown in Table 1.

The medium No. 1-2 satisfies Formula 11-2: and also satisfies Formula 11-3:

$$T_R < T_{comp.1} < T_L < T_H \lesssim T_{C1} \lesssim T_{C2} \quad \text{...Formula 11-2}$$

and also satisfies Formula 11-3:

$$T_{comp.2} < T_{C1} \quad \text{Formula 11-3}$$

For the sake of simplicity, a medium having a relation of $T_H < T_{C1} < T_{C2}$ will be described below. The temperature $T_{comp.2}$ may be higher than, equal to, or lower than $T_L$. For the sake of simplicity, $T_{comp.2}$ is set to satisfy $T_L < T_{comp.2}$ in the following description. Fig. 41 shows the above-mentioned relationship as a graph. Note that thin curves represent characteristics of the first layer, and bold curves represent those of the second layer.

A condition that reverses the direction of magnetization of the second layer without reversing that of the first layer (recording layer) by the initial field Hini. at the room temperature $T_R$ is represented by Formula 12. This medium No. 1-2 satisfies Formula 12:

$$H_{C1} > H_{C2} + \frac{\sigma_w}{2M_{S1}t_1} + \frac{\sigma_w}{2M_{S2}t_2} \quad \text{Formula 12}$$

At this time, a condition for Hini. is represented by Formula 15. If Hini. disappears, the directions of magnetization of the first and second layers are influenced to each other due to the interface wall energy. The conditions that can hold the directions of magnetization of the first and second layers without reversing them are represented by Formulas 13 and 14. The medium No. 1-2 satisfies Formulas 13 and 14:

$$H_{C1} > \frac{\sigma_w}{2M_{S1}t_1} \quad \text{Formula 13}$$

$$H_{C2} > \frac{\sigma_w}{2M_{S2}t_2} \quad \text{Formula 14}$$

The magnetization of the second layer of the recording medium which satisfies conditions given by Formulas 12 to 14 at the room temperature is aligned in, e.g., the "A direction" ⇑ (↿) by Hini. which satisfies following Formula 15 immediately before recording:

$$H_{C2} + \frac{\sigma_w}{2M_{S2}t_2} < |Hini.| < H_{C1} - \frac{\sigma_w}{2M_{S1}t_1} \quad \text{Formula 15}$$

At this time, the first layer is left in the previous recorded state (CONDITION 1a or 1b in Fig. 42 or 43).

CONDITIONs 1a and 1b are held immediately before recording.

Assume that the bias field Hb is applied in the "A direction" ↑.

Note that it is difficult to focus the bias field Hb to the same range as a radiation region (spot region) of the laser beam as well as normal magnetic fields. When a medium has a disk shape, recorded data (bit) is influenced by the field Hini. during one revolution, and CONDITION 1a or 1b appears again. The bit passes a portion near the laser beam radiation region (spot region). At this time, the bit in CONDITION 1a or 1b is influenced by a bias field Hb apply means since the bit approaches it. In this case, if the direction of magnetization of the first layer of the bit in CONDITION 1a having the direction of magnetization opposite to that of Hb is reversed by Hb, data which has been recorded one revolution before is lost. A condition for preventing this is given by:

$$H_{C1} > Hb + \frac{\sigma_w}{2M_{S1}t_1} \qquad \text{Formula 15-2}$$

The disk-like medium must satisfy this formula at the room temperature. In other words, a condition for determining Hb is expressed by Formula 15-2.

A low-temperature cycle of this medium will be described below with reference to Fig. 42.

—— Low-temperature Cycle ——

A low-level laser beam is radiated on the medium in CONDITION 1a or 1b, and a medium temperature is increased beyond $T_{comp.1}$. Thus, the medium type is shifted from P type to A type. Although the directions of the RE and TM spins of the first layer are left unchanged, the relationship between their strengths is reversed. As a result, the direction of magnetization of the first layer is reversed (CONDITION 1a → CONDITION $2_{La}$, CONDITION 1b → CONDITION $2_{Lb}$).

The laser beam is kept radiated, and the medium temperature then reaches $T_L$. Thus, the following relation is established:

$$H_{C1} + Hb < \frac{\sigma_w}{2M_{S1}t_1} \qquad \text{Formula 15-3}$$

Even if Hb ↑ is present, CONDITION $2_{La}$ transits to CONDITION $3_L$. Meanwhile, since CONDITION $2_{Lb}$ remains the same regardless of Hb ↑, it becomes the same CONDITION $3_L$.

In this state, when the irradiated portion falls outside the spot region of the laser beam, the medium temperature begins to be decreased. When the medium temperature is decreased below $T_{comp.1}$, the medium type is restored from A type to original P type. The relationship between the strengths of the RE and TM spins of the first layer is reversed (↑⇣ → ↑⇣). As a result, the direction of magnetization of the first layer is reversed to the "A direction" ⇑ (CONDITION $4_L$).

CONDITION $4_L$ is held even when the medium temperature is decreased to the room temperature.

As a result, a bit in the "A direction" ⇑ is formed in the first layer.

A high-temperature cycle of this medium will be described below with reference to Fig. 43.

—— High-temperature Cycle ——

When a high-level laser beam is radiated on the medium in CONDITION 1a or 1b, the medium temperature is increased to the low temperature $T_L$ via $T_{comp.1}$. As a result, the same CONDITION $2_H$ as CONDITION $3_L$ is established.

Upon radiation of the high-level laser beam, the medium temperature is further increased. When the medium temperature exceeds $T_{comp.2}$ of the second layer, the medium type is shifted from A type to P type. Although the directions of the RE and TM spins of the second layer are left unchanged, the relationship between their strengths is reversed (↑⇣ → ↑⇣). For this reason, the direction of magnetization of the second layer is reversed, i.e., the "non-A-directed" ⇓ magnetization is attained (CONDITION $3_H$).

However, since $H_{C2}$ is still large at this temperature, the magnetization of the second layer will not be reversed by ↑ Hb. When the medium temperature is further increased and reaches $T_H$, the coercivities of the first and second layers are decreased since $T_H$ is near the Curie temperature. As a result, the medium satisfies one of conditions (1) to (3) given by the following formulas:

$$(1) \qquad |H_{C1} - H_{C2}| < \frac{\sigma_w}{2M_{S1}t_1} + \frac{\sigma_w}{2M_{S2}t_2}$$

$$\text{and } Hb > \frac{M_{S1}t_1 H_{C1} + M_{S2}t_2 H_{C2}}{M_{S1}t_1 + M_{S2}t_2}$$

$$(2) \qquad Hb > H_{C1} + \frac{\sigma_w}{2M_{S1}t_1}$$

$$\text{and } Hb > H_{C2} - \frac{\sigma_w}{2M_{S2}t_2}$$

$$(3) \qquad Hb > H_{C1} - \frac{\sigma_w}{2M_{S1}t_1}$$

$$\text{and } Hb > H_{C2} + \frac{\sigma_w}{2M_{S2}t_2}$$

For this reason, the directions of magnetization of the two layers are reversed at almost the same time, and follow the direction of Hb. This condition corresponds to CONDITION $4_H$.

When the irradiated portion falls outside the spot region of the laser beam in this condition, the medium temperature begins to fall. When the medium temperature is decreased below $T_{comp.2}$, the medium type is shifted from P type to A type. Although the directions of the RE and TM spins are left unchanged, the relationship between their strengths of the RE and TM spins of the first layer is reversed ($\downarrow\uparrow \rightarrow \downarrow\uparrow$). As a result, the direction of magnetization of the second layer is reversed, i.e., from $\Uparrow$ to the "non-A direction" $\downarrow$ (CONDITION $5_H$).

When the medium temperature is further decreased from the temperature in CONDITION $5_H$ below $T_{comp.1}$, the medium type is restored from A type to original P type. The relationship between the strengths of the RE and TM spins of the first layer is then reversed ($\downarrow\uparrow \rightarrow \downarrow\uparrow$). As a result, the direction of magnetization of the first layer is reversed to the "non-A direction" $\downarrow$ (CONDITION $6_H$).

The medium temperature is then decreased from the temperature in CONDITION $6_H$ to the room temperature. Since $H_{C1}$ at the room temperature is sufficiently large (Formula 15-4), the magnetization $\downarrow$ of the first layer will not be reversed by $\uparrow$ Hb, and CONDITION $6_H$ is maintained.

$$Hb < H_{C1} + \frac{\sigma_w}{2M_{S1}t_1} \qquad \text{Formula 15-4}$$

In this manner, a bit in the "non-A direction" $\downarrow$ is formed in the first layer.

The principle of the over-write operation will be described in detail below using a medium No. 4-2 belonging to a recording medium of Class 4 (P type, Quadrant I, Type 4) shown in Table 1.

This medium No. 4-2 has a relation given by Formula 26-2:

$$T_R < T_L < T_H \lesssim T_{C1} \lesssim T_{C2} \qquad \text{...Formula 26-2}$$

For the sake of simplicity, $T_H < T_{C1} < T_{C2}$ in the following description. Fig. 44 shows this relation as a graph.

A condition for reversing only the direction of magnetization of the second layer by the initial field Hini. at the room temperature $T_R$ without reversing that of the first layer is represented by Formula 27. The medium No. 4-2 satisfies Formula 27:

$$H_{C1} > H_{C2} + \frac{\sigma_w}{2M_{S1}t_1} + \frac{\sigma_w}{2M_{S2}t_2} \qquad \text{Formula 27}$$

In this case, a condition for Hini. is represented by Formula 30. When Hini. disappears, the directions of magnetization of the first and second layers are influenced by the exchange coupling force. Conditions for maintaining the directions of magnetization of the first and second layers without reversing them are given by Formulas 28 and 29. This medium No. 4-2 satisfies Formulas 28 and 29:

$$H_{C1} > \frac{\sigma_w}{2M_{S1}t_1} \qquad \text{Formula 28}$$

$$H_{C2} > \frac{\sigma_w}{2M_{S2}t_2} \qquad \text{Formula 29}$$

The magnetization of the second layer of the recording medium which satisfies the conditions given by Formulas 27 to 29 at the room temperature is aligned in, e.g., the "A direction" ⇑ (⇃) by Hini. which satisfies Formula 30 immediately before recording:

$$H_{C2} + \frac{\sigma_w}{2M_{S2}t_2} < |Hini.| < H_{C1} - \frac{\sigma_w}{2M_{S1}t_1} \qquad \text{Formula 30}$$

At this time, the first layer is left in the recorded state (CONDITION 1a or 1b in Fig. 45 or 46). CONDITION 1a or 1b is maintained immediately before recording.

The bias field Hb is assumed to be applied in the "non-A direction" ↓.

When the medium has a disk shape, a condition for inhibiting magnetization of a recorded bit (in particular, a bit in CONDITION 1b in which the direction of magnetization of the first layer is opposite to the direction of Hb) from being reversed by Hb when it approaches an Hb apply means is represented by Formula 30-2:

$$Hb < H_{C1} + \frac{\sigma_w}{2M_{S1}t_1} \qquad \text{Formula 30-2}$$

The disk medium must satisfy this formula at the room temperature. A condition for inhibiting the initialized second layer from being reversed by Hb when it approaches the Hb apply means is represented by Formula 30-3:

$$Hb < H_{C2} - \frac{\sigma_w}{2M_{S2}t_2} \qquad \text{Formula 30-3}$$

In other words, conditions for determining Hb are Formulas 30-2 and 30-3.

A low-temperature cycle of this medium will be described below with reference to Fig. 45.

—— Low-temperature Cycle ——

A low-level laser beam is radiated on the medium in CONDITION 1a or 1b, and the medium temperature is increased to $T_L$. Thus, a condition which can satisfy the following relation is established, and CONDITION 1a transits to CONDITION $2_L$:

$$H_{C1} + Hb < \frac{\sigma_w}{2M_{S1}t_1} \qquad \text{Formula 30-4}$$

On the other hand, since CONDITION 1b is left unchanged, it becomes the same CONDITION $2_L$.

In CONDITION $2_L$, when the irradiated portion falls outside the spot region of the laser beam, the medium temperature begins to be decreased.

Even when the medium temperature is decreased to the room temperature, CONDITION $2_L$ is maintained since $H_{C1}$ at the room temperature is sufficiently large (see Formula 30-5).

$$Hb < H_{C1} + \frac{\sigma_w}{2M_{S1}t_1} \qquad \text{Formula 30-5}$$

As a result, a bit in the "A direction" ⇑ is formed in the first layer.

A high-temperature cycle of this medium will be described below with reference to Fig. 46.

—— High-temperature Cycle ——

When a high-level laser beam is radiated on the medium in CONDITION 1a or 1b, the medium temperature is increased to the low temperature $T_L$. As a result, CONDITION $2_H$ equal to CONDITION $2_L$ in the low-temperature cycle is established.

When the beam radiation continues and the medium temperature is further increased up to $T_H$, the coercivity is decreased since $T_H$ is closer to the Curie temperatures of the first and second layers. As a result, the medium satisfies one of conditions (1) to (3) given by the following formulas:

$$(1) \qquad |H_{C1}-H_{C2}| < \frac{\sigma_w}{2M_{S1}t_1} + \frac{\sigma_w}{2M_{S2}t_2}$$

$$\text{and } Hb > \frac{M_{S1}t_1H_{C1} + H_{S2}t_2H_{C2}}{M_{S1}t_1 + M_{S2}t_2}$$

$$(2) \qquad Hb > H_{C1} + \frac{\sigma_w}{2M_{S1}t_1}$$

$$\text{and } Hb > H_{C2} - \frac{\sigma_w}{2M_{S2}t_2}$$

$$(3) \qquad Hb > H_{C1} - \frac{\sigma_w}{2M_{S1}t_1}$$

$$\text{and } Hb > H_{C2} + \frac{\sigma_w}{2M_{S2}t_2}$$

For this reason, the directions of magnetization of the two layers are almost simultaneously reversed to follow the direction of Hb. This condition corresponds to CONDITION $3_H$.

When the irradiated portion falls outside the spot region of the laser beam in CONDITION $3_H$, the medium temperature is begins to be decreased. The medium temperature is then decreased to the room temperature. However, CONDITION $3_H$ is left unchanged.

Thus, a bit in the "non-A direction" ⇃ is formed in the first layer.

The principle of the over-write operation will be described in detail below using a medium No. 5-2 belonging to a recording medium of Class 5 (A type, Quadrant II, Type 3) shown in Table 1.

This medium No. 5-2 has a relation given by Formula 31-2:

$$T_R < T_{comp.1} < T_L < T_H \lessapprox T_{C1} \lessapprox T_{C2} \qquad \text{...Formula 31-2}$$

For the sake of simplicity, $T_H < T_{C1} < T_{C2}$ in the following description. Fig. 47 shows this relation as a graph.

A condition for reversing only the direction of magnetization of the second layer by the initial field Hini. at the room temperature $T_R$ without reversing that of the first layer is represented by Formula 32. This medium No. 5-2 satisfies Formula 32:

$$H_{C1} > H_{C2} + \left| \frac{\sigma_w}{2M_{S1}t_1} - \frac{\sigma_w}{2M_{S2}t_2} \right| \qquad \text{Formula 32}$$

In this case, a condition for Hini. is represented by Formula 35. when Hini. disappears, the directions of magnetization of the first and second layers are influenced to each other due to the interface wall energy. Conditions for maintaining the directions of magnetization of the first and second layers without reversing them are represented by Formulas 33 and 34. This medium No. 5-2 satisfies Formulas 33 and 34:

$$H_{C1} > \frac{\sigma_w}{2M_{S1}t_1} \qquad \text{Formula 33}$$

$$H_{C2} > \frac{\sigma_w}{2M_{S2}t_2} \qquad \text{Formula 34}$$

Magnetization of the second layer of the recording medium which satisfies the conditions given by Formulas 32 to 34 at the room temperature is aligned in, e.g., the "A direction" ⇑ (↓⇡) by Hini. which satisfies Formula 35 immediately before recording:

$$H_{C2} + \frac{\sigma_w}{2M_{S2}t_2} < |Hini.| < H_{C1} + \frac{\sigma_w}{2M_{S1}t_1} \qquad \text{Formula 35}$$

At this time, the first layer is left in the recorded state (CONDITION 1a or 1b in Fig. 48 or 49). This CONDITION 1a or 1b is maintained immediately before recording.

The bias field Hb is assumed to be applied in the "non-A direction" ⇓.

When the medium has a disk shape, a condition for inhibiting magnetization of a previously recorded bit (in particular, a bit in CONDITION 1a in which the direction of magnetization of the first layer is opposite to the direction of Hb) from being reversed by Hb when it approaches an Hb apply means is represented by Formula 35-2:

$$Hb < H_{C1} - \frac{\sigma_w}{2M_{S1}t_1} \qquad \text{Formula 35-2}$$

The disk medium must satisfy this formula at the room temperature. A condition for inhibiting the initialized second layer from being reversed by Hb when it approaches the Hb apply means is represented by Formula 35-3:

$$Hb < H_{C2} - \frac{\sigma_w}{2M_{S2}t_2} \qquad \text{Formula 35-3}$$

In other words, conditions for determining Hb are Formulas 35-2 and 35-3.

A low-temperature cycle of this medium will be described below with reference to Fig. 48.

—— Low-temperature Cycle ——

A low-level laser beam is radiated on the medium in CONDITION 1a or 1b, and the medium temperature is increased beyond $T_{comp.1}$. The medium type is changed from A type to P type. The relationship between the strengths of the RE and TM spins of the first layer is reversed although their directions are left unchanged. For this reason, the direction of magnetization of the first layer is reversed (CONDITION 1a → CONDITION $2_{La}$, CONDITION 1b → CONDITION $2_{Lb}$).

When the medium temperature is further increased from this state up to $T_L$, the following formula is satisfied:

$$H_{C1} + H_b < \frac{\sigma_w}{2M_{S1}t_1} \qquad \text{Formula 35-4}$$

Thus, CONDITION $2_{La}$ transits to CONDITION $3_L$.

Meanwhile, since CONDITION $2_{Lb}$ is left unchanged, it becomes the same CONDITION $3_L$.

When the irradiated portion falls outside the spot region of the laser beam in this condition, the medium temperature begins to be decreased. When the medium temperature is decreased below $T_{comp.1}$, the medium type is restored from P type to original A type. The relationship between the strengths of RE and TM spins of the first layer is reversed (↓⇡ → ↓⇣). As a result, the direction of magnetization of the first layer is reversed to the "non-A direction" ↓. This condition corresponds to CONDITION $4_L$.

The medium temperature is then decreased to the room temperature, and CONDITION $4_L$ is maintained.

As a result, a bit in the "non-A direction" ⇓ is formed in the first layer.

A high-temperature cycle of this medium will be described below with reference to Fig. 49.

—— High-temperature Cycle ——

When a high-level laser beam is radiated on the medium in CONDITION 1a or 1b, the medium temperature is increased to the low temperature $T_L$ via $T_{comp.1}$. As a result, CONDITION $2_H$ equal to CONDITION $3_L$ is established.

The beam radiation continues and the medium temperature then reaches $T_H$. The coercivities of the two layers are decreased since $T_H$ is closer to the Curie temperatures of the first and second layers. As a result, the medium satisfies one of conditions (1) to (3) given by the following formulas:

$$(1)\qquad |H_{C1}-H_{C2}| < \frac{\sigma_w}{2M_{S1}t_1} + \frac{\sigma_w}{2M_{S2}t_2}$$

$$\text{and } Hb > \frac{M_{S1}t_1H_{C1} + M_{S2}t_2H_{C2}}{M_{S1}t_1 + M_{S2}t_2}$$

$$(2)\qquad Hb > H_{C1} + \frac{\sigma_w}{2M_{S1}t_1}$$

$$\text{and } Hb > H_{C2} - \frac{\sigma_w}{2M_{S2}t_2}$$

$$(3)\qquad Hb > H_{C1} - \frac{\sigma_w}{2M_{S1}t_1}$$

$$\text{and } Hb > H_{C2} + \frac{\sigma_w}{2M_{S2}t_2}$$

For this reason, the directions of magnetization of the two layers are almost simultaneously reversed to follow the direction of Hb. This condition corresponds to CONDITION $3_H$.

When the irradiated portion falls outside the spot region of the laser beam in CONDITION $3_H$, the medium temperature begins to be decreased.

When the medium temperature is decreased below $T_{comp.1}$, the medium type is restored from P type to original A type. The relationship between the strengths of TM and RE spins of the first layer is reversed (⇣ → ⇡). For this reason, the direction of magnetization of the first layer is reversed to the "A direction" ⇑ (CONDITION $4_H$).

The medium temperature is decreased from the temperature in CONDITION $4_H$ to the room temperature. $H_{C1}$ at the room temperature is sufficiently large, and Formula 35-5 is satisfied:

$$Hb < H_{C1} + \frac{\sigma_w}{2M_{S1}t_1} \qquad \text{Formula 35-5}$$

Therefore, the magnetization of the first layer is stably maintained in CONDITION $4_H$.

Thus, a bit in the "A direction" is formed in the first layer.

The principle of the over-write operation will be described in detail below using a medium No. 7-2 belonging to a recording medium of Class 7 (P type, Quadrant III, Type 4) shown in Table 1.

This medium No. 7-2 has a relation given by Formula 41-2:

$$T_R < T_L < T_H \lesssim T_{C1} \lesssim T_{C2} \qquad \text{...Formula 41-2}$$

For the sake of simplicity, $T_H < T_{C1} < T_{C2}$ in the following description. Fig. 50 shows this relation as a graph.

A condition for reversing only the direction of magnetization of the second layer by the initial field Hini. at the room temperature $T_R$ without reversing that of the first layer is represented by Formula 42. This medium No. 7-2 satisfies Formula 42:

$$H_{C1} > H_{C2} + \frac{\sigma_w}{2M_{S1}t_1} + \frac{\sigma_w}{2M_{S2}t_2} \qquad \text{Formula 42}$$

A condition for Hini. at this time is given by Formula 45. When Hini. disappears, the directions of magnetization of the first and second layers influence to each other due to the interface wall energy. Conditions for maintaining the directions of magnetization of the first and second layers without reversing them are represented by Formulas 43 and 44. This medium No. 7-2 satisfies Formulas 43 and 44:

$$H_{C1} > \frac{\sigma_w}{2M_{S1}t_1} \qquad \text{Formula 43}$$

$$H_{C2} > \frac{\sigma_w}{2M_{S2}t_2} \qquad \text{Formula 44}$$

The magnetization of the second layer of the recording medium which satisfies Formulas 42 to 44 at the room temperature is aligned in, e.g., the "A direction" ⇑ (⁝) by Hini. which satisfies the condition given by Formula 45 immediately before recording:

$$H_{C2} + \frac{\sigma_w}{2M_{S2}t_2} < |Hini.| < H_{C1} - \frac{\sigma_w}{2M_{S1}t_1} \qquad \text{Formula 45}$$

At this time, the first layer is left in the recorded state (CONDITION 1a or 1b in Fig. 51 or 52). CONDITION 1a or 1b is maintained immediately before recording.

The bias field Hb is assumed to be applied in the "non-A direction" ↓.

When the medium has a disk shape, a condition for inhibiting magnetization of a recorded bit (in particular, a bit in CONDITION 1b in which the direction of magnetization of the first layer is opposite to the direction of Hb) from being reversed by Hb when it approaches an Hb apply means is represented by Formula 45-2:

$$Hb < H_{C1} + \frac{\sigma_w}{2M_{S1}t_1} \qquad \text{Formula 45-2}$$

The disk medium must satisfy this formula at the room temperature. A condition for inhibiting the initialized second layer from being reversed by Hb when it approaches the Hb apply means is represented by Formula 45-3:

$$Hb < H_{C2} - \frac{\sigma_w}{2M_{S2}t_2} \qquad \text{Formula 45-3}$$

In other words, conditions for determining Hb are Formulas 45-2 and 45-3.

A low-temperature cycle of this medium will be described below with reference to Fig. 51.

—— Low-temperature Cycle ——

A low-level laser beam is radiated on the medium in CONDITION 1a or 1b, and the medium temperature is increased to $T_L$. Thus, the following condition is satisfied:

$$H_{C1} + Hb < \frac{\sigma_w}{2M_{S1}t_1} \qquad \text{Formula 45-4}$$

Thus, CONDITION 1a transits to CONDITION $2_L$. Meanwhile, CONDITION 1b is maintained, and becomes the same CONDITION $2_L$.

When the irradiated portion falls outside the spot region of the laser beam in CONDITION $2_L$, the medium temperature begins to be decreased.

Since $H_{C1}$ is sufficiently large at the room temperature (see Formula 45-2), CONDITION $2_L$ can be maintained at the room temperature.

As a result, a bit in the "A direction" ⇑ is formed in the first layer.

A high-temperature cycle of this medium will be described below with reference to Fig. 52.

—— High-temperature Cycle ——

A high-level laser beam is radiated on the medium in CONDITION 1a or 1b, and the medium temperature is increased to the low temperature $T_L$. As a result, CONDITION $2_H$ equal to CONDITION $2_L$ is established.

The beam radiation continues and the medium temperature then reaches $T_H$. Since $T_H$ is closer to the Curie temperatures of the first and second layers, the medium satisfies one of conditions (1) to (3) given by the following formulas:

$$(1) \qquad |H_{C1}-H_{C2}| < \frac{\sigma_w}{2M_{S1}t_1} + \frac{\sigma_w}{2M_{S2}t_2}$$

$$\text{and } Hb > \frac{M_{S1}t_1 H_{C1} + M_{S2}t_2 H_{C2}}{M_{S1}t_1 + M_{S2}t_2}$$

$$(2) \qquad Hb > H_{C1} + \frac{\sigma_w}{2M_{S1}t_1}$$

$$\text{and } Hb > H_{C2} - \frac{\sigma_w}{2M_{S2}t_2}$$

$$(3) \qquad Hb > H_{C1} - \frac{\sigma_w}{2M_{S1}t_1}$$

$$\text{and } Hb > H_{C2} + \frac{\sigma_w}{2M_{S2}t_2}$$

For this reason, the directions of magnetization of the two layers are almost simultaneously reversed to follow the direction of ⇓ Hb. This condition corresponds to CONDITION $3_H$.

When the irradiated portion falls outside the spot region of the laser beam in CONDITION $3_H$, the medium temperature begins to be decreased.

The medium temperature is then returned to the room temperature. However, CONDITION $3_H$ is left unchanged.

As a result, a bit in the "non-A direction" ⇓ is formed in the first layer.

The principle of the over-write operation will be described in detail below using a medium No. 8-2 belonging to a recording medium of Class 8 (A type, Quadrant IV, Type 2) shown in Table 1.

This medium No. 8-2 has a relation given by Formula 46-2:

$$T_R < T_L < T_H \lesssim T_{C1} \lesssim T_{C2} \qquad \text{...Formula 46-2}$$

For the sake of simplicity, $T_H < T_{C1} < T_{C2}$ in the following description. $T_{comp.2}$ may be lower than, equal to, or higher than $T_L$ and $T_{C1}$. However, for the sake of simplicity, $T_L < T_{comp.2} < T_{C1}$ in the following description. Fig. 53 shows this relation as a graph.

A condition for reversing only the direction of magnetization of the second layer by the initial field Hini. at the room temperature $T_R$ without reversing that of the first layer is represented by Formula 47. This medium No. 8-2 satisfies Formula 47:

$$H_{C1} > H_{C2} + \left| \frac{\sigma_w}{2M_{S1}t_1} - \frac{\sigma_w}{2M_{S2}t_2} \right| \quad \text{Formula 47}$$

A condition for Hini. at this time is given by Formula 50. When Hini. disappears, the directions of magnetization of the first and second layers are influenced to each other due to the interface wall energy. Conditions for maintaining the directions of magnetization of the first and second layers without reversing them are represented by Formulas 48 and 49. This medium No. 8-2 satisfies Formulas 48 and 49:

$$H_{C1} > \frac{\sigma_w}{2M_{S1}t_1} \quad \text{Formula 48}$$

$$H_{C2} > \frac{\sigma_w}{2M_{S2}t_2} \quad \text{Formula 49}$$

The magnetization of the second layer of the recording medium which satisfies the conditions given by Formulas 47 to 49 at the room temperature is aligned in, e.g., the "A direction" ⇑ (↓) by Hini. which satisfies the condition given by Formula 50 immediately before recording:

$$H_{C2} + \frac{\sigma_w}{2M_{S2}t_2} < |Hini.| < H_{C1} + \frac{\sigma_w}{2M_{S1}t_1} \quad \text{Formula 50}$$

At this time, the first layer is left in the recorded state (CONDITION 1a or 1b in Fig. 54 or 55). CONDITION 1a or 1b is maintained immediately before recording.

The bias field Hb is assumed to be applied in the "A direction" ↑.

When the medium has a disk shape, a condition for inhibiting magnetization of a bit recorded one revolution before (in particular, a bit in CONDITION 1b in which the direction of magnetization of the first layer is opposite to the direction of Hb) from being reversed by Hb when it approaches an Hb apply means is represented by Formula 50-2:

$$Hb < H_{C1} + \frac{\sigma_w}{2M_{S1}t_1} \quad \text{Formula 50-2}$$

The disk medium must satisfy this formula at the room temperature. In other words, a condition for determining Hb is given by Formula 50-2.

A low-temperature cycle of this medium will be described below with reference to Fig. 54.

—— Low-temperature Cycle ——

A low-level laser beam is radiated on the medium in CONDITION 1a or 1b, and the medium temperature is increased to $T_L$. Thus, the following condition is satisfied:

$$H_{C1} + Hb < \frac{\sigma_w}{2M_{S1}t_1} \quad \text{Formula 50-3}$$

Thus, CONDITION 1a transits to CONDITION $2_L$. Meanwhile, CONDITION 1b is maintained, and becomes the same CONDITION $2_L$.

When the irradiated portion falls outside the spot region of the laser beam in CONDITION $2_L$, the medium temperature begins to be decreased. Even when the medium temperature is decreased to the room temperature, CONDITION $2_L$ is maintained since $H_{C1}$ is sufficiently large (see Formula 50-2).

As a result, a bit in the "non-A direction" ↓ is formed in the first layer.

A high-temperature cycle of this medium will be described below with reference to Fig. 55.

—— High-temperature Cycle ——

A high-level laser beam is radiated, and the medium temperature is increased to the low temperature $T_L$. As a result, CONDITION $2_H$ equal to CONDITION $2_L$ in the low-temperature cycle is established.

Upon radiation of the high-level laser beam, the medium temperature is further increased. When the medium temperature exceeds $T_{comp.2}$, the medium type is shifted from A type to P type. The relationship between the strengths of RE spin (↑) and TM spin (↓) of the second layer is reversed (↑↓ → ↑↓) while their directions are left unchanged. As a result, the direction of magnetization of the second layer is reversed to the "non-A direction" ⇓. This condition corresponds to CONDITION $3_H$.

However, since $H_{C2}$ is still large at this temperature, the magnetization ⇓ of the second layer will not be reversed by ↑ Hb.

The beam radiation further continues, and the medium temperature is further increased up to $T_H$. Since the medium temperature is near the Curie temperatures of the first and second layers, the coercivities of the two layers are decreased. As a result, the medium satisfies one of conditions (1) to (3) given by the following formulas:

$$(1) \qquad |H_{C1}-H_{C2}| < \frac{\sigma_w}{2M_{S1}t_1} + \frac{\sigma_w}{2M_{S2}t_2}$$

$$\text{and } Hb > \frac{M_{S1}t_1H_{C1} + M_{S2}t_2H_{C2}}{M_{S1}t_1 + M_{S2}t_2}$$

$$(2) \qquad Hb > H_{C1} + \frac{\sigma_w}{2M_{S1}t_1}$$

$$\text{and } Hb > H_{C2} - \frac{\sigma_w}{2M_{S2}t_2}$$

$$(3) \qquad Hb > H_{C1} - \frac{\sigma_w}{2M_{S1}t_1}$$

$$\text{and } Hb > H_{C2} + \frac{\sigma_w}{2M_{S2}t_2}$$

For this reason, the directions of magnetization of the two layers are almost simultaneously reversed to follow the direction of ↑ Hb. This condition corresponds to CONDITION $4_H$.

When the irradiated portion falls outside the spot region of the laser beam in CONDITION $4_H$, the medium temperature begins to be decreased. When the medium temperature is decreased below $T_{comp.2}$, the medium type is restored from P type to original A type. The relationship between the strengths of RE spin (↓) and TM spin (↑) is reversed (↓↑ → ↓↑) while their directions are left unchanged. As a result, the direction of magnetization of the second layer is reversed to the "non-A direction" ⇓. In this condition, since $H_{C2}$ has already been considerably large, the magnetization ⇓ of the second layer will not be reversed by ↑ Hb. This condition corresponds to CONDITION $5_H$.

The medium temperature is then decreased from the temperature in CONDITION $5_H$ to the room temperature. However, CONDITION $5_H$ is left unchanged.

In this manner, a bit in the "A direction" ⇑ is formed in the first layer.

<u>BRIEF DESCRIPTION OF THE DRAWINGS</u>:

Fig. 1 is a schematic view for explaining a recording principle of a magnetooptical recording method;

Fig. 2 is a schematic view for explaining a reproduction principle of the magnetooptical recording method;

Figs. 3A and 3B are charts showing output waveforms of a laser beam;

Fig. 4A is a diagram showing a multilayered structure of a recording medium;

Fig. 4B is a diagram showing directions of magnetization of first and second layers of the medium;

Fig. 5 is a graph showing the relationship between a temperature and a coercivity of the medium;

Figs. 6 and 7 are diagrams showing changes in directions of magnetization in high- and low-temperature cycles in a first category of the basic invention;

Figs. 8 and 9 are diagrams showing changes in directions of magnetization shown in Figs. 6 and 7 for P- and A-type media, respectively;
Figs. 10 and 11 are diagrams showing changes in directions of magnetization in high- and low-temperature cycles in a second category of the basic invention;
Fig. 12 is a map showing media classified into four types;
Figs. 13A to 13D are graphs showing the relationship between temperatures and coercivities of media of Type I to Type IV;
Fig. 14 is a graph showing the relationship between a temperature and a coercivity of a medium No. 1 of the present invention;
Figs. 15 and 16 are diagrams showing changes in directions of magnetization in high- and low-temperature cycles of the medium No. 1;
Fig. 17 is a graph showing the relationship between a temperature and a coercivity of a medium No. 2 of the present invention;
Figs. 18 and 19 are diagrams showing changes in directions of magnetization in high- and low-temperature cycles of the medium No. 2;
Fig. 20 is a graph showing the relationship between a temperature and a coercivity of a medium No. 3 of the present invention;
Figs. 21 and 22 are diagrams showing changes in directions of magnetization in high- and low-temperature cycles of the medium No. 3;
Fig. 23 is a graph showing the relationship between a temperature and a coercivity of a medium No. 4 of the present invention;
Figs. 24 and 25 are diagrams showing changes in directions of magnetization in high- and low-temperature cycles of the medium No. 4;
Fig. 26 is a graph showing the relationship between a temperature and a coercivity of a medium No. 5 of the present invention;
Figs. 27 and 28 are diagrams showing changes in directions of magnetization in high- and low-temperature cycles of the medium No. 5;
Fig. 29 is a graph showing the relationship between a temperature and a coercivity of a medium No. 6 of the present invention;
Figs. 30 and 31 are diagrams showing changes in directions of magnetization in high- and low-temperature cycles of the medium No. 6;
Fig. 32 is a graph showing the relationship between a temperature and a coercivity of a medium No. 7 of the present invention;
Figs. 33 and 34 are diagrams showing changes in directions of magnetization in high- and low-temperature cycles of the medium No. 7;
Fig. 35 is a graph showing the relationship between a temperature and a coercivity of a medium No. 8 of the present invention;
Figs. 36 and 37 are diagrams showing changes in directions of magnetization in high- and low-temperature cycles of the medium No. 8;
Fig. 38 is a graph showing the relationship between a temperature and a coercivity of a medium No. 9 of the present invention;
Figs. 39 and 40 are diagrams showing changes in directions of magnetization in high- and low-temperature cycles of the medium No. 9;
Fig. 41 is a graph showing the relationship between a temperature and a coercivity of a medium No. 1-2 of the present invention;
Figs. 42 and 43 are diagrams showing changes in directions of magnetization in high- and low-temperature cycles of the medium No. 1-2;
Fig. 44 is a graph showing the relationship between a temperature and a coercivity of a medium No. 4-2 of the present invention;
Figs. 45 and 46 are diagrams showing changes in directions of magnetization in high- and low-temperature cycles of the medium No. 4-2;
Fig. 47 is a graph showing the relationship between a temperature and a coercivity of a medium No. 5-2 of the present invention;
Figs. 48 and 49 are diagrams showing changes in directions of magnetization in high- and low-temperature cycles of the medium No. 5-2;
Fig. 50 is a graph showing the relationship between a temperature and a coercivity of a medium No. 7-2 of the present invention;
Figs. 51 and 52 are diagrams showing changes in directions of magnetization in high- and low-temperature cycles of the medium No. 7-2;
Fig. 53 is a graph showing the relationship between a temperature and a coercivity of a medium No. 8-2 of the present invention;
Figs. 54 and 55 are diagrams showing changes in directions of magnetization in high- and low-temperature cycles of the medium No. 8-2;
Fig. 56 is a schematic view showing a two-layered magnetooptical recording medium according to an embodiment of the present invention; and
Fig. 57 is a schematic diagram for explaining a main part of an over-write capable magnetooptical recording apparatus according to the basic invention.

DETAILED DESCRIPTION OF THE PREFERRED EMBODIMENT:

The present invention will be described in detail below by way of its example and reference example. However, the present invention is not limited to this.

[Example...Class 8]

A four-element RF magnetron sputtering apparatus is used, and a disk-like glass substrate having a thickness of 1.2 mm and a diameter of 130 mm is set in a vacuum chamber of the apparatus.

After the interior of the vacuum chamber is temporarily evacuated to 5 x $10^{-5}$Pa, Ar gas and $N_2$ gas are introduced, and an undercoat layer having a film thickness of 800 Å is formed using an $Si_3N_4$ target.

The target is replaced with a TbFeCo alloy target, and sputtering is performed at a film formation rate of about 3 Å/sec while maintaining the Ar gas pressure to be 0.2 Pa, thereby forming a first layer having a film thickness $t_1$ = 400 Å.

Thereafter, the target is replaced with an NdDy alloy and an FeCo alloy, and two-element sputtering is performed at the same Ar gas pressure and film formation rate as those described above, thus forming a second layer having a film thickness $t_2$ = 750 Å.

Finally, an overcoat layer ($Si_3N_4$) having a film thickness of 800 Å is formed in the same manner as the undercoat layer.

Fig. 56 shows a two-layered magnetooptical recording medium belonging to Class 8 (A type, Quadrant IV, Type 2) manufactured in this manner. Table 2 below summarizes its magnetic characteristics (25°C).

Table 2

| | First Layer | Second Layer |
|---|---|---|
| Composition | $Tb_{24}Fe_{72}Co_4$ | $Nd_{10}Dy_{25}Fe_{34}Co_{31}$ |
| Film Thickness t (Å) | 400 | 750 |
| Ms (emu/cc) | 20 | 115 |
| Hc (Oe) | 15,000 | 1,500 |
| Tc (°C) | 180 | 280 |
| $T_{comp.}$ (°C) | None | 120 |
| $\sigma_w$ (erg/cm$^2$) | 2.0 | |

After the second layer is initialized, the first and second layers are influenced to each other due to $\sigma_w$. However, in order to allow an over-write operation, the directions of magnetization of the two layers must be left unchanged. More specifically, the first layer maintains data, and the direction of magnetization of the second layer is aligned in one direction. These conditions are expressed by Formulas 48 and 49 described above. From these formulas, the minimum values of the film thicknesses of the first and second layers can be obtained. The minimum values of the film thicknesses of these layers can be obtained as follows:

$$t_{1\,min} = \frac{\sigma_w}{2M_{S1}H_{C1}} = 333\ Å$$

$$t_{2min} = \frac{\sigma_w}{2M_{S2}H_{C2}} = 580\ Å$$

[Evaluation 1]

A medium of Example was evaluated using an over-write capable magnetooptical recording apparatus of Reference Example. In this case, a rotational speed of a disk (medium) was set to be 3,600 rpm; a recording position, a position corresponding to a radius of 60 mm; a bias field Hb, 300 Oe; an initial field Hini., 3,500 Oe; low level $P_L$ of a laser beam 5 mW (on disk); and high level $P_H$, 9.5 mW (on disk).

As data to be recorded, two signals, i.e., a 3.7-MHz reference signal and a 7.4-MHz reference signal, were used, and were alternately and repetitively overwritten. Thereafter, the data were reproduced using a commercially available magnetooptical recording/reproducing apparatus. As a result, no previous data remained, and it was found that an over-write operation could be perfectly performed.

[Comparative Example...Class 8]

Following the same procedures as in Example, a first layer comprising a $Tb_{24}Fe_{72}Co_4$ perpendicular magnetic film having a film thickness $t_1$ = 800 Å is formed, and then, a second layer comprising a $Dy_{27}Fe_{51}Co_{22}$ perpendicular magnetic film having a film thickness $t_2$ = 1,400 Å is formed.

Table 3 below summarizes magnetic characteristics (25°C) of a two-layered magnetooptical recording medium belonging to Class 8 (A Type, Quadrant IV, Type 2) manufactured in this manner.

Table 3

| | First Layer | Second Layer |
|---|---|---|
| Composition | $Tb_{24}Fe_{72}Co_4$ | $Dy_{27}Fe_{51}Co_{22}$ |
| Film Thickness t (Å) | 800 | 1,400 |
| Ms (emu/cc) | 20 | 120 |
| Hc (Oe) | 15,000 | 1,500 |
| Tc (°C) | 180 | 280 |
| $T_{comp.}$ (°C) | None | 120 |
| $\sigma_w$ (erg/cm$^2$) | 4.0 | |

The minimum film thicknesses of the two layers can be obtained in the same manner as in Example described above, as follows:

$$t_{1min} = \frac{\sigma_w}{2M_{S1}H_{C1}} = 666 \text{ Å}$$

$$t_{2min} = \frac{\sigma_w}{2M_{S2}H_{C2}} = 1{,}111 \text{ Å}$$

Therefore, a total of the minimum film thicknesses of the two layers is 666 + 1,111 = 1,777 Å. In contrast to this, in Example, a total is 333 + 580 = 913 Å. More specifically, a total of the minimum film thicknesses of Example is about a half that of Comparative Example. In comparison of actual media, a total film thickness of Example is 400 + 750 = 1,150 Å, and is about half that of Comparative Example, i.e., 800 + 1,400 = 2,200 Å.

[Evaluation 2]

The medium of Comparative Example was evaluated as in [Evaluation 1] of the medium of Example.

As a result, previous data was reproduced during reproduction, and it was found that the previous data remained. Thus, level of the laser beam was gradually increased, and overwrite/reproduction operations were repeated. As a result, when low level $P_L$ was set at 10 mW (on disk) and high level $P_H$ was set at 18 mW (on disk), the remaining previous data could be erased.

This revealed that the medium of Comparative Example had lower recording sensitivity than that of Example.

[Reference Example...Over-Write Capable Magnetooptical Recording Apparatus]

This apparatus is exclusively used for recording, and its overall arrangement is shown in Fig. 57 (schematic diagram).

This apparatus basically comprises:

(a) a rotating means 21 as an example of a means for moving a recording medium 20;
(b) an initial field Hini. apply means 22;
(c) a laser beam source 23;
(d) a means 24 for pulse-modulating a beam intensity in accordance with two-valued data to be recorded to obtain

(1) high level that provides, to the medium, a temperature suitable for forming one of a bit having an upward magnetization and a bit having a downward magnetization,
and to obtain
(2) low level that provides, to the medium, a temperature suitable for forming the other bit; and

(e) a bias field Hb apply means 25.

As the Hini. apply means 22, a permanent magnet having an intensity of 3,500 Oe, and a direction of a magnetic field of an "A direction" ↑ is used.

As the Hb apply means, a permanent magnet having an intensity of 300 Oe, and a direction of a magnetic field of an "A direction" ↑ is used.

The permanent magnets 22 and 25 are rod-like ones each having a length corresponding to the radius of the disk-like recording medium 20. These magnets 22 and 25 are fixed to the recording apparatus, and are not moved together with a pickup including the light source 23.

## Claims

1. An over-write capable magnetooptical recording medium, comprising at least a first layer for serving as a recording layer, and a second layer for serving as a reference layer, wherein the direction of magnetization of the second layer can be aligned in a predetermined upward or downward direction by an external magnetic field or an exchange magnetic field before the recording of over-write information and without changing the direction of magnetization of the first layer, and the medium being capable of having over-write information recorded thereon by irradiating the medium under the presence of a predetermined bias field with a light beam modulated in accordance with the data, wherein one of said first and second layers comprises a heavy rare earth-light rare earth-transition metal alloy amorphous film, and the other layer comprises a heavy rare earth-light rare earth-transition metal alloy amorphous film or a heavy rare earth-transition metal alloy amorphous film, such that the medium has a small exchange coupling force $\sigma_W$, wherein the or each light rare earth element is selected from the group consisting of Nd, Sm, Pr, Eu, Pm, Ce, and La.

2. A medium according to claim 1, wherein said first layer is a heavy rare earth rich and has a compensation temperature between a room temperature and a Curie temperature, said second layer is a heavy rare earth rich and has a compensation temperature between the room temperature and the Curie temperature, said medium satisfies a following relation (1):

$$(1) \quad T_R < T_{comp.1} < T_{C1} \approx T_L \approx T_{comp.2}$$

$$T_{comp.2} < T_{C2} \approx T_H$$

$$\text{or} \quad T_R < T_{comp.1} < T_L < T_{C1} < T_H \lessapprox T_{C2}$$

and satisfies, at the room temperature, following relations (2) to (5) :

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

"heavy rare earth rich" in this and subsequent claims meaning that a sum of spin vectors of a heavy rare earth element is larger than a total sum of spin vectors of a light rare earth element and a transition metal, where

| | |
|---|---|
| $T_R$: | room temperature |
| $T_{comp.1}$: | compensation temperature of first layer |
| $T_{comp.2}$: | compensation temperature of second layer |
| $T_{C1}$: | Curie temperature of first layer |
| $T_{C2}$: | Curie temperature of second layer |
| $T_L$: | temperature of recording medium when low-level laser beam is radiated. |
| $T_H$: | temperature of recording medium when high-level laser beam is radiated |
| $H_{C1}$: | coercivity of first layer |
| $H_{C2}$: | coercivity of second layer |
| $M_{S1}$: | saturation magnetization of first layer |
| $M_{S2}$ | saturation magnetization of second layer |
| $t_1$: | film thickness of first layer |
| $t_2$: | film thickness of second layer |
| $\sigma_w$: | interface wall energy (exchange coupling force) |
| Hini.: | initial field |

**3.** A medium according to claim 1, wherein said first layer is a heavy rare earth rich and has no compensation temperature between a room temperature and a Curie temperature, said second layer is a heavy rare earth rich and has a compensation temperature between the room temperature and the Curie temperature, said medium satisfies a following relation (1):

$$(1) \qquad T_R < T_{C1} \approx T_L \approx T_{comp.2} < T_{C2} \approx T_H$$

$$\text{or } T_R < T_L < T_{C1} < T_H \lesssim T_{C2}$$

and satisfies, at the room temperature, following relations (2) to (5):

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

where symbols are the same as those in the above claim.

**4.** A medium according to claim 1, wherein said first layer is a heavy rare earth rich and has a compensation temperature between a room temperature and a Curie temperature, said second layer is a heavy rare earth rich and has no compensation temperature between the room temperature and the Curie temperature, said medium satisfies a following relation (1):

$$(1) \qquad T_R < T_{C1} \approx T_L \approx T_{comp.2} < T_{C2} \approx T_H$$
$$\text{or } T_R < T_L < T_{C1} < T_H \lessapprox T_{C2}$$

and satisfies, at the room temperature, following relations (2) to (5):

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

where symbols are the same as those in the above claim.

**5.** A medium according to claim 1, wherein said first layer is a heavy rare earth rich and has no compensation temperature between a room temperature and a Curie temperature, said second layer is a heavy rare earth rich and has no compensation temperature between the room temperature and the Curie temperature, said medium satisfies a following relation (1) :

$$1) \qquad T_R < T_{C1} \approx T_L \approx T_{comp.2} < T_{C2} \approx T_H$$
$$\text{or } T_R < T_L < T_{C1} < T_H \lessapprox T_{C2}$$

and satisfies, at the room temperature, following relations (2) to (5):

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

where symbols are the same as those in the above claim.

**6.** A medium according to claim 1, wherein said first layer is a heavy rare earth rich and has a compensation temperature between a room temperature and a Curie temperature, said second layer is a transition metal rich and has no compensation temperature between the room temperature and the Curie temperature, said medium satisfies a following relation (1):

$$(1) \qquad T_R < T_{C1} \approx T_L \approx T_{comp.2} < T_{C2} \approx T_H$$
$$\text{or } T_R < T_L < T_{C1} < T_H \lessapprox T_{C2}$$

and satisfies, at the room temperature, following relations (2) to (5):

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

"transition metal rich" in this and subsequent claims meaning that a total sum of spin vectors of a light rare earth element and a transition metal is larger than a sum of spin vectors of a heavy rare earth element, where symbols are the same as those in the above claims.

**7.** A medium according to claim 1, wherein said first layer is a heavy rare earth rich and has no compensation temperature between a room temperature and a Curie temperature, said second layer is a transition metal rich and has no compensation temperature between the room temperature and the Curie temperature, said medium satisfies a following relation (1):

$$(1) \qquad T_R < T_{C1} \approx T_L \approx T_{comp.2} < T_{C2} \approx T_H$$
$$\text{or } T_R < T_L < T_{C1} < T_H \lessapprox T_{C2}$$

and satisfies, at the room temperature, following relations (2) to (5):

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

where symbols are the same as those in the above claim.

**8.** A medium according to claim 1, wherein said first layer is a transition metal rich and has no compensation temperature between a room temperature and a Curie temperature, said second layer is a transition metal rich and has no compensation temperature between the room temperature and the Curie temperature, said medium satisfies a following relation (1):

$$(1) \qquad T_R < T_{C1} \approx T_L \approx T_{comp.2} < T_{C2} \approx T_H$$

$$\text{or } T_R < T_L < T_{C1} < T_H \lessapprox T_{C2}$$

and satisfies, at the room temperature, following relations (2) to (5):

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

where symbols are the same as those in the abvoe claim.

**9.** A medium according to claim 1, wherein said first layer is a transition metal rich and has no compensation temperature between a room temperature and a Curie temperature, said second layer is a heavy rare earth rich and has a compensation temperature between the room temperature and the Curie temperature, said medium satisfies a following relation (1) :

$$(1) \quad T_R < T_{C1} \approx T_L \approx T_{comp.2} < T_{C2} \approx T_H$$
$$\text{or } T_R < T_L < T_{C1} < T_H \lessapprox T_{C2}$$

and satisfies, at the room temperature, following relations (2) to (5):

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

where symbols are the same as those in the above claim.

**10.** A medium according to claim 1, wherein said first layer is a transition metal rich and has no compensation temperature between a room temperature and a Curie temperature, said second layer is a heavy rare earth rich and has no compensation temperature between the room temperature and the Curie temperature, said medium satisfies a following relation (1):

$$(1) \quad T_R < T_{C1} \approx T_L \approx T_{comp.2} < T_{C2} \approx T_H$$
$$\text{or } T_R < T_L < T_{C1} < T_H \lessapprox T_{C2}$$

and satisfies, at the room temperature, following relations (2) to (5):

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

where symbols are the same as those in the above claim.

**11.** A method of producing a disc prepared for over-write operation, comprising the steps of:

providing a magnetooptical recording medium as defined in any of claims 1-10;
aligning the direction of magnetization of the second layer in a predetermined direction by the use of an external magnetic field or an exchange magnetic field, without changing the direction of magnetization of the first layer.

**12.** A method comprising the steps of :

producing a disc according to the method of claim 11; and
recording over-write information on the medium by irradiating the medium, under the presence of a predetermined bias field, with a light beam modulated in accordance with the information.

**Patentansprüche**

**1.** Überschreibbares magnetoptisches Aufzeichnungsmedium, umfassend mindestens eine als eine Aufzeichnungsschicht dienende erste Schicht und eine als Referenzschicht dienende zweite Schicht, wobei die Magnetisierungsrichtung der zweiten Schicht in einer vorbestimmten Richtung nach oben oder nach unten ausgerichtet werden kann durch ein externes Magnetfeld oder ein Austausch-Magnetfeld, bevor die Aufzeichnung überschreibbarer Information erfolgt, und ohne daß dei Magnetisierungsrichtung der ersten Schicht geändert wird, und das Medium in der Lage ist, dadurch mit überschreibbarer Information beschrieben zu werden, daß das Medium unter Vorhandensein eines vorbestimmten Vormagnetisierungsfeldes mit einem nach Maßgabe der Daten modulierten Lichtstrahl bestrahlt wird, wobei eine von der ersten und der zweiten Schicht einen amorphen Film aus einer Schwerseltenerd-Leichtseltenerd-Übergangsmetall-Legierung und die andere Schicht einen amorphen Film aus einer Schwerseltenerd-Leichtseltenerd-Übergangsmetall-Legierung oder einem amorphen Film aus einer Schwerseltenerd-Übergangsmetall-Legierung aufweist derart, daß das Medium eine geringe Austauschkoppelkraft $\sigma_w$ aufweist, wobei das oder jedes Leichtseltenerd-Element ausgewählt ist aus der Gruppe Nd, Sm, Pr, Eu, Pm, Ce und La.

**2.** Medium nach Anspruch 1, bei dem die erste Schicht eine Schwerseltenerdreiche Schicht ist und eine Kompensationstemperatur zwischen Zimmertemperatur und einer Curie-Temperatur aufweist, die zweite Schicht eine Schwerseltenerd-reiche Schicht ist und eine Kompensationstemperatur zwischen Zimmertemperatur und der Curie-Temperatur aufweist, das Medium folgender Relation (1) genügt:

$$(1) \quad T_R < T_{comp.1} < T_{C1} \approx T_L \approx T_{comp.2}$$
$$T_{comp.2} < T_{C2} \approx T_H$$
$$\text{oder} \quad T_R < T_{comp.1} < T_L < T_{C1} < T_H \lessapprox T_{C2}$$

und bei Zimmertemperatur folgende Relationen (2) bis (5) erfüllt:

$$(2) \quad H_{C1} > H_{C2} + \frac{\sigma_w}{2M_{S1}t_1} + \frac{\sigma_w}{2M_{S2}t_2}$$

$$(3) \quad H_{C1} > \frac{\sigma_w}{2M_{S1}t_1}$$

$$(4) \quad H_{C2} > \frac{\sigma_w}{2M_{S2}t_2}$$

$$(5) \quad H_{C2} + \frac{\sigma_w}{2M_{S2}t_2} < |Hini.| < H_{C1} - \frac{\sigma_w}{2M_{S1}t_1}$$

wobei "Schwerseltenerd-reich" in diesen und den nachfolgenden Ansprüchen bedeutet, daß eine Summe von Spin-Vektoren eines Schwerseltenerd-Elements größer ist als eine Gesamtsumme von Spin-Vektoren eines Leichtseltenerd-Elements und eines Übergangsmetalls, wobei

| | |
|---|---|
| $T_R$: | Zimmertemperatur |
| $T_{comp.1}$: | Kompensationstemperatur der ersten Schicht |
| $T_{comp.2}$: | Kompensationstemperatur der zweiten Schicht |
| $T_{C1}$: | Curie-Temperatur der ersten Schicht |
| $T_{C2}$: | Curie-Temperatur der zweiten Schicht |
| $T_L$: | Temperatur des Aufzeichnungsmediums bei Bestrahlung mit einem Niederpegel-Laserstrahl |
| $T_H$: | Temperatur des Aufzeichnungsmediums bei Bestrahlung mit einem Hochpegel-Laserstrahl |
| $H_{C1}$: | Koerzitivkraft der ersten Schicht |
| $H_{C2}$: | Koerzitivkraft der zweiten Schicht |
| $M_{S1}$: | Sättigungsmagnetisierung der ersten Schicht |
| $M_{S2}$: | Sättigungsmagnetisierung der zweiten Schicht |
| $t_1$: | Filmdicke der ersten Schicht |
| $t_2$: | Filmdicke der zweiten Schicht |
| $\sigma_W$: | Grenzwandenergie (Austauschkoppelkraft) |
| Hini.: | Anfangsfeld |

**3.** Medium nach Anspruch 1, bei dem die erste Schicht eine Schwerseltenerdreiche Schicht ist und keine Kompensationstemperatur zwischen Zimmertemperatur und einer Curie-Temperatur aufweist, die zweite Schicht eine Schwerseltenerd-reiche Schicht ist und eine Kompensationstemperatur zwischen Zimmertemperatur und der Curie-Temperatur besitzt, das Medium folgende Relation (1) erfüllt:

$$(1) \qquad T_R < T_{C1} \approx T_L \approx T_{comp.2} < T_{C2} \approx T_H$$

$$\text{oder } T_R < T_L < T_{C1} < T_H \overset{<}{\approx} T_{C2}$$

und bei Zimmertemperatur folgende Relationen (2) bis (5) erfüllt:

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

wobei die Symbole die gleichen wie in dem obigen Anspruch sind.

**4.** Medium nach Anspruch 1, bei dem die erste Schicht eine Schwerseltenerdreiche Schicht ist und eine Kompensations-Temperatur zwischen Zimmertemperatur und einer Curie-Temperatur aufweist, die zweite Schicht eine Schwerseltenerd-reiche Schicht ist und keine Kompensations-Temperatur zwischen Zimmertemperatur und der Curie-Temperatur besitzt und das Medium folgende Relation (1) erfüllt:

$$(1) \qquad T_R < T_{C1} \approx T_L \approx T_{comp.2} < T_{C2} \approx T_H$$

$$\text{oder } T_R < T_L < T_{C1} < T_H \lessapprox T_{C2}$$

und bei Zimmertemperatur folgende Relationen (2) bis (5) erfüllt:

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

wobei die Symbole die gleichen wie in dem obigen Anspruch sind.

**5.** Medium nach Anspruch 1, bei dem die erste Schicht eine Schwerseltenerdreiche Schicht ist und keine Kompensations-Temperatur zwischen Zimmertemperatur und einer Curie-Temperatur aufweist, die zweite Schicht eine Schwerseltenerd-reiche Schicht ist und keine Kompensations-Temperatur zwischen Zimmertemperatur und der Curie-Temperatur besitzt, das Medium folgende Relation (1) erfüllt:

$$(1) \qquad T_R < T_{C1} \approx T_L \approx T_{comp.2} < T_{C2} \approx T_H$$

$$\text{oder } T_R < T_L < T_{C1} < T_H \lessapprox T_{C2}$$

und bei Zimmertemperatur folgende Relation (2) bis (5) erfüllt:

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

wobei die Symbole die gleichen wie in dem obigen Anspruch sind.

**6.** Medium nach Anspruch 1, bei dem die erste Schicht eine Schwerseltenerdreiche Schicht ist und eine Kompensations-Temperatur zwischen Zimmertemperatur und einer Curie-Temperatur aufweist, die zweite Schicht eine Übergangsmetall-reiche Schicht ist und keine Kompensations-Temperatur zwischen der Zimmertemperatur und der Curie-Temperatur aufweist, das Medium folgende Relation (1) erfüllt:

$$(1) \qquad T_R < T_{C1} \approx T_L \approx T_{comp.2} < T_{C2} \approx T_H$$

$$\text{oder } T_R < T_L < T_{C1} < T_H \lesssim T_{C2}$$

und bei Zimmertemperatur folgenden Relationen (2) bis (5) genügt:

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

wobei "Übergangsmetall-reich" in diesem und in nachfolgenden Ansprüchen bedeutet, daß eine Gesamtsumme von Spln-Vektoren eines Leichtseltenerd-Elements und eines Übergangsmetalls größer ist als eine Summe von Spin-Vektoren eines Schwerseltenerd-Elements,
wobei die Symbole die gleichen wie in dem obigen Anspruch sind.

**7.** Medium nach Anspruch 1, bei dem die erste Schicht eine Schwerseltenerdreiche Schicht ist und keine Kompensations-Temperatur zwischen Zimmertemperatur und einer Curie-Temperatur aufweist, die zweite Schicht eine Übergangsmetall-reiche Schicht ist und keine Kompensations-Temperatur zwischen Zimmertemperatur und der Curie-Temperatur besitzt, das Medium folgende Relation (1) erfüllt:

$$(1) \qquad T_R < T_{C1} \approx T_L \approx T_{comp.2} < T_{C2} \approx T_H$$

$$\text{oder } T_R < T_L < T_{C1} < T_H \lesssim T_{C2}$$

und bei Zimmertemperatur folgenden Relationen (2) bis (5) genügt:

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

wobei die Symbole die gleichen wie in dem obigen Anspruch sind.

**8.** Medium nach Anspruch 1, bei dem die erste Schicht eine Übergangsmetallreiche Schicht ist und keine Kompensations-Temperatur zwischen Zimmertemperatur und einer Curie-Temperatur aufweist, die zweite Schicht eine Übergangsmetall-reiche Schicht ist und keine Kompensations-Temperatur zwischen Zimmertemperatur und der Curie-Temperatur besitzt, das Medium folgender Relation (1) genügt:

$$(1) \qquad T_R < T_{C1} \approx T_L \approx T_{comp.2} < T_{C2} \approx T_H$$

$$\text{oder } T_R < T_L < T_{C1} < T_H \lessapprox T_{C2}$$

und bei Zimmertemperatur folgenden Relationen (2) bis (5) genügt:

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

wobei die Symbole die gleichen wie in dem obigen Anspruch sind.

**9.** Medium nach Anspruch 1, bei dem die erste Schicht eine Übergangsmetallreiche Schicht ist und keine Kompensations-Temperatur zwischen Zimmertemperatur und einer Curie-Temperatur aufweist, die zweite Schicht eine Schwerseltenerd-reiche Schicht ist und eine Kompensations-Temperatur zwischen Zimmertemperatur und der Curie-Temperatur besitzt, und das Medium folgender Relation (1) genügt:

$$(1) \qquad T_R < T_{C1} \approx T_L \approx T_{comp.2} < T_{C2} \approx T_H$$

$$\text{oder } T_R < T_L < T_{C1} < T_H \lessapprox T_{C2}$$

und bei Zimmertemperatur folgenden Relationen (2) bis (5) genügt:

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

wobei die Symbole die gleichen wie in dem obigen Anspruch sind.

**10.** Medium nach Anspruch 1, bei dem die erste Schicht eine Übergangsmetallreiche Schicht ist und keine Kompensations-Temperatur zwischen Zimmertemperatur und einer Curie-Temperatur aufweist, die zweite Schicht eine Schwerseltenerd-reiche Schicht ist und keine Kompensations-Temperatur zwischen Zimmertemperatur und der Curie-Temperatur aufweist und das Medium folgender Relation (1) genügt:

$$(1) \qquad T_R < T_{C1} \approx T_L \approx T_{comp.2} < T_{C2} \approx T_H$$

$$\text{oder } T_R < T_L < T_{C1} < T_H \lessapprox T_{C2}$$

und bei Zimmertemperatur folgenden Relationen (2) bis (5) genügt:

$$(2) \qquad H_{C1} > H_{C2} + \frac{\sigma_w}{2M_{S1}t_1} + \frac{\sigma_w}{2M_{S2}t_2}$$

$$(3) \qquad H_{C1} > \frac{\sigma_w}{2M_{S1}t_1}$$

$$(4) \qquad H_{C2} > \frac{\sigma_w}{2M_{S2}t_2}$$

$$(5) \qquad H_{C2} + \frac{\sigma_w}{2M_{S2}t_2} < |Hini.| < H_{C1} - \frac{\sigma_w}{2M_{S1}t_1}$$

wobei die Symbole die gleichen wie in dem obigen Anspruch sind.

**11.** Verfahren zum Herstellen einer für Überschreib-Betrieb vorbereiteten Platte, umfassend die Schritte:

Bereitstellen eines magnetooptischen Aufzeichnungsmediums gemäß einem der Ansprüche (1) bis (10);
Ausrichten der Magnetisierungsrichtung der zweiten Schicht in einer vorbestimmten Richtung unter Verwendung eines externen Magnetfelds oder eines Austauschmagnetfelds ohne Änderung der Magnetisierungsrichtung der ersten Schicht.

**12.** Verfahren, umfassend die Schritte:

Herstellung einer Platte nach dem Verfahren gemäß Anspruch 11; und
Aufzeichnen überschreibbarer Information auf dem Medium durch Bestrahlen des Mediums mit einem nach Maßgabe der Information modulierten Lichtstrahls unter Vorhandensein eines vorbestimmten Vormagnetisierungsfeldes.

**Revendications**

1. Support d'enregistrement magnéto-optique ayant une possibilité d'écrasement, comprenant au moins une première couche servant de couche d'enregistrement, et une seconde couche servant de couche de référence, dans lequel la direction d'aimantation de la seconde couche peut être alignée dans une direction prédéterminée, vers le haut ou vers le bas, par un champ magnétique extérieur ou un champ magnétique d'échange, avant l'enregistrement de l'information d'écrasement et sans modifier la direction d'aimantation de la première couche, et le support étant capable de comporter une information d'écrasement enregistrée sur lui, par irradiation du support, en présence d'un champ de polarisation prédéterminé, avec un faisceau lumineux modulé en fonction des données, l'une desdites première et seconde couches comprenant un film amorphe en alliage métal de transition - terre rare légère - terre rare lourde, et l'autre couche comprenant un film amorphe en alliage métal de transition - terre rare légère - terre rare lourde ou un film amorphe en alliage métal de transition - terre rare lourde, de telle sorte que le support a une faible force de couplage d'échange $\sigma_W$, l'élément ou chaque élément de terre rare légère étant sélectionné dans le groupe consistant en Nd, Sm, Pr, Eu, Pm, Ce, et La.

2. Support selon la revendication 1, dans lequel ladite première couche est une couche en terre rare lourde riche et a une température de compensation entre une température ambiante et une température de Curie, ladite seconde couche est une couche en terre rare lourde riche et a une température de compensation entre la température ambiante et la température de Curie, ledit support satisfaisant à une relation (1) suivante:

$$(1)\quad T_R < T_{comp.1} < T_{C1} \approx T_L \approx T_{comp.2}$$

$$T_{comp.2} < T_{C2} \approx T_H$$

ou

$$T_R < T_{comp.1} < T_L < T_{C1} < T_H \lessapprox T_{C2}$$

et satisfait, à la température ambiante, aux relations (2) à (5) suivantes:

$$(2)\qquad H_{C1} > H_{C2} + \frac{\sigma_W}{2M_{S1}t_1} + \frac{\sigma_W}{2M_{S2}t_2}$$

$$(3)\qquad H_{C1} > \frac{\sigma_W}{2M_{S1}t_1}$$

$$(4)\qquad H_{C2} > \frac{\sigma_W}{2M_{S2}t_2}$$

$$(5)\qquad H_{C2} + \frac{\sigma_W}{2M_{S2}t_2} < |Hini.| < H_{C1} - \frac{\sigma_W}{2M_{S1}t_1}$$

l'expression "terre rare lourde riche", dans cette revendication et celles qui suivent, signifiant qu'une somme de vecteurs de spin d'un élément de terre rare lourde est supérieure à une somme totale de vecteurs de spin d'un élément de terre rare légère et d'un métal de transition,
où

$T_R$ : température ambiante
$T_{comp.1}$ : température de compensation de la première couche
$T_{comp.2}$ : température de compensation de la seconde couche
$T_{C1}$ : température de Curie de la première couche
$T_{C2}$ : température de Curie de la seconde couche
$T_L$ : température du support d'enregistrement lorsqu'un faisceau laser de faible niveau est rayonné
$T_H$ : température du support d'enregistrement lorsqu'un faisceau laser de haut niveau est rayonné
$H_{C1}$ : force coercitive de la première couche
$H_{C2}$ : force coercitive de la seconde couche

$M_{S1}$ : aimantation de saturation de la première couche
$M_{S2}$ : aimantation de saturation de la seconde couche
$t_1$ : épaisseur du film de la première couche
$t_2$ : épaisseur du film de la seconde couche
$\sigma_W$ : énergie de la paroi d'interface (force de couplage d'échange)
Hini. : champ initial

**3.** Support selon la revendication 1, dans lequel ladite première couche est une couche en terre rare lourde riche et n'a pas de température de compensation entre une température ambiante et une température de Curie, ladite seconde couche est une couche en terre rare lourde riche et a une température de compensation entre la température ambiante et la température de Curie, ledit support satisfaisant à une relation (1) suivante:

$$(1)\quad T_R < T_{C1} \approx T_L \approx T_{comp.2} < T_{C2} \approx T_H$$
$$\text{ou}\quad T_R < T_L < T_{C1} < T_H \lessapprox T_{C2}$$

et satisfait, à la température ambiante, aux relations (2) à (5) suivantes:

$$(2)\qquad H_{C1} > H_{C2} + \frac{\sigma_W}{2M_{S1}t_1} + \frac{\sigma_W}{2M_{S2}t_2}$$

$$(3)\qquad H_{C1} > \frac{\sigma_W}{2M_{S1}t_1}$$

$$(4)\qquad H_{C2} > \frac{\sigma_W}{2M_{S2}t_2}$$

$$(5)\qquad H_{C2} + \frac{\sigma_W}{2M_{S2}t_2} < |Hini.| < H_{C1} - \frac{\sigma_W}{2M_{S1}t_1}$$

où les symboles sont les mêmes que ceux de la revendication précédente.

**4.** Support selon la revendication 1, dans lequel ladite première couche est une couche en terre rare lourde riche et a une température de compensation entre une température ambiante et une température de Curie, ladite seconde couche est une couche en terre rare lourde riche et n'a pas de température de compensation entre la température ambiante et la température de Curie, ledit support satisfaisant à une relation (1) suivante:

$$(1)\quad T_R < T_{C1} \approx T_L \approx T_{comp.2} < T_{C2} \approx T_H$$
$$\text{ou}\quad T_R < T_L < T_{C1} < T_H \lessapprox T_{C2}$$

et satisfait, à la température ambiante, aux relations (2) à (5) suivantes:

$$(2)\qquad H_{C1} > H_{C2} + \frac{\sigma_W}{2M_{S1}t_1} + \frac{\sigma_W}{2M_{S2}t_2}$$

$$(3)\qquad H_{C1} > \frac{\sigma_W}{2M_{S1}t_1}$$

$$(4) \qquad H_{C2} > \frac{\sigma_W}{2M_{S2}t_2}$$

$$(5) \qquad H_{C2} + \frac{\sigma_W}{2M_{S2}t_2} < |Hini.| < H_{C1} - \frac{\sigma_W}{2M_{S1}t_1}$$

où les symboles sont les mêmes que ceux de la revendication précédente.

**5.** Support selon la revendication 1, dans lequel ladite première couche est une couche en terre rare lourde riche et n'a pas de température de compensation entre une température ambiante et une température de Curie, ladite seconde couche est une couche en terre rare lourde riche et n'a pas de température de compensation entre la température ambiante et la température de Curie, ledit support satisfaisant à une relation (1) suivante:

$$(1) \quad T_R < T_{C1} \approx T_L \approx T_{comp.2} < T_{C2} \approx T_H$$

$$\text{ou} \quad T_R < T_L < T_{C1} < T_H \lessapprox T_{C2}$$

et satisfait, à la température ambiante, aux relations (2) à (5) suivantes:

$$(2) \qquad H_{C1} > H_{C2} + \frac{\sigma_W}{2M_{S1}t_1} + \frac{\sigma_W}{2M_{S2}t_2}$$

$$(3) \qquad H_{C1} > \frac{\sigma_W}{2M_{S1}t_1}$$

$$(4) \qquad H_{C2} > \frac{\sigma_W}{2M_{S2}t_2}$$

$$(5) \qquad H_{C2} + \frac{\sigma_W}{2M_{S2}t_2} < |Hini.| < H_{C1} - \frac{\sigma_W}{2M_{S1}t_1}$$

où les symboles sont les mêmes que ceux de la revendication précédente.

**6.** Support selon la revendication 1, dans lequel ladite première couche est une couche en terre rare lourde riche et a une température de compensation entre une température ambiante et une température de Curie, ladite seconde couche étant une couche en métal de transition riche et n'a pas de température de compensation entre la température ambiante et la température de Curie, ledit support satisfaisant à une relation (1) suivante:

$$(1) \quad T_R < T_{C1} \approx T_L \approx T_{comp.2} < T_{C2} \approx T_H$$

$$\text{ou} \quad T_R < T_L < T_{C1} < T_H \lessapprox T_{C2}$$

et satisfait, à la température ambiante, aux relations (2) à (5) suivantes:

$$(2) \qquad H_{C1} > H_{C2} + \frac{\sigma_W}{2M_{S1}t_1} + \frac{\sigma_W}{2M_{S2}t_2}$$

$$(3) \qquad H_{C1} > \frac{\sigma_W}{2M_{S1}t_1}$$

$$(4) \qquad H_{C2} > \frac{\sigma_W}{2M_{S2}t_2}$$

$$(5) \qquad H_{C2} + \frac{\sigma_W}{2M_{S2}t_2} < |Hini.| < H_{C1} - \frac{\sigma_W}{2M_{S1}t_1}$$

l'expression "métal de transition riche", dans cette revendication et les suivantes, signifiant qu'une somme totale de vecteurs de spin d'un élément de terre rare légère et d'un métal de transition est supérieure à la somme de vecteurs de spin d'un élément de terre rare lourde,

où les symboles sont les mêmes que ceux des revendications précédentes.

**7.** Support selon la revendication 1, dans lequel ladite première couche est une couche en terre rare lourde riche et n'a pas de température de compensation entre une température ambiante et une température de Curie, ladite seconde couche étant une couche en métal de transition riche et n'a pas de température de compensation entre la température ambiante et la température de Curie, ledit support satisfaisant à une relation (1) suivante:

$$(1) \quad T_R < T_{C1} \approx T_L \approx T_{comp.2} < T_{C2} \approx T_H$$
$$\text{ou} \quad T_R < T_L < T_{C1} < T_H \lessapprox T_{C2}$$

et satisfait, à la température ambiante, aux relations (2) à (5) suivantes:

$$(2) \qquad H_{C1} > H_{C2} + \frac{\sigma_W}{2M_{S1}t_1} + \frac{\sigma_W}{2M_{S2}t_2}$$

$$(3) \qquad H_{C1} > \frac{\sigma_W}{2M_{S1}t_1}$$

$$(4) \qquad H_{C2} > \frac{\sigma_W}{2M_{S2}t_2}$$

$$(5) \qquad H_{C2} + \frac{\sigma_W}{2M_{S2}t_2} < |Hini.| < H_{C1} - \frac{\sigma_W}{2M_{S1}t_1}$$

où les symboles sont les mêmes que ceux de la revendication précédente.

**8.** Support selon la revendication 1, dans lequel ladite première couche est une couche en métal de transition riche et n'a pas de température de compensation entre une température ambiante et une température de Curie, ladite seconde couche étant une couche en métal de transition riche et n'a pas de température de compensation entre la température ambiante et la température de Curie, ledit support satisfaisant à une relation (1) suivante:

$$(1) \quad T_R < T_{C1} \approx T_L \approx T_{comp.2} < T_{C2} \approx T_H$$
$$\text{ou} \quad T_R < T_L < T_{C1} < T_H \lessapprox T_{C2}$$

et satisfait, à la température ambiante, aux relations (2) à (5) suivantes:

$$(2) \qquad H_{C1} > H_{C2} + \frac{\sigma_W}{2M_{S1}t_1} + \frac{\sigma_W}{2M_{S2}t_2}$$

$$(3) \qquad H_{C1} > \frac{\sigma_W}{2M_{S1}t_1}$$

$$(4) \qquad H_{C2} > \frac{\sigma_W}{2M_{S2}t_2}$$

$$(5) \qquad H_{C2} + \frac{\sigma_W}{2M_{S2}t_2} < |Hini.| < H_{C1} - \frac{\sigma_W}{2M_{S1}t_1}$$

où les symboles sont les mêmes que ceux de la revendication précédente.

**9.** Support selon la revendication 1, dans lequel ladite première couche est une couche en métal de transition riche et n'a pas de température de compensation entre une température ambiante et une température de Curie, ladite seconde couche étant une couche en terre rare lourde riche et a une température de compensation entre la température ambiante et la température de Curie, ledit support satisfaisant à une relation (1) suivante:

$$(1) \quad T_R < T_{C1} \approx T_L \approx T_{comp.2} < T_{C2} \approx T_H$$

$$\text{ou} \quad T_R < T_L < T_{C1} < T_H \lessapprox T_{C2}$$

et satisfait, à la température ambiante, aux relations (2) à (5) suivantes:

$$(2) \qquad H_{C1} > H_{C2} + \frac{\sigma_W}{2M_{S1}t_1} + \frac{\sigma_W}{2M_{S2}t_2}$$

$$(3) \qquad H_{C1} > \frac{\sigma_W}{2M_{S1}t_1}$$

$$(4) \qquad H_{C2} > \frac{\sigma_W}{2M_{S2}t_2}$$

$$(5) \qquad H_{C2} + \frac{\sigma_W}{2M_{S2}t_2} < |Hini.| < H_{C1} - \frac{\sigma_W}{2M_{S1}t_1}$$

où les symboles sont les mêmes que ceux de la revendication précédente.

**10.** Support selon la revendication 1, dans lequel ladite première couche est une couche en métal de transition riche et n'a pas de température de compensation entre une température ambiante et une température de Curie, ladite seconde couche étant une couche en terre rare lourde riche et n'a pas de température de compensation entre la température ambiante et la température de Curie, ledit support satisfaisant à une relation (1) suivante:

$$(1) \quad T_R < T_{C1} \approx T_L \approx T_{comp.2} < T_{C2} \approx T_H$$

$$\text{ou} \quad T_R < T_L < T_{C1} < T_H \lessapprox T_{C2}$$

et satisfait, à la température ambiante, aux relations (2) à (5) suivantes:

$$(2) \qquad H_{C1} > H_{C2} + \frac{\sigma_W}{2M_{S1}t_1} + \frac{\sigma_W}{2M_{S2}t_2}$$

$$(3) \qquad H_{C1} > \frac{\sigma_W}{2M_{S1}t_1}$$

$$(4) \qquad H_{C2} > \frac{\sigma_W}{2M_{S2}t_2}$$

$$(5) \qquad H_{C2} + \frac{\sigma_W}{2M_{S2}t_2} < |Hini.| < H_{C1} - \frac{\sigma_W}{2M_{S1}t_1}$$

où les symboles sont les mêmes que ceux de la revendication précédente.

**11.** Procédé de production d'un disque préparé pour une opération d'écrasement, comprenant les étapes suivantes:

fourniture d'un support d'enregistrement magnéto-optique tel que défini dans l'une quelconque des revendications 1-10;
alignement de la direction d'aimantation de la seconde couche dans une direction prédéterminée par utilisation d'un champ magnétique extérieur ou d'un champ magnétique d'échange, sans modification de la direction d'aimantation de la première couche.

**12.** Procédé comprenant les étapes suivantes:

production d'un disque selon le procédé de la revendication 11; et
enregistrement d'une information d'écrasement sur le support par irradiation du support, en présence d'un champ de polarisation prédéterminé, avec un faisceau lumineux modulé en fonction de l'information.

FIG. 1

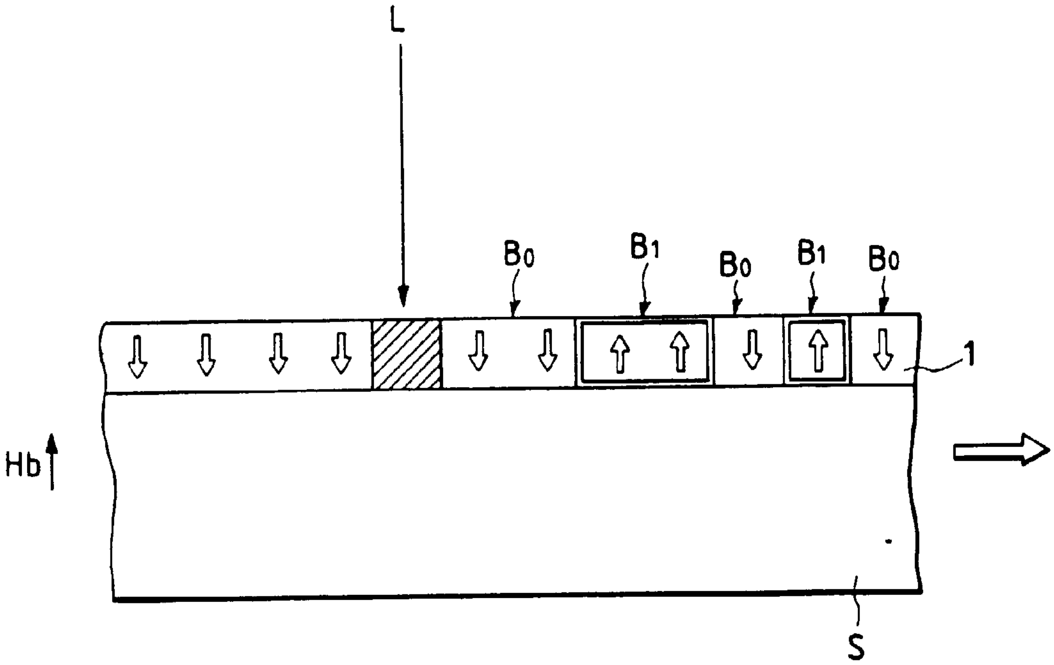


FIG. 2

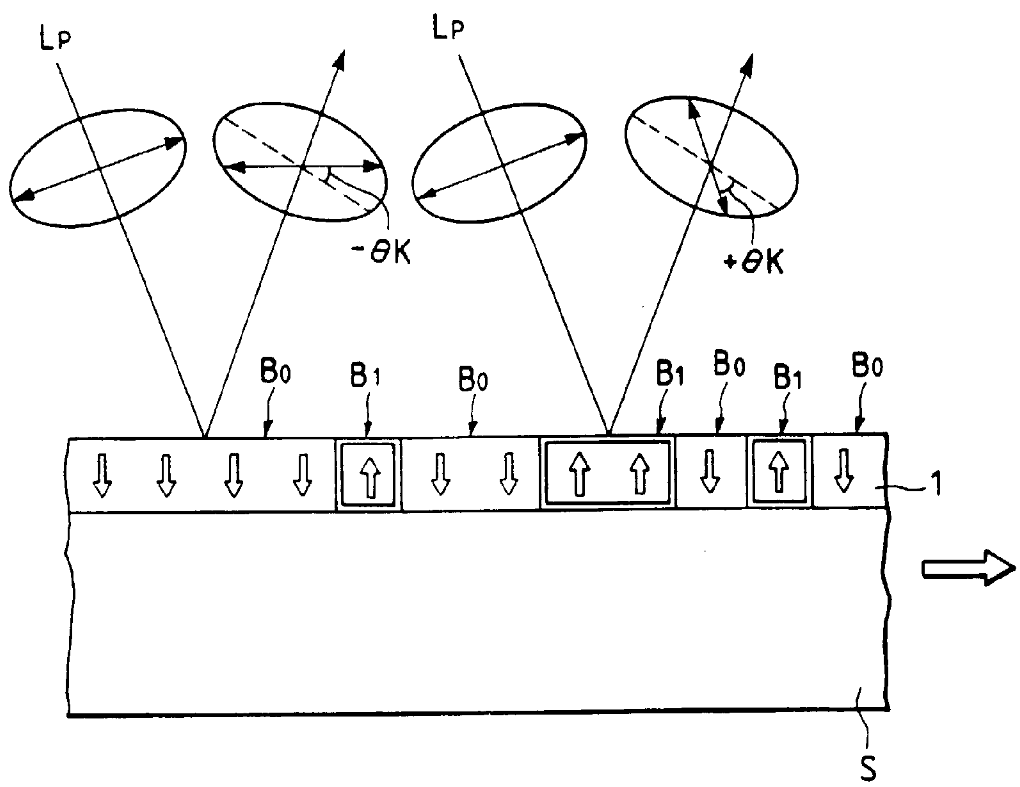

FIG. 3A

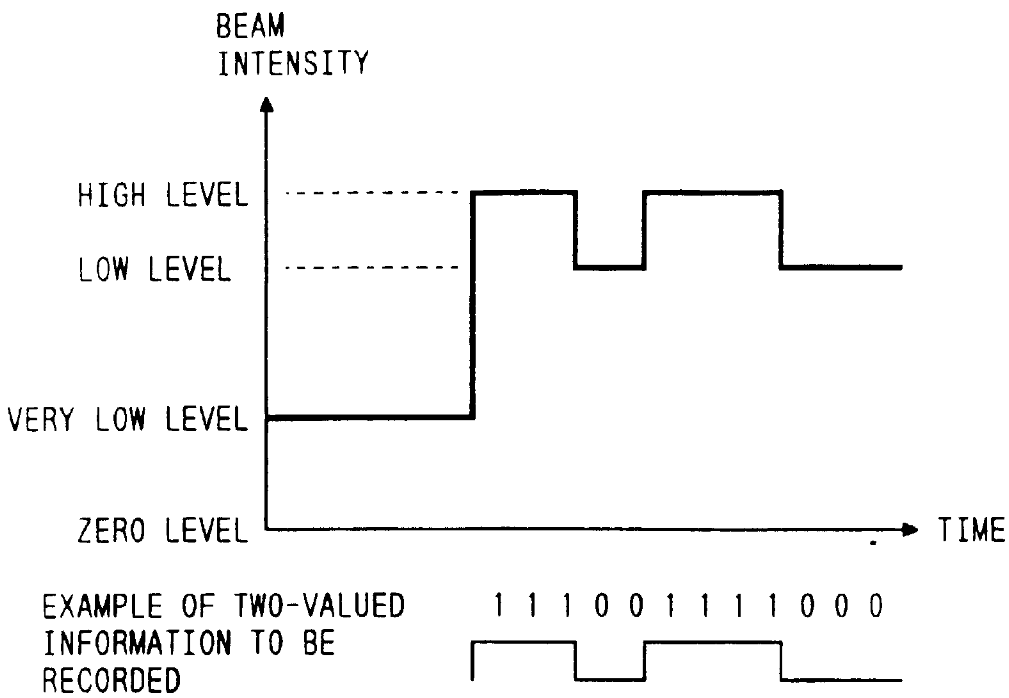
BEAM
INTENSITY
HIGH LEVEL
LOW LEVEL
VERY LOW LEVEL
ZERO LEVEL
TIME
EXAMPLE OF TWO-VALUED
INFORMATION TO BE
RECORDED
1 1 1 0 0 1 1 1 1 0 0 0

FIG. 3B

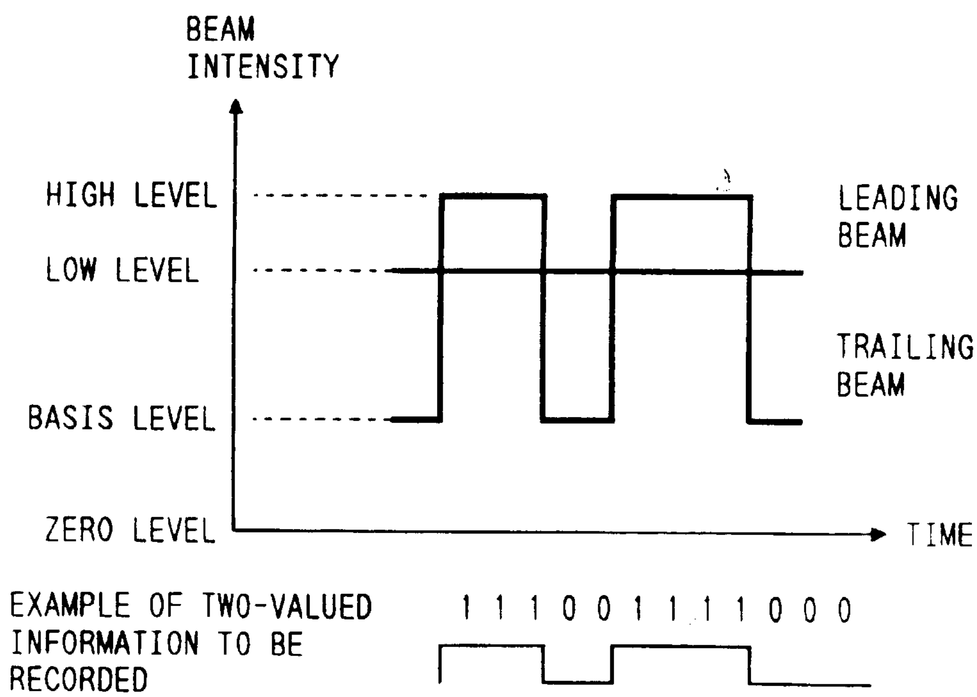
BEAM
INTENSITY
HIGH LEVEL
LOW LEVEL
BASIS LEVEL
ZERO LEVEL
LEADING
BEAM
TRAILING
BEAM
TIME
EXAMPLE OF TWO-VALUED
INFORMATION TO BE
RECORDED
1 1 1 0 0 1 1 1 1 0 0 0

FIG. 4A

| | |
|---|---|
| FIRST LAYER | : RECORDING LAYER |
| SECOND LAYER | : REFERENCE LAYER |

FIG. 4B

| | |
|---|---|
| FIRST LAYER | ⇧ ⇩ ⇩ ⇧ ⇩ ⇧ ⇩ ⇩ * |
| SECOND LAYER | ⇧ ⇧ ⇧ ⇧ ⇧ ⇧ ⇧ ⇧ |

FIG. 5

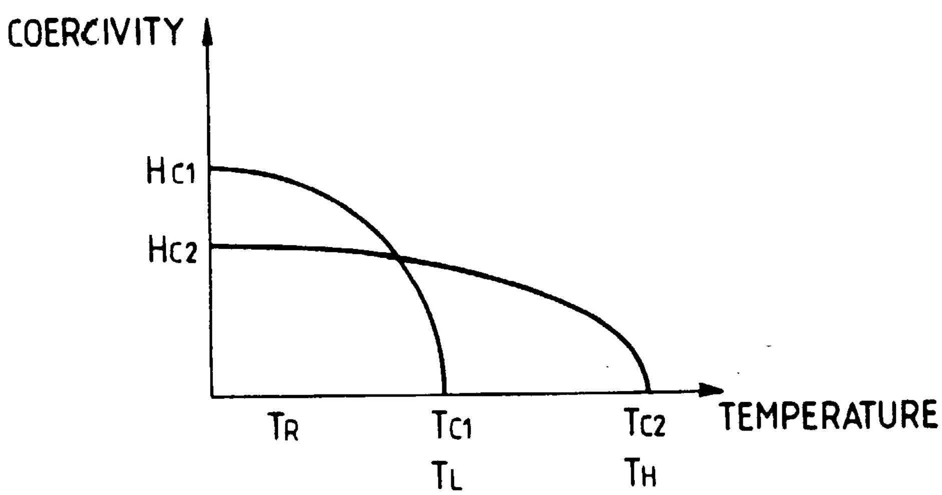

FIG. 6

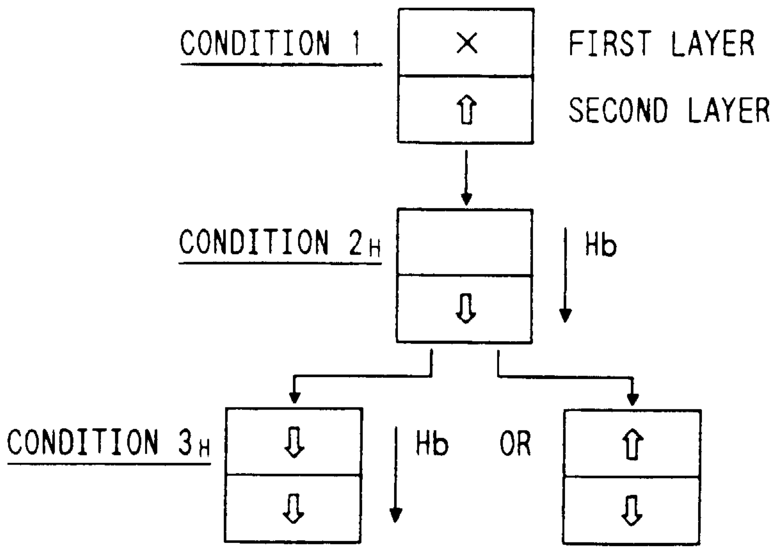
CONDITION 1
×
⇧
FIRST LAYER
SECOND LAYER
CONDITION 2H
⇩
Hb
CONDITION 3H
⇩
⇩
Hb
OR
⇧
⇩

FIG. 7

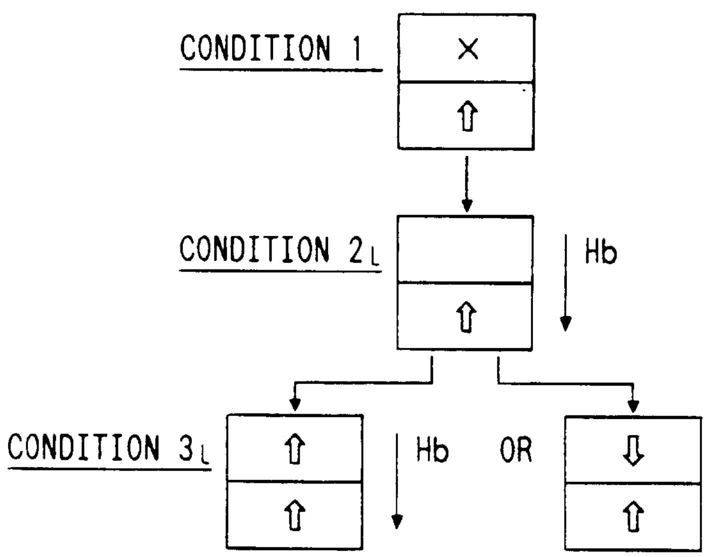
CONDITION 1
×
⇧
CONDITION 2L
⇧
Hb
CONDITION 3L
⇧
⇧
Hb
OR
⇩
⇧

FIG. 8

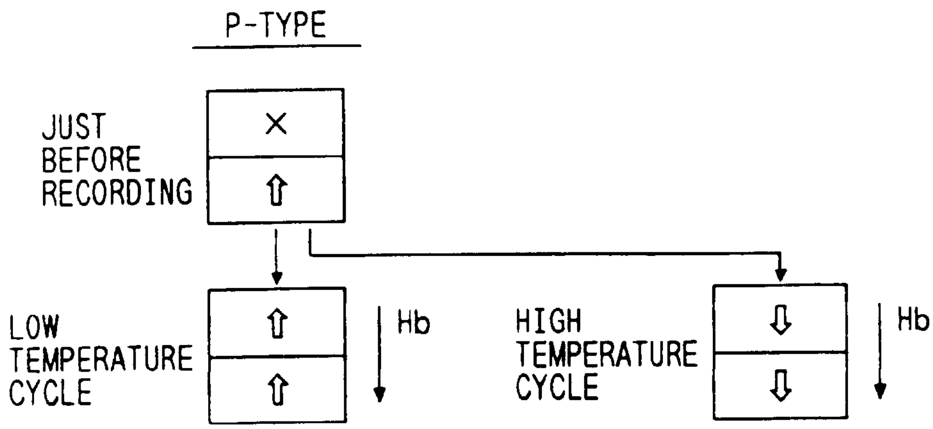
P-TYPE
JUST BEFORE RECORDING
×
⇧
LOW TEMPERATURE CYCLE
⇧
⇧
Hb
HIGH TEMPERATURE CYCLE
⇩
⇩
Hb

FIG. 9

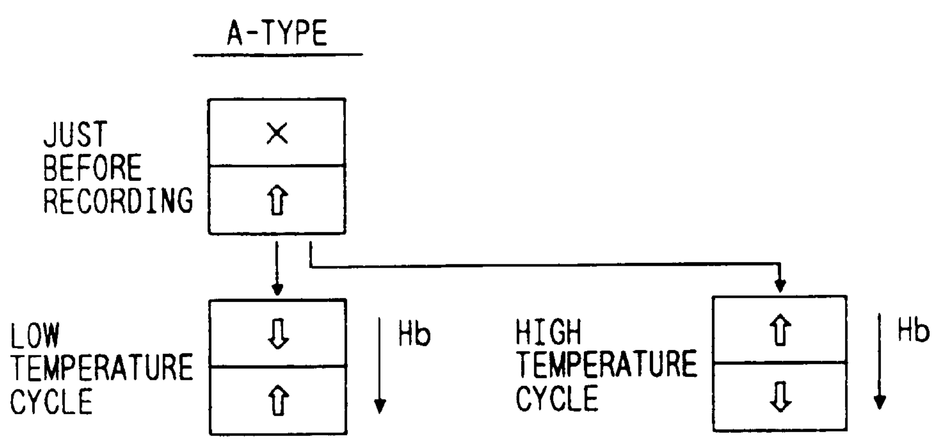
A-TYPE
JUST BEFORE RECORDING
×
⇧
LOW TEMPERATURE CYCLE
⇩
⇧
Hb
HIGH TEMPERATURE CYCLE
⇧
⇩
Hb

FIG. 10

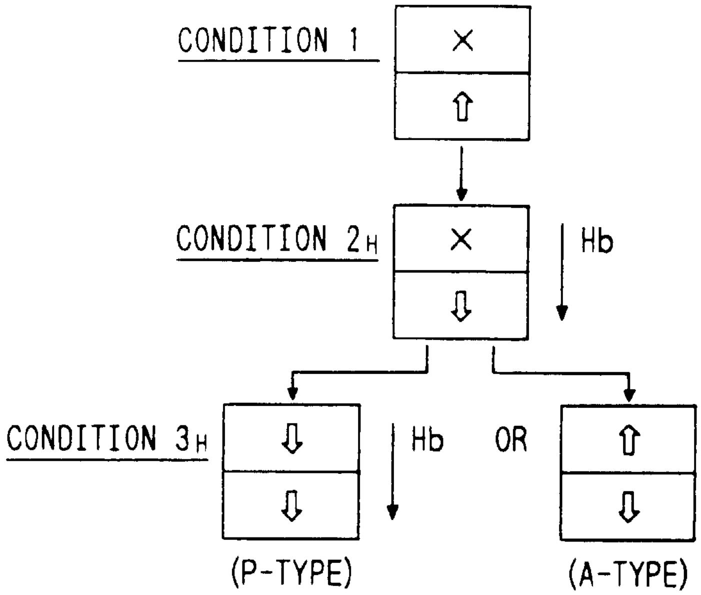
CONDITION 1
CONDITION 2H
Hb
CONDITION 3H
Hb
OR
(P-TYPE)
(A-TYPE)

FIG. 11

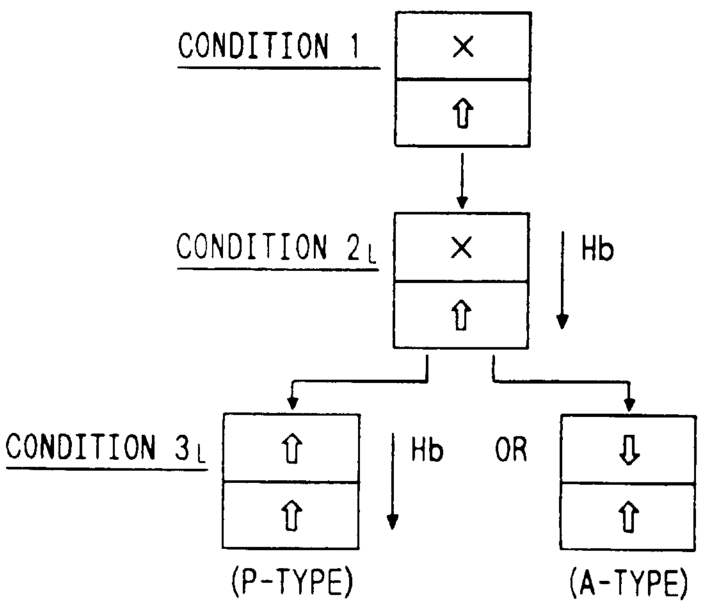
CONDITION 1
CONDITION 2L
Hb
CONDITION 3L
Hb
OR
(P-TYPE)
(A-TYPE)

FIG. 12

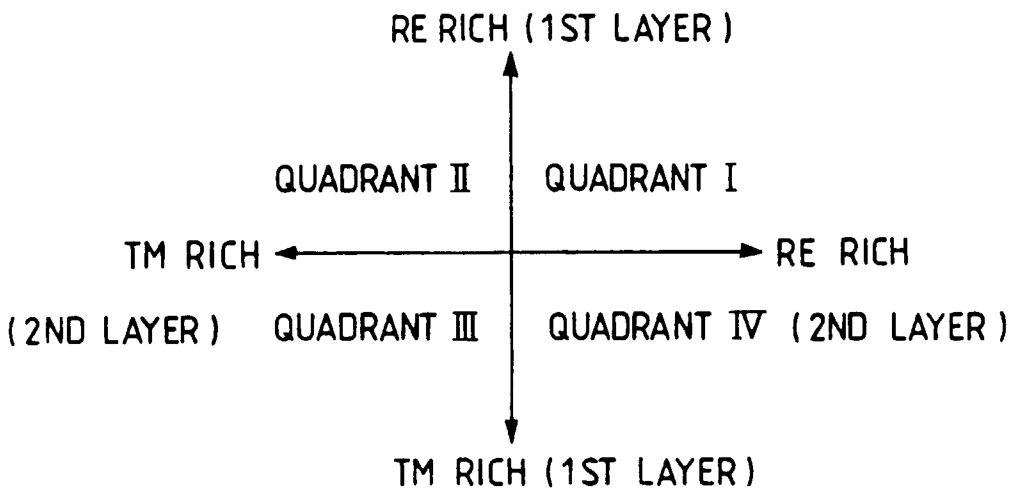


FIG. 13A

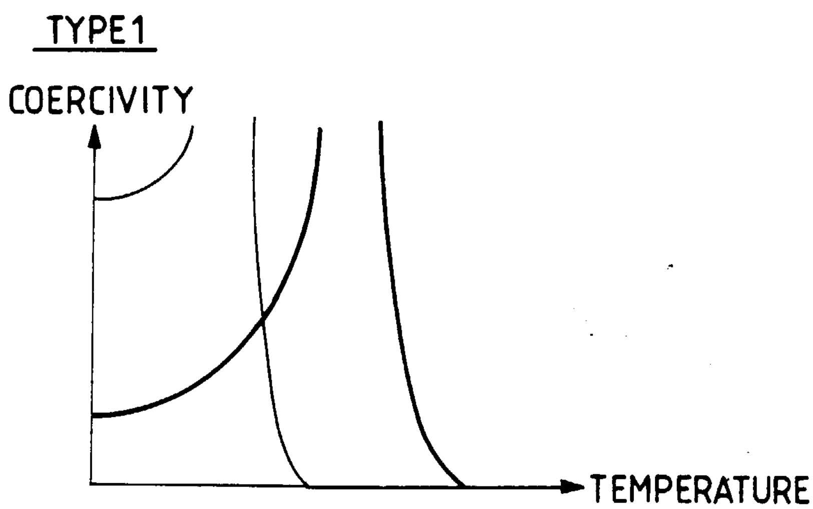

FIG. 13B

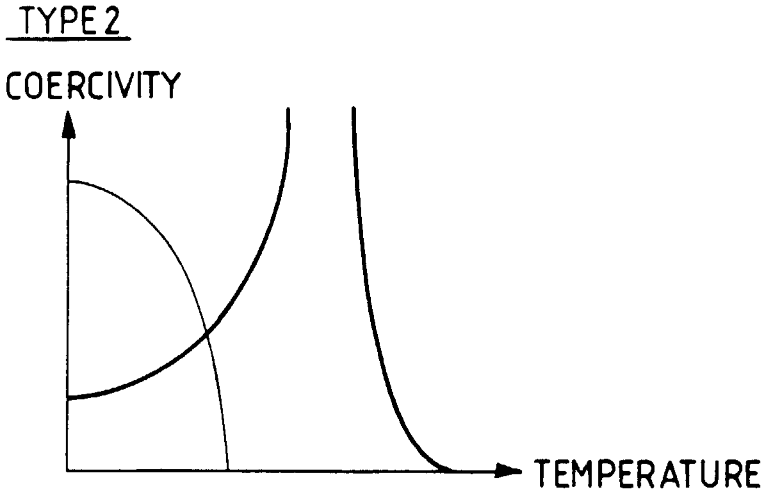


FIG. 13C

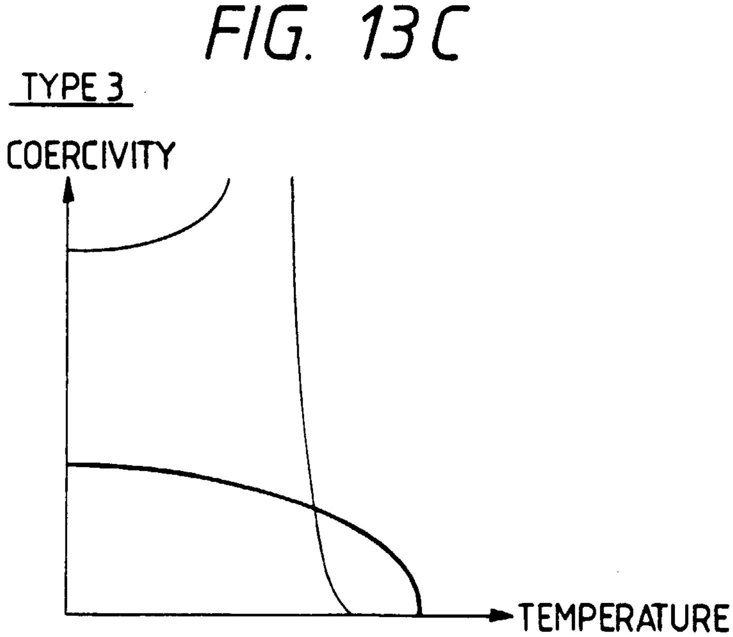

FIG. 13D

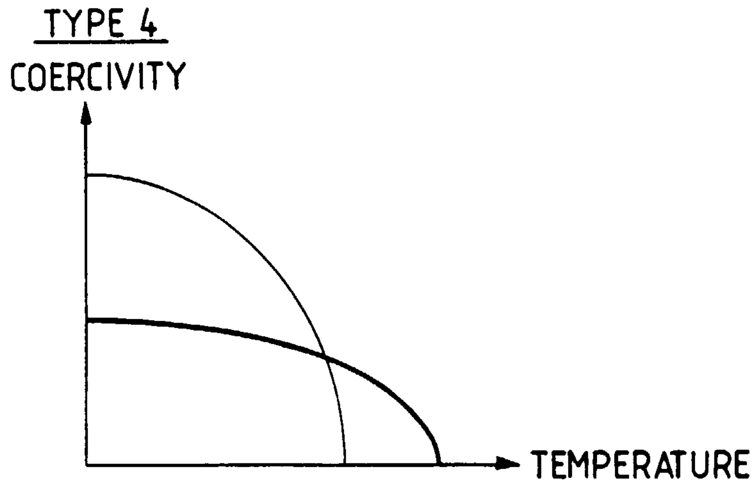


FIG. 14

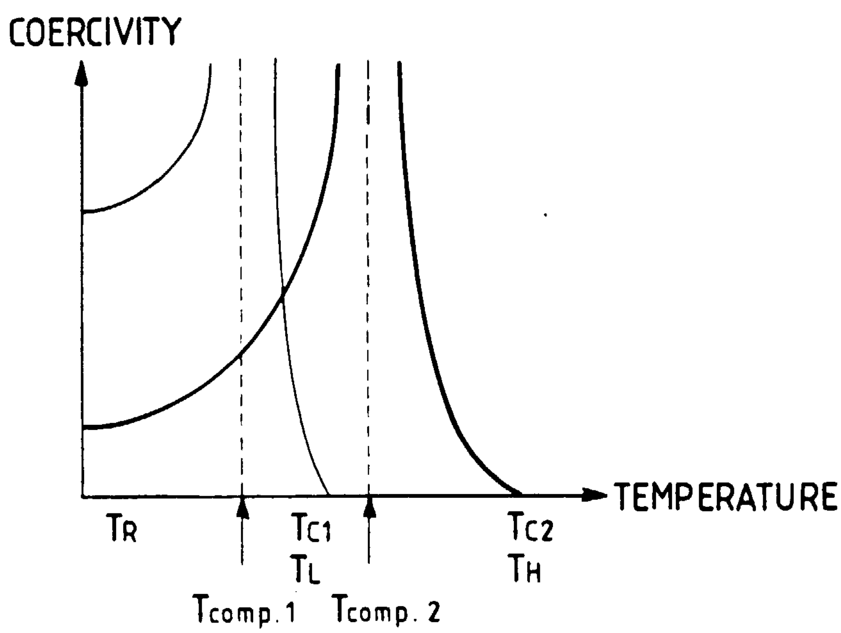

FIG. 15

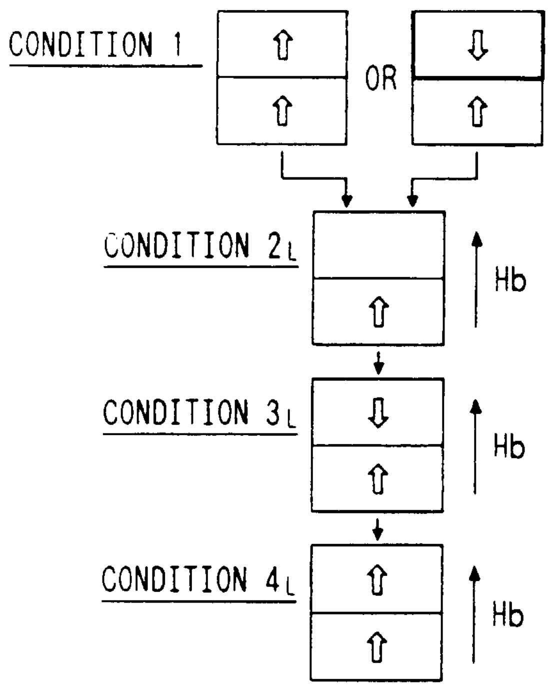
CONDITION 1
OR
CONDITION 2L
Hb
CONDITION 3L
Hb
CONDITION 4L
Hb

FIG. 16

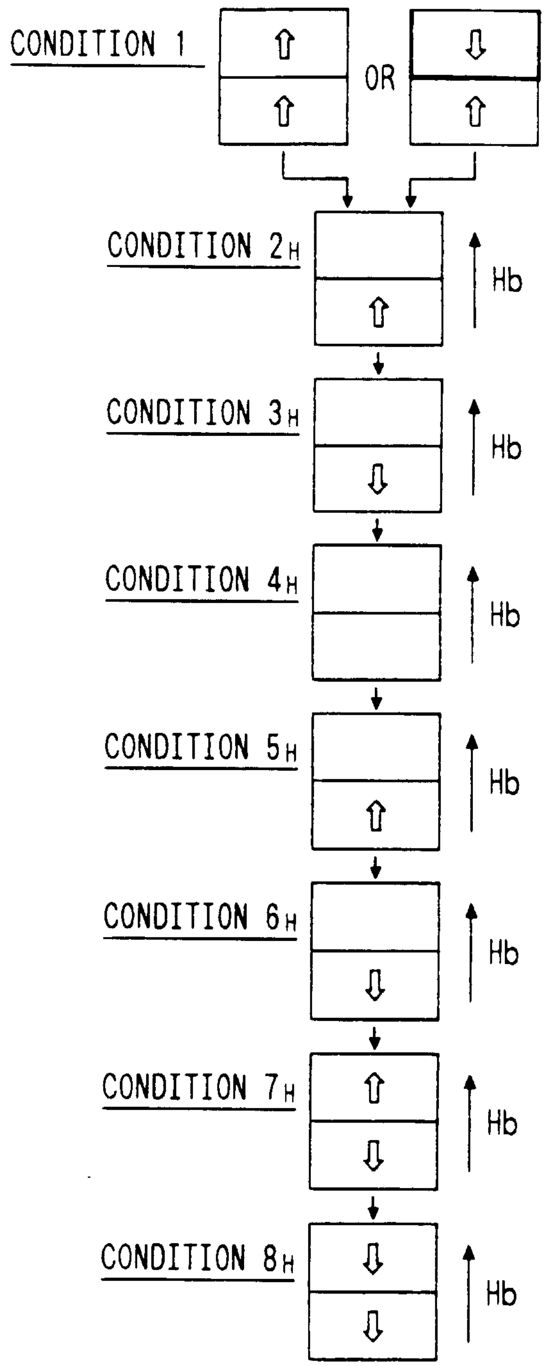
CONDITION 1
OR
CONDITION 2H
Hb
CONDITION 3H
Hb
CONDITION 4H
Hb
CONDITION 5H
Hb
CONDITION 6H
Hb
CONDITION 7H
Hb
CONDITION 8H
Hb

FIG. 17

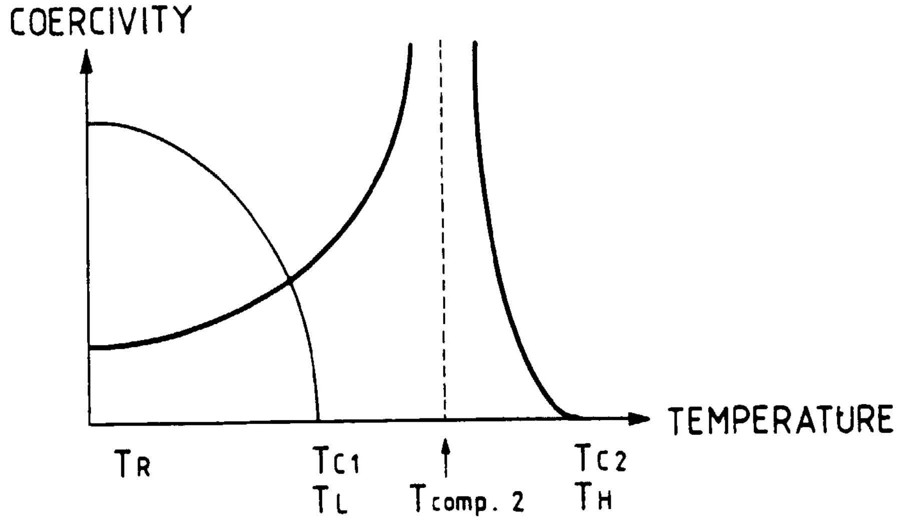
COERCIVITY
TEMPERATURE
TR
Tc1
TL
Tcomp. 2
Tc2
TH

FIG. 18

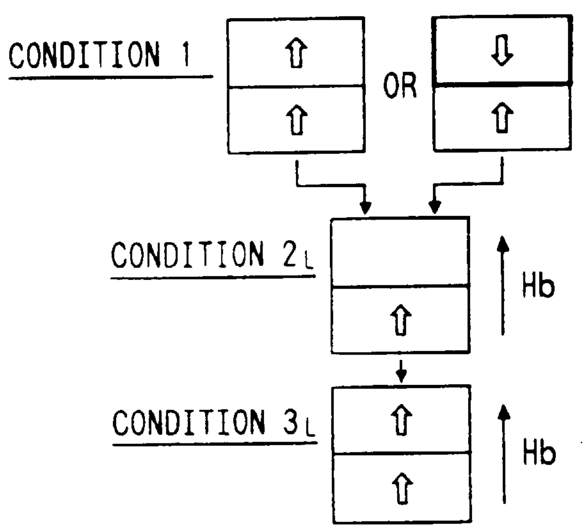
CONDITION 1
OR
CONDITION 2L
Hb
CONDITION 3L
Hb

FIG. 19

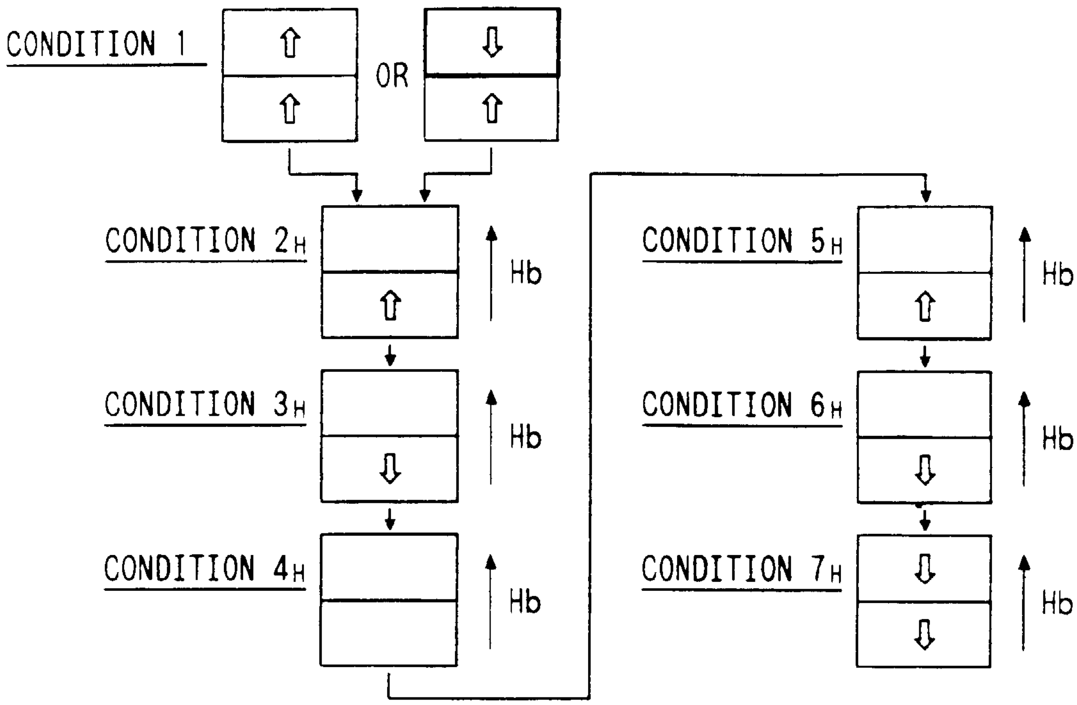
CONDITION 1
OR
CONDITION 2H
Hb
CONDITION 3H
Hb
CONDITION 4H
Hb
CONDITION 5H
Hb
CONDITION 6H
Hb
CONDITION 7H
Hb

FIG. 20

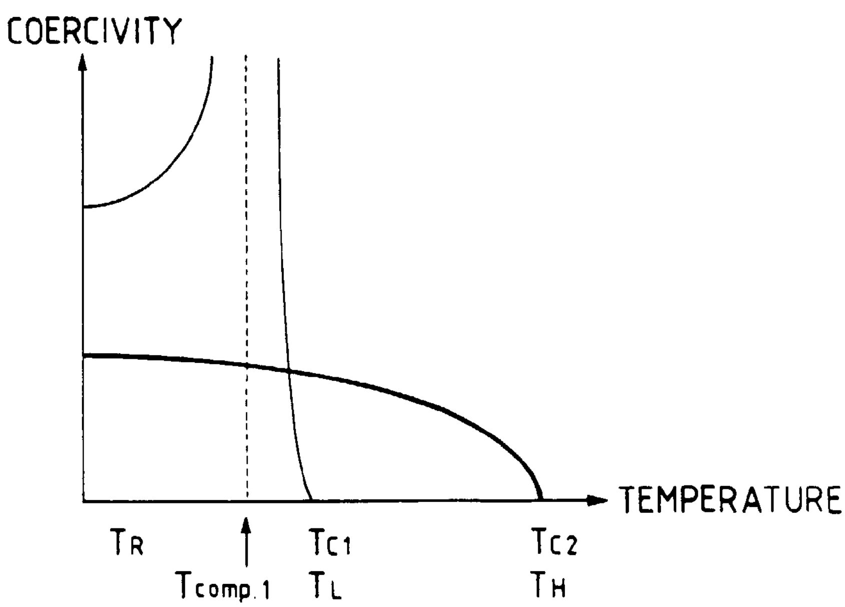
COERCIVITY
TEMPERATURE
TR
Tcomp.1
Tc1
TL
Tc2
TH

FIG. 21

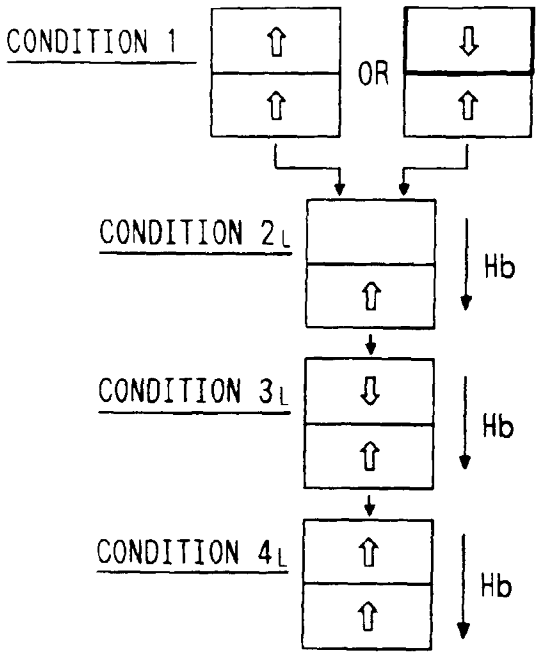


FIG. 22

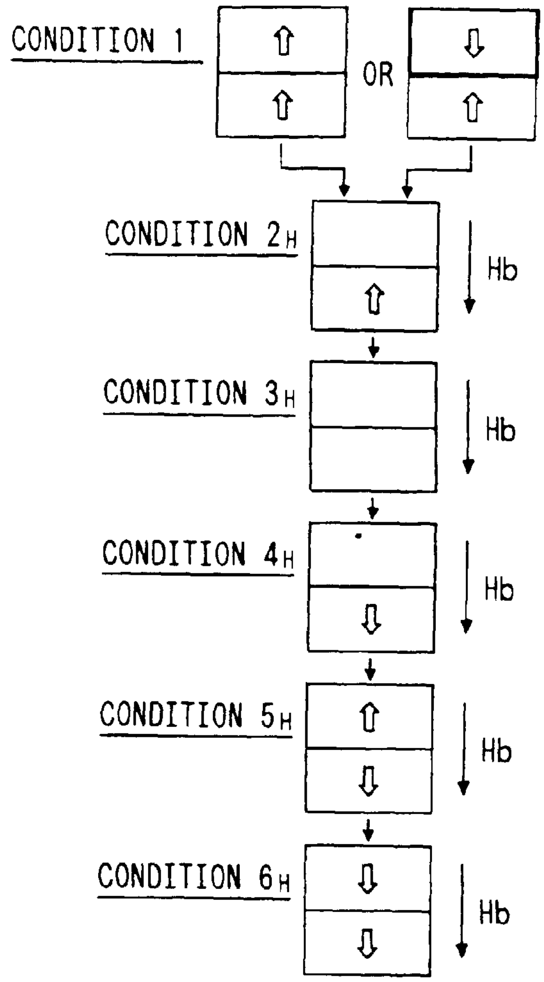


FIG. 23

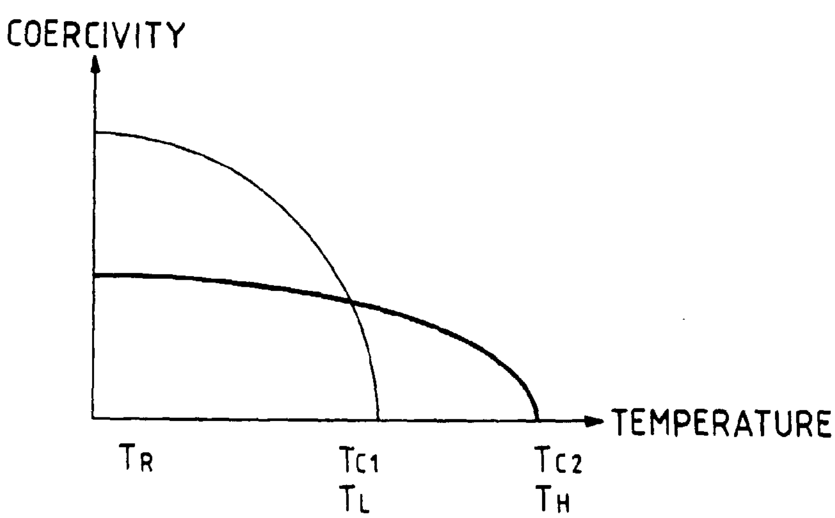

FIG. 24

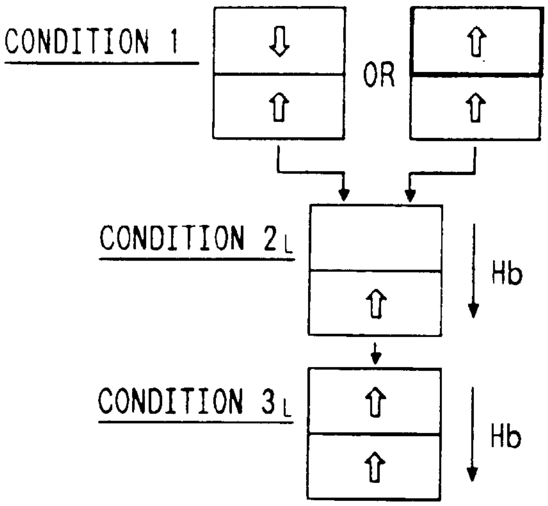


FIG. 25

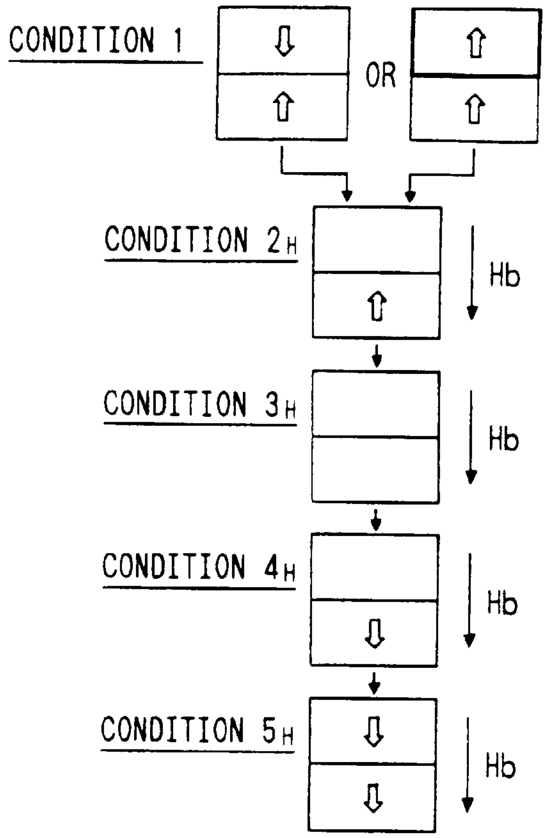


FIG. 26

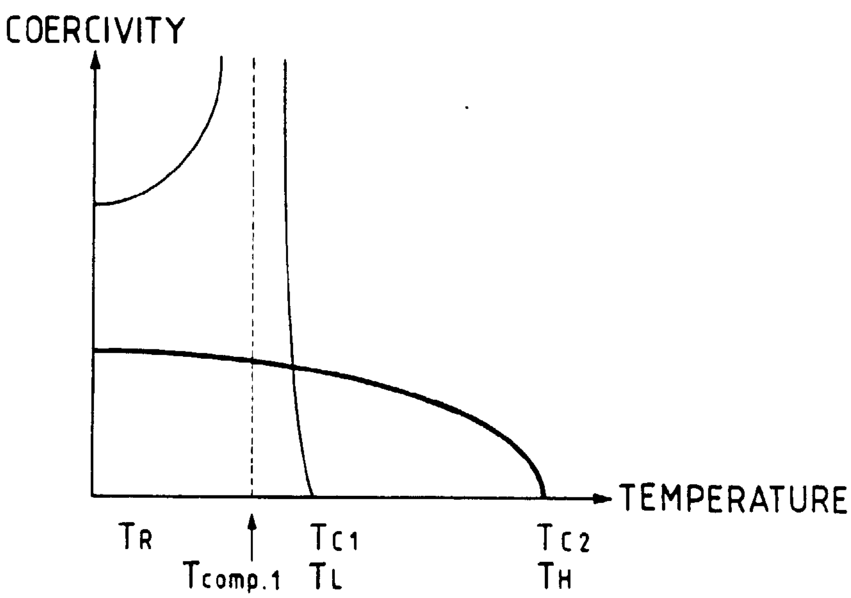

FIG. 27

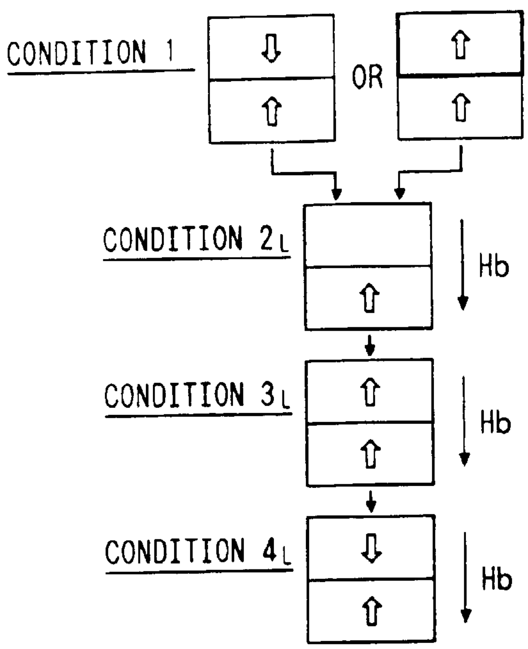


FIG. 28

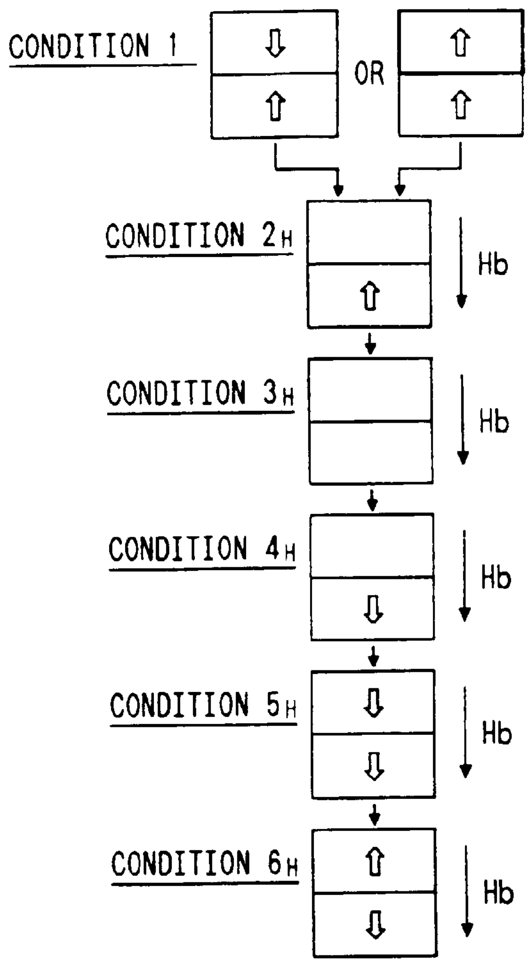


FIG. 29

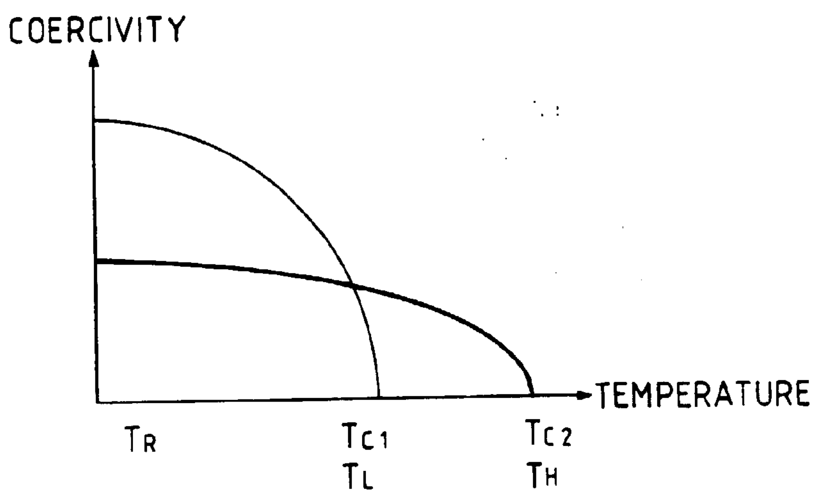

FIG. 30

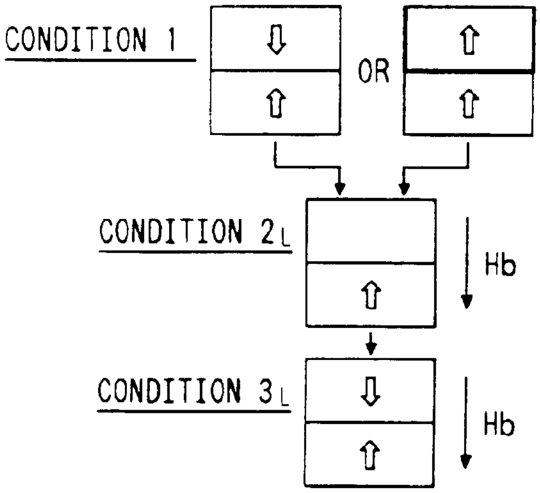


FIG. 31

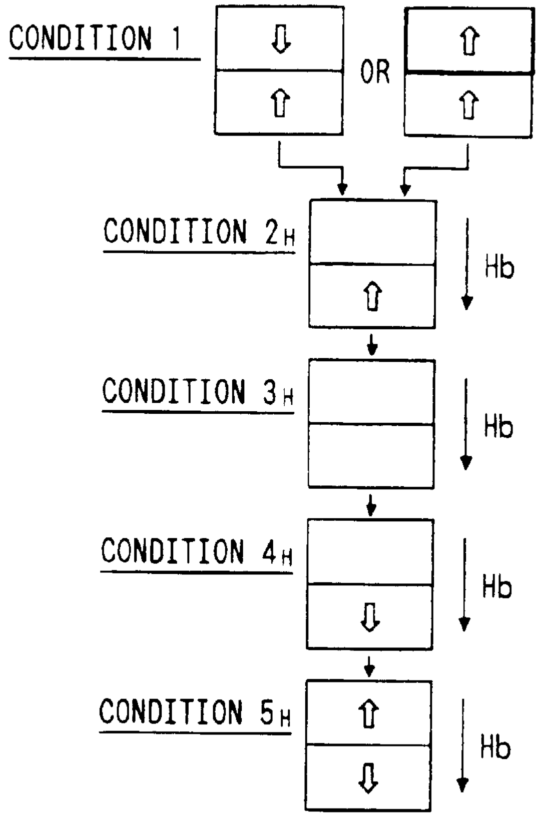


FIG. 32

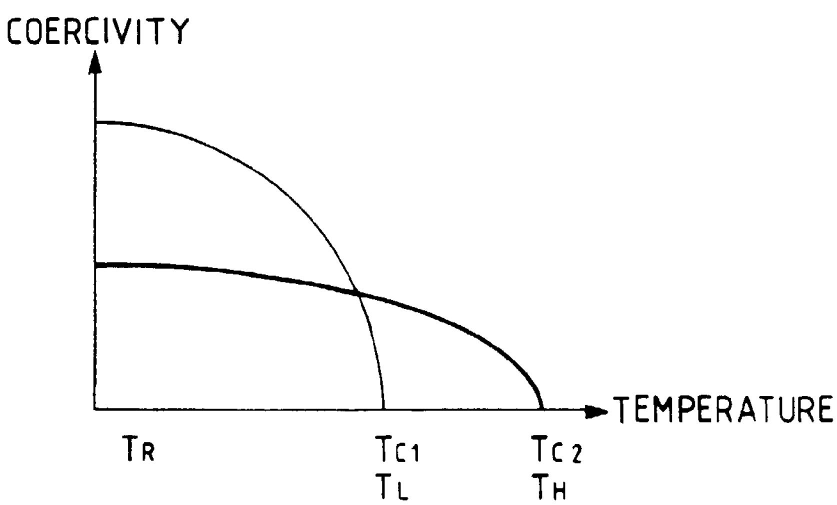

FIG. 33

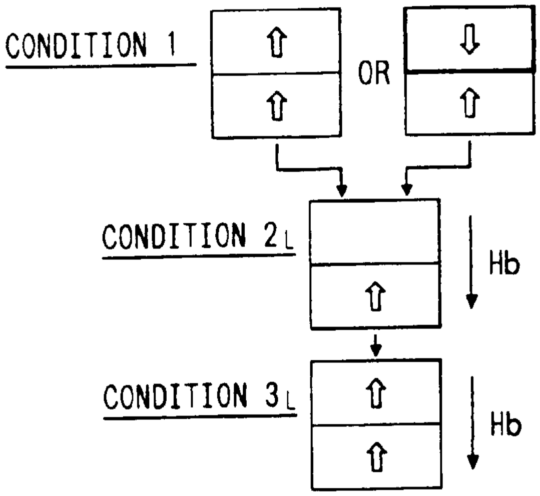


FIG. 34

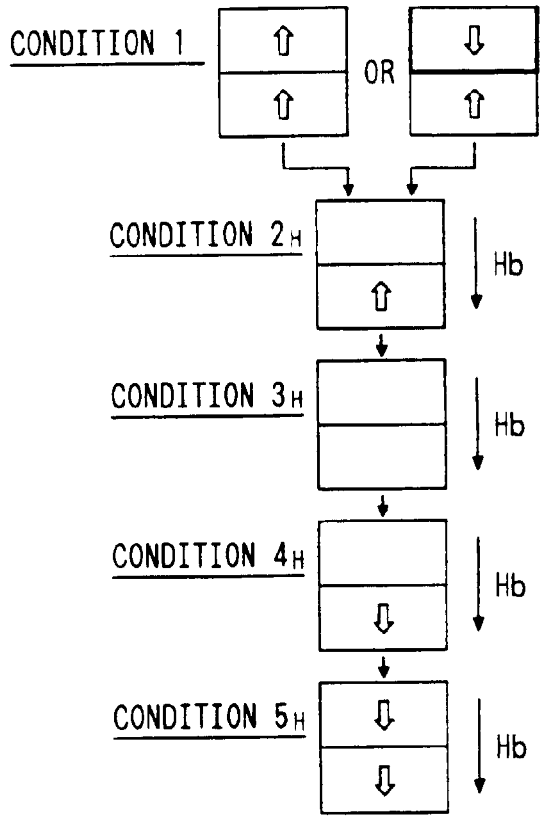


FIG. 35

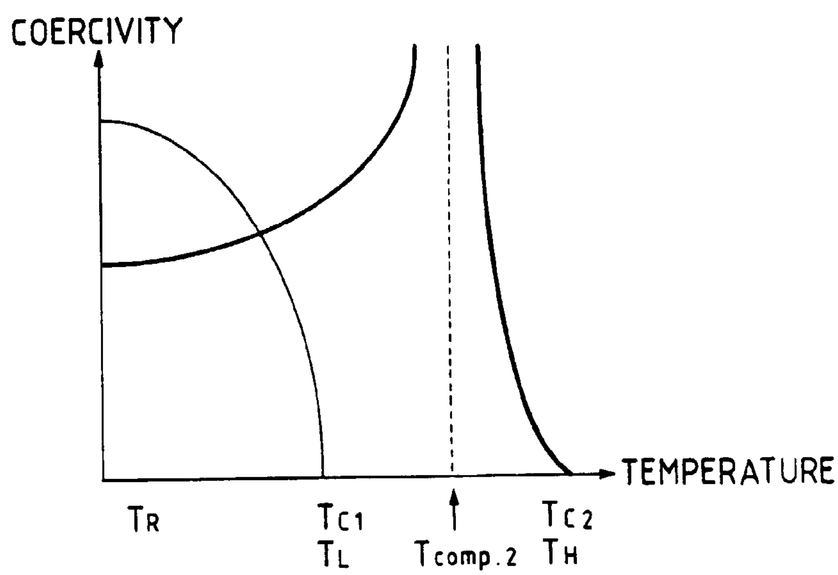

FIG. 36

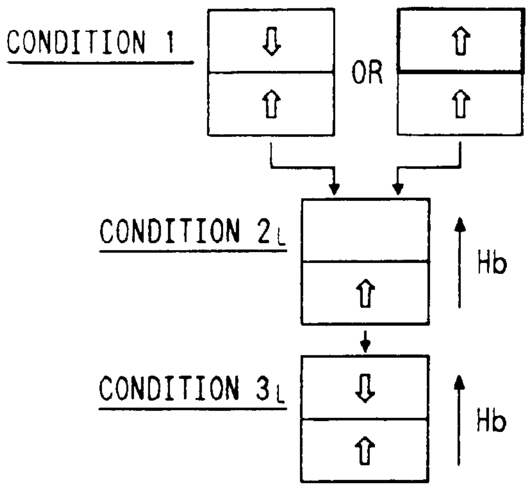


FIG. 37

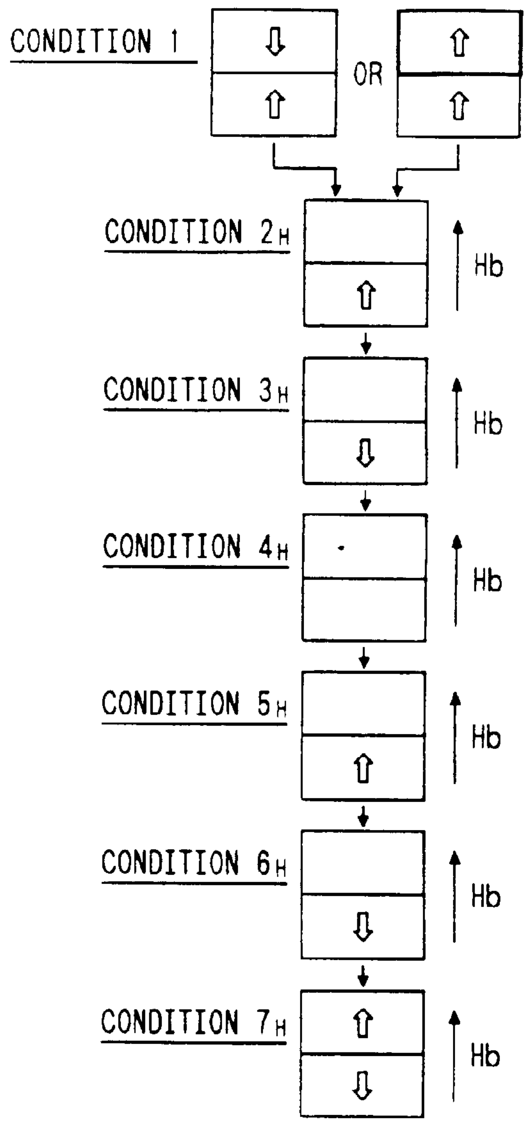


FIG. 38

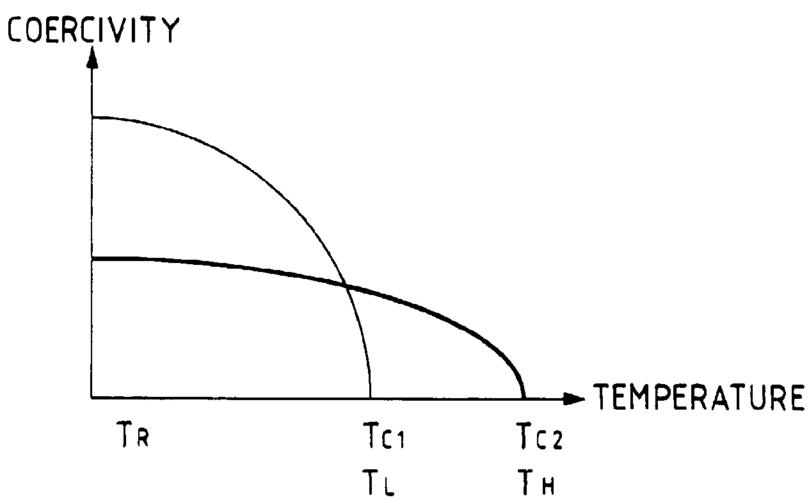

FIG. 39

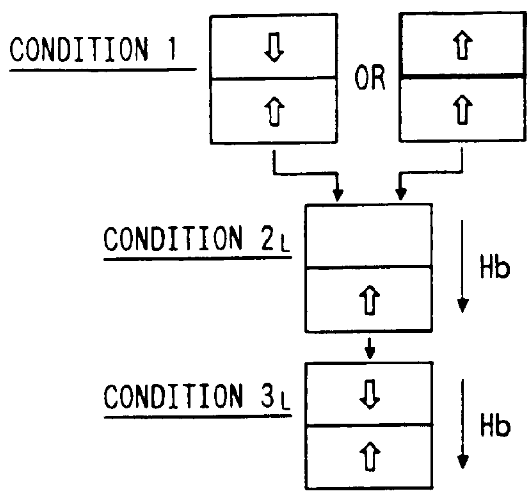


FIG. 40

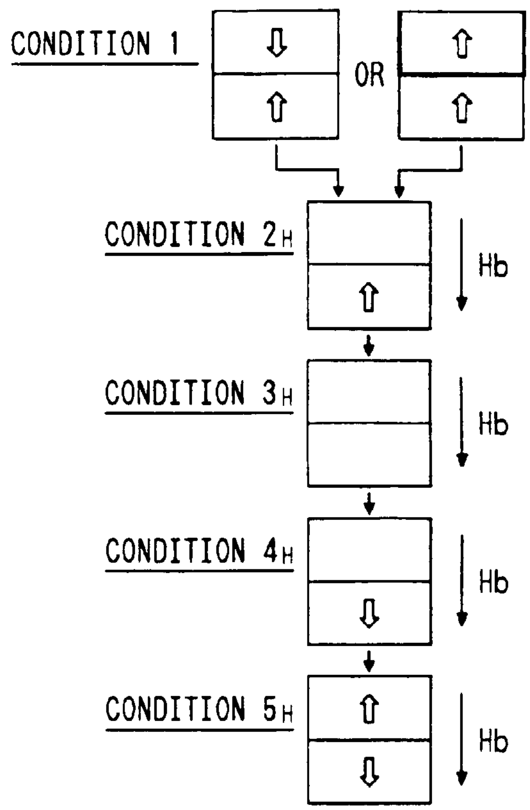


FIG. 41

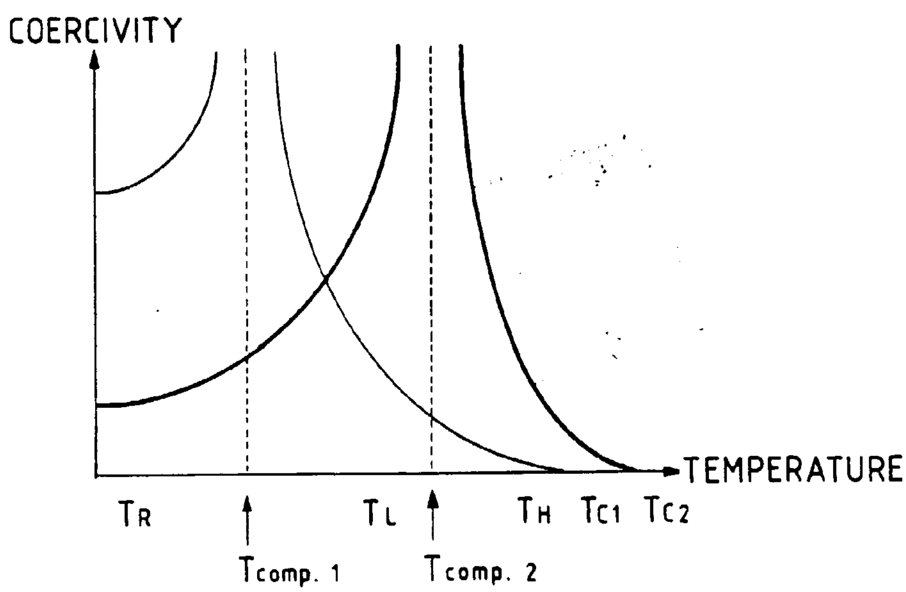

FIG. 42

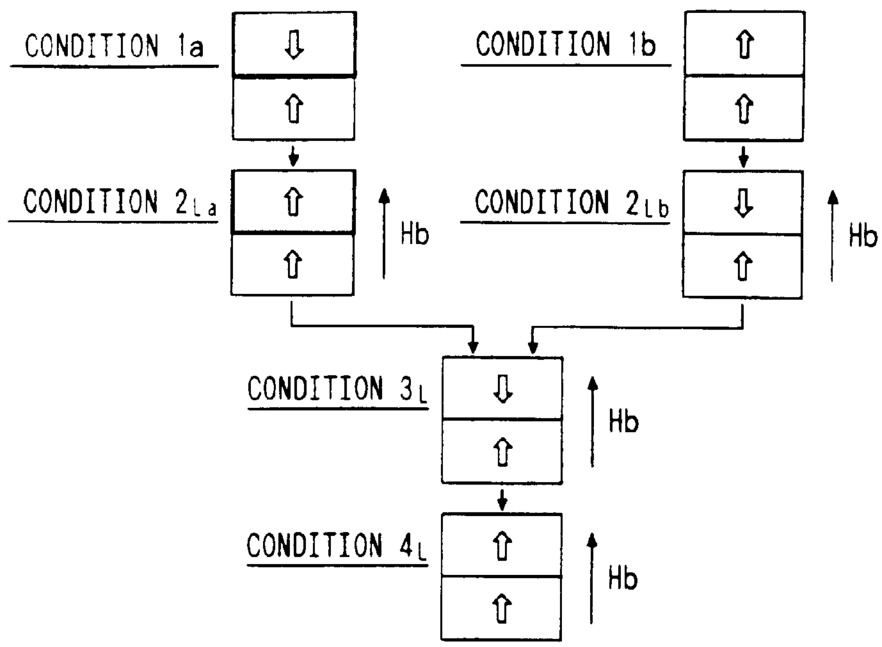
CONDITION 1a
CONDITION 1b
CONDITION 2La
Hb
CONDITION 2Lb
Hb
CONDITION 3L
Hb
CONDITION 4L
Hb

FIG. 43

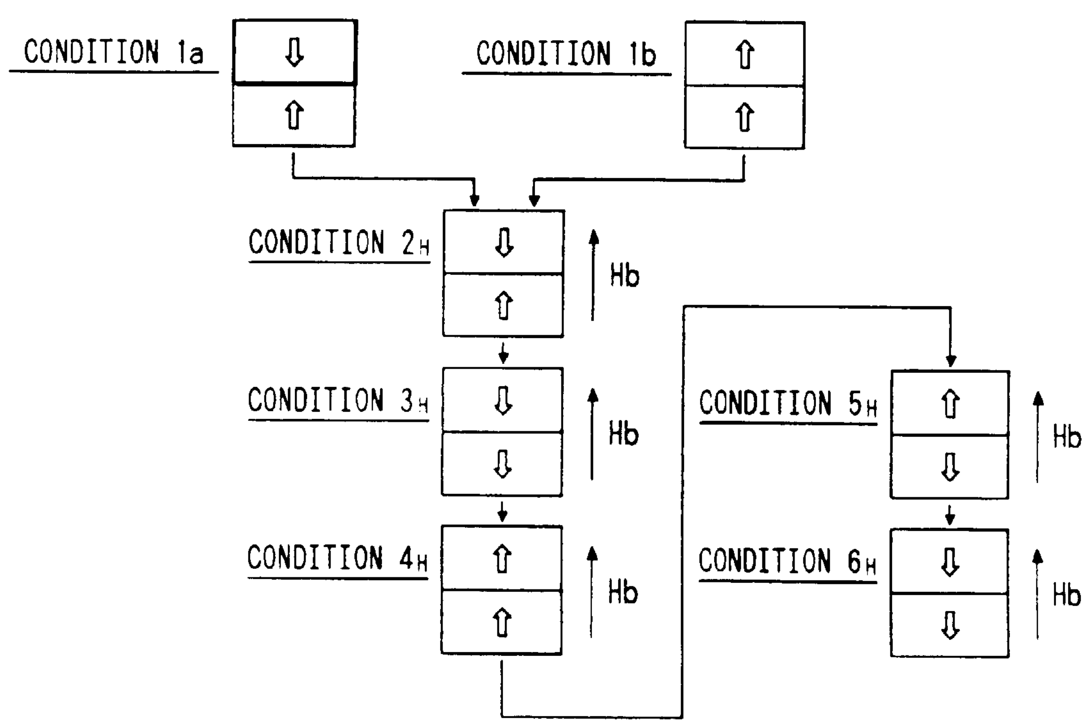
CONDITION 1a
CONDITION 1b
CONDITION 2H
Hb
CONDITION 3H
Hb
CONDITION 4H
Hb
CONDITION 5H
Hb
CONDITION 6H
Hb

FIG. 44

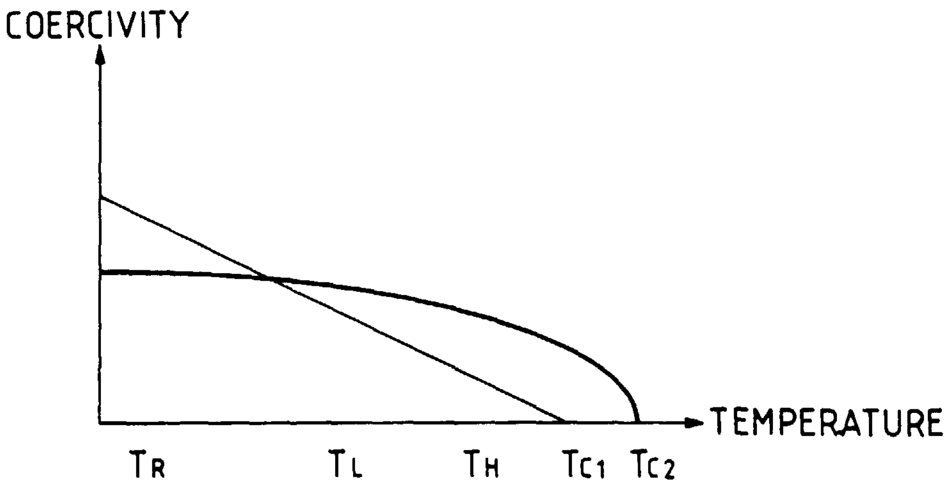
COERCIVITY
TEMPERATURE
TR
TL
TH
TC1
TC2

FIG. 45

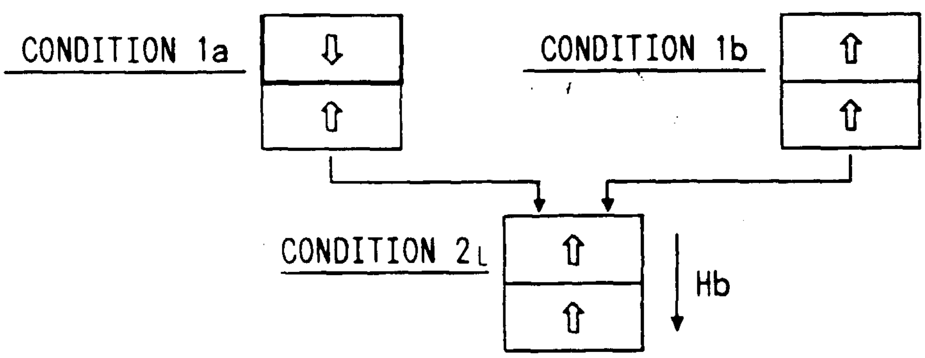
CONDITION 1a
CONDITION 1b
CONDITION 2L
Hb

FIG. 46

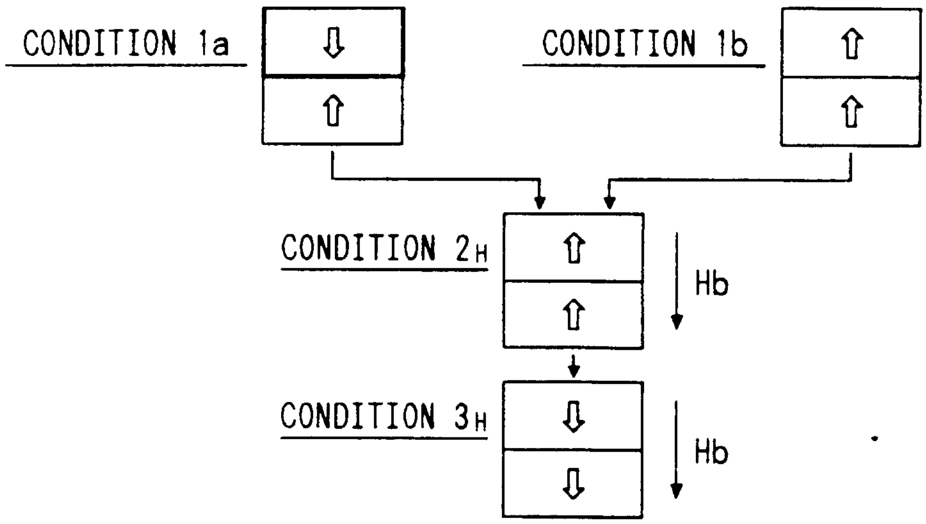
CONDITION 1a
CONDITION 1b
CONDITION 2H
Hb
CONDITION 3H
Hb

FIG. 47

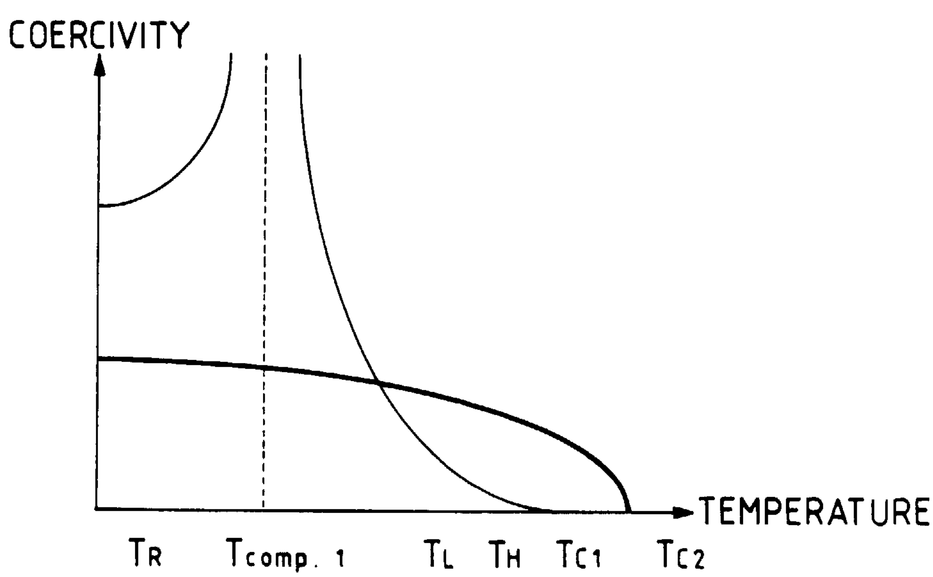
COERCIVITY
TEMPERATURE
TR
Tcomp. 1
TL
TH
TC1
TC2

FIG. 48

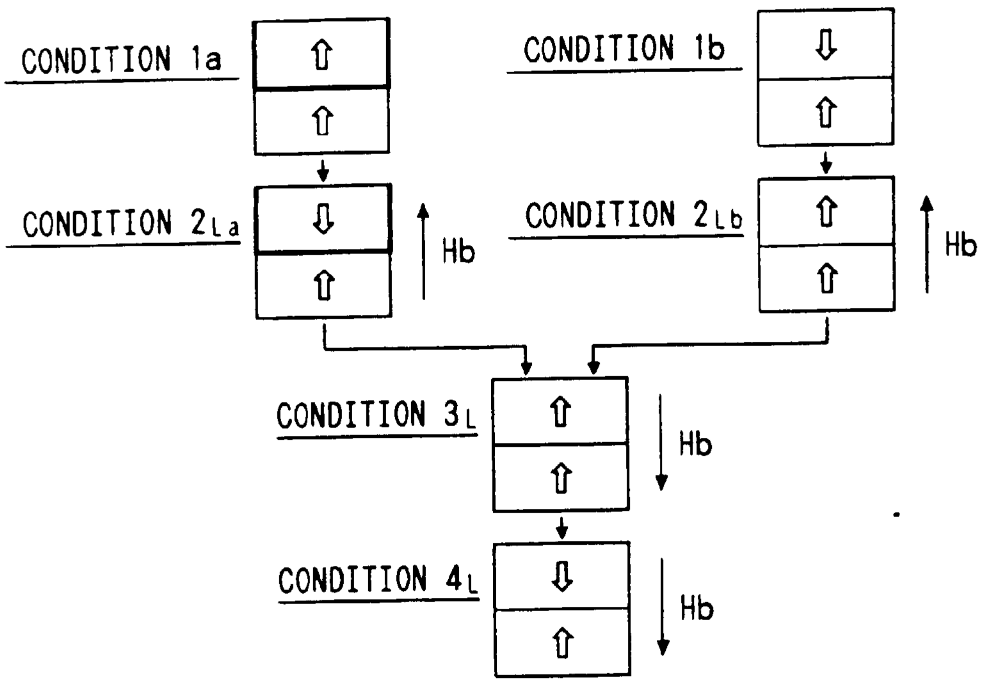
CONDITION 1a
CONDITION 1b
CONDITION 2La
Hb
CONDITION 2Lb
Hb
CONDITION 3L
Hb
CONDITION 4L
Hb

FIG. 49

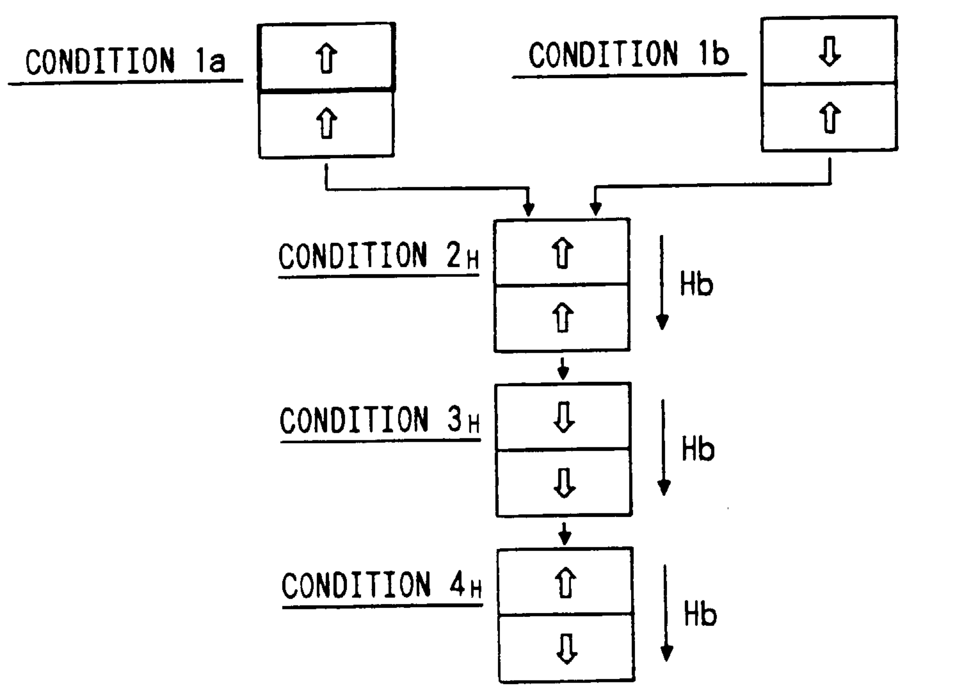
CONDITION 1a
CONDITION 1b
CONDITION 2H
Hb
CONDITION 3H
Hb
CONDITION 4H
Hb

FIG. 50

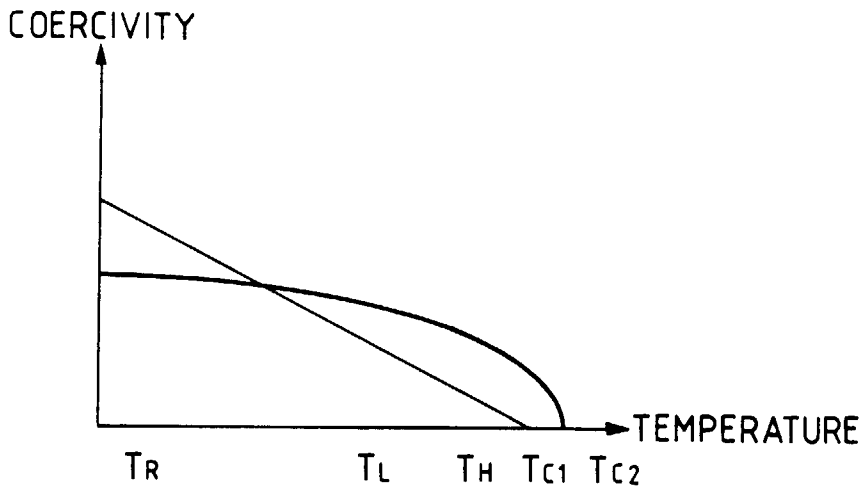
COERCIVITY
TEMPERATURE
TR
TL
TH
TC1
TC2

FIG. 51

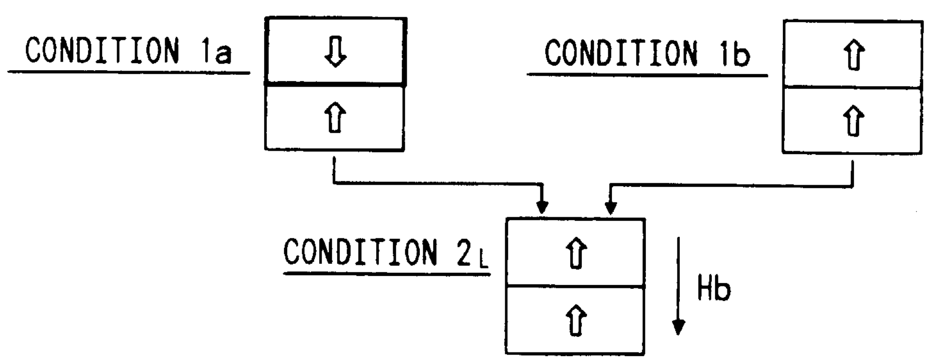
CONDITION 1a
CONDITION 1b
CONDITION 2L
Hb

FIG. 52

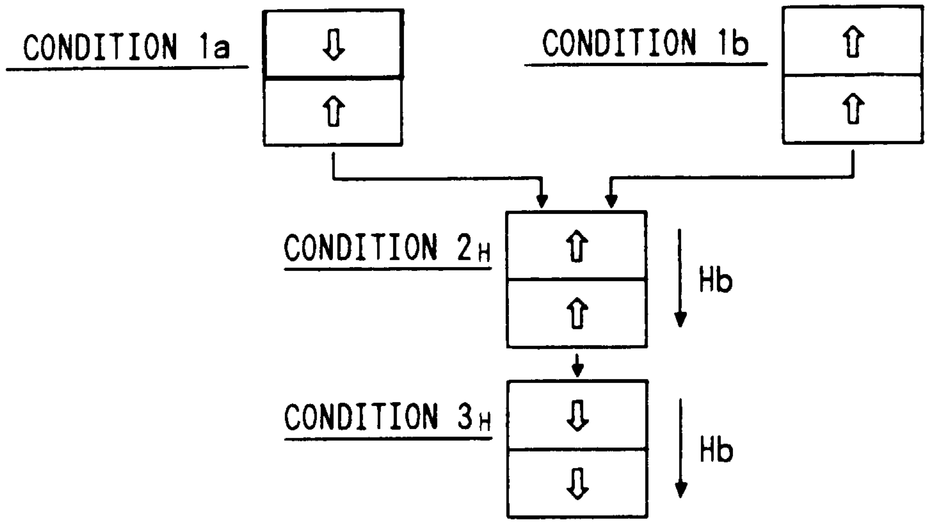
CONDITION 1a
CONDITION 1b
CONDITION 2H
Hb
CONDITION 3H
Hb

FIG. 53

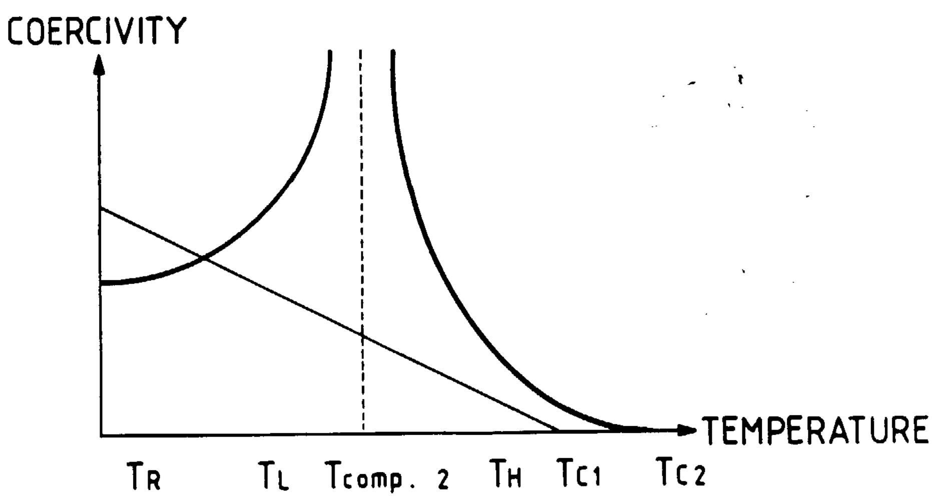
COERCIVITY
TEMPERATURE
TR
TL
Tcomp. 2
TH
TC1
TC2

FIG. 54

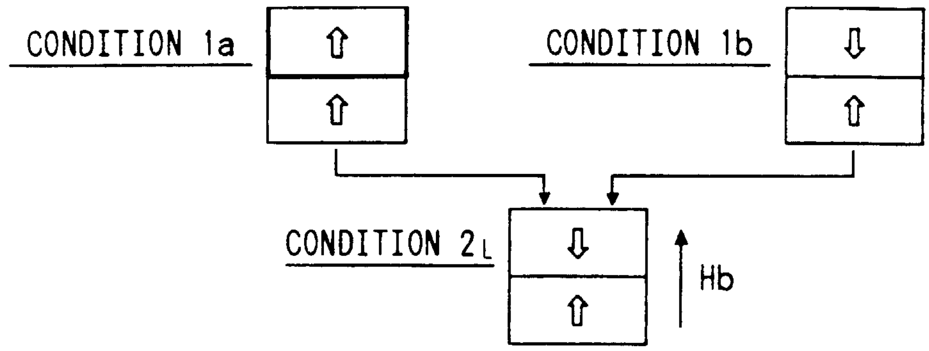
CONDITION 1a
CONDITION 1b
CONDITION 2L
Hb

FIG. 55

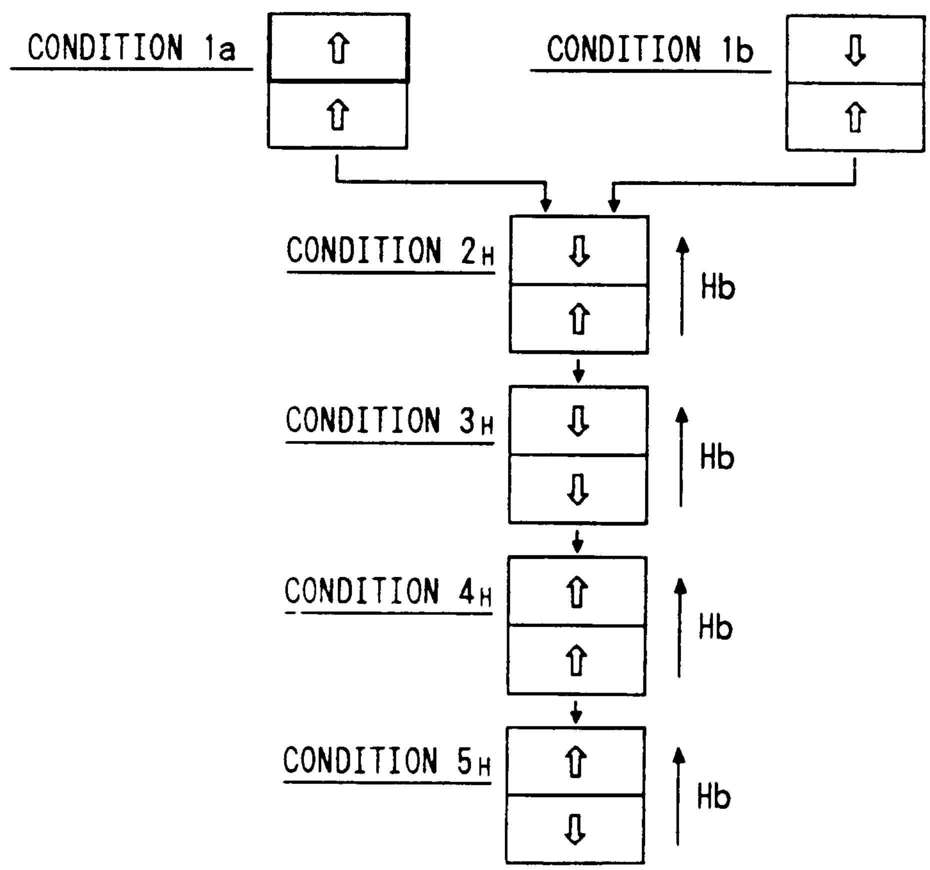
CONDITION 1a
CONDITION 1b
CONDITION 2H
Hb
CONDITION 3H
Hb
CONDITION 4H
Hb
CONDITION 5H
Hb

FIG. 56

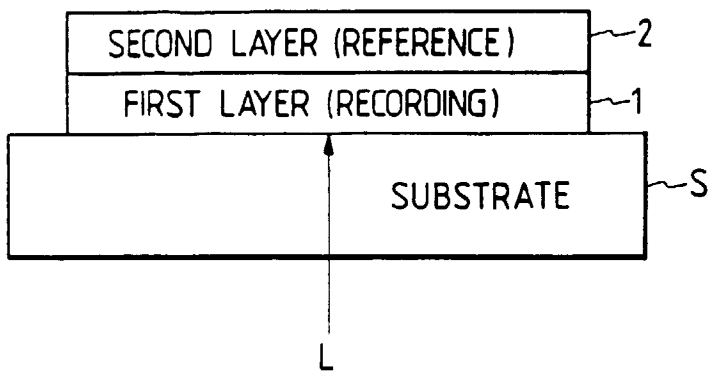
SECOND LAYER (REFERENCE)
2
FIRST LAYER (RECORDING)
1
SUBSTRATE
S
L

FIG. 57

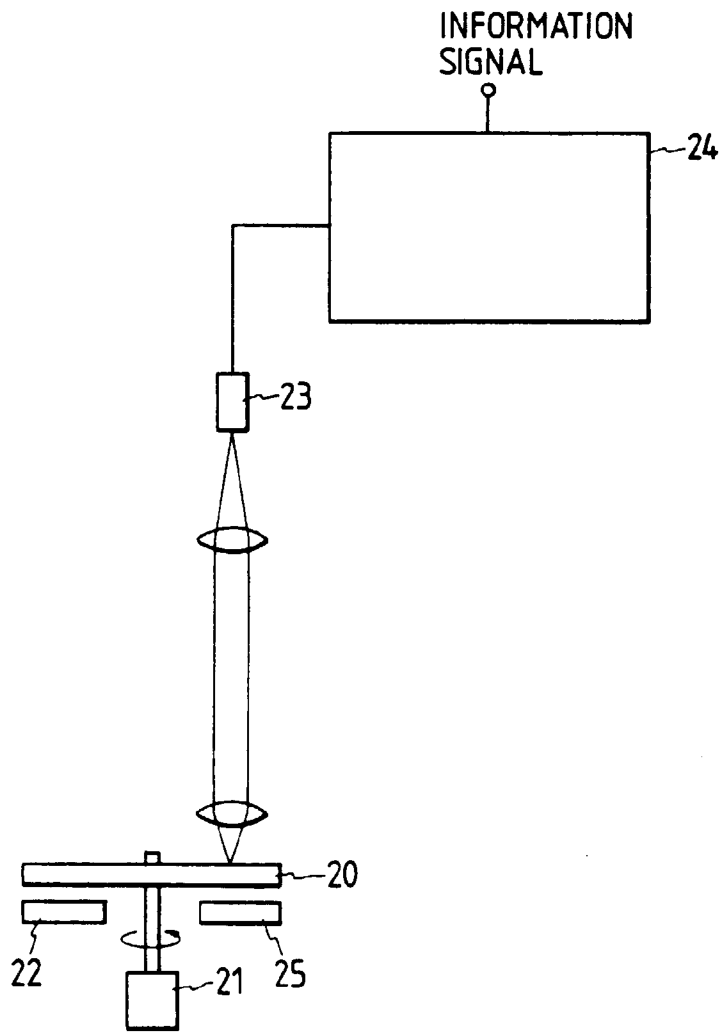
INFORMATION SIGNAL
24
23
20
22
21
25